# EUROPEAN PATENT APPLICATION

(11) **EP 1 416 680 A1**
(43) Date of publication of application: **06.05.2004**
(21) Application number: 01949977.1
(22) Date of filing: 13.07.2001
(51) Int. Cl.: H04L 12/56

(54) **SERVICE CONTROL NETWORK**

(30) Priority: 22.06.2001 JP 2001189497
(71) Applicant: FUJITSU LIMITED, Kawasaki-shi, Kanagawa 211-8588 (JP)
(72) Inventor: KAKEMIZU, Mitsuaki, c/o FUJITSU LIMITED, Kawasaki-shi, Kanagawa 211-8588 (JP); MURATA, K., c/o FUJITSU NISHI-NIHON COM. SYST. LTD, Fukuoka-shi, Fukuoka 814-8588 (JP); IWAMOTO, K. c/o FUJITSU NISHI-NIHON COM. SYST. LTD, Fukuoka-shi, Fukuoka 814-8588 (JP); YAMAMURA, S. FUJITSU NISHI-NIHON COM. SYST. LTD, Fukuoka-shi, Fukuoka 814-8588 (JP); IGARASHI, Yoichiro, c/o FUJITSU LIMITED, Kawasaki-shi, Kanagawa 211-8588 (JP); WAKAMOTO, Masaaki, c/o FUJITSU LIMITED, Kawasaki-shi, Kanagawa 211-8588 (JP)
(74) Representative: HOFFMANN - EITLE
(86) International application number: PCT/JP2001/006102
(87) International publication number: WO 2003/001752

(57) **Abstract**

An edge node (22) accommodating an IPv6 host (11) holds the service information about the IPv6 host (11) received from an AAA server (1), and host address information about the IPv6 host (11). An edge node (21) accommodating an IPv6 host (12) holds the host address information about the IPv6 host (12). The edge node (22) obtains the host address information about the IPv6 host (12) from the edge node (21) when communications from the IPv6 host (11) to the IPv6 host (12) are started. The edge node (22) enables the service information according to the host address information about the IPv6 hosts (11, 12), and provides the corresponding service.

## Description

### Technical Field

The present invention relates to a service control network, a service information delivering method, a service providing method, which provides an individual service for each subscriber or terminal, and a router device for use in the service control network.

### Background Art

Recently, with Internet spread widely, a huge number of terminal devices can be connected to a network. Especially, there is a rapidly increasing number of mobile terminals connectable to a network, and the number of communications devices (mainly router devices) provided in networks has correspondingly increased.

On the other hand, a service provider who provides communications services for subscribers has been able to provide a different service for each of the subscribers. For example, QoS (Quality of Service), etc. can be set for each terminal.

To provide an individual service for each subscriber or terminal, it is desired to set service control information for each subscriber in all communication nodes in the network. However, the number of communication nodes in the network is very large, and it is actually impossible to set the service control information about each subscriber in all of them.

As a result, the system of dynamically setting the service control information about a subscriber corresponding only to the minimal communication nodes (for example, the communication nodes in the actually established communications paths) without setting the service control information about each subscriber in all communication nodes in the network. The system is realized by, for example, delivering the service control information about a mobile terminal to a communication node which is to newly accommodate the mobile terminal when the mobile terminal is moved from a communications area of a communication node to the communications area of another communication node.

A packet transmitted and received through Internet is routed mainly using the address in an address system determined by IPv4. However, since the IPv4 does not prepare the sufficient number of addresses, it is predicted that the IPv6 designed for the next-generation address system will be put to practical use.

However, the IPv6 network is a next-generation network, and a number of protocols have not been practically prescribed up to the present. Furthermore, procedures have not been practically prepared for delivery of the service control information about subscribers corresponding to the minimal communication nodes in the IPv6 network.

In addition, each piece of service control information is managed using an IP address of a corresponding terminal device as a retrieval key. Although, in this system, the service control information about a terminal device is set in the communication node accommodating the terminal device, it has been necessary to redeliver the service control information from the database storing the service control information to the communication node when the IP address of the terminal device or the correspondent terminal communicating with the terminal device is changed for any reason.

### Disclosure of Invention

The present invention aims at indicating the procedure for providing a service prescribed for each subscriber or a terminal device. It also aims at efficiently providing a service prescribed for each subscriber or terminal device.

The service control network according to the present invention is designed to have a router device for accommodating a terminal device, and a server device for authenticating the terminal device so as to provide a service for the terminal device. With this configuration, the router device includes: request means for transmitting a request for authentication to the server device when the router device receives a request for an address from the terminal device; providing means for receiving a reply for authentication in response to the request for authentication and service information about the terminal device from the server device, and providing a service according to the service information; and reply means for transmitting a reply for an address in response to the request for an address to the terminal device. The server device includes a transmission unit for authenticating the terminal device according to the request for authentication, and transmitting a reply for authentication in response to the request for authentication and service information about the terminal device to the router device.

According to the present invention, in a network in which service information is delivered using a protocol for authentication of a terminal, an address assignment protocol is linked with the authentication protocol. Therefore, service information can be delivered to the router device corresponding to a terminal in the address assignment procedure for the terminal.

If the request for an address is made using the ICMPv6, and the request for authentication is made using the AAA protocol, then the ICMPv6, which is an address assignment protocol in the IPv6, is linked with the AAA protocol for authentication of the terminal. Accordingly, the service information can be delivered to the router device corresponding to the IPv6 in the address assignment procedure for the IPv6 terminal.

The service control network according to another aspect of the present invention has a first router device for accommodating a first terminal device, a second router device for accommodating a second terminal device, and a server device for managing the service information for prescription of the services to be provided for the first and second terminal devices. With the configuration, services are provided for the first and second terminal devices. The service control network includes: a first service information holding means, provided in the first router device, for receiving service information specifying the services to be provided for the first terminal device from the server device and storing the information; a first address information holding means, provided in the first router device, for holding address information indicating the correspondence between the network access identifier of the first terminal device and the address dynamically assigned to the first terminal device; a second service information holding means, provided in the second router device, for receiving service information specifying a service to be provided for the second terminal device from the server device; a second address information holding means, provided in the second router device, for holding address information indicating the correspondence between the network access identifier of the second terminal device and the address dynamically assigned to the second terminal device; a transfer means for transferring corresponding address information or the address information and service information between the first router device and the second router device after starting communications between the first terminal device and the second terminal device; and a providing means for providing a service using at least a part of the service information held by the first service information holding means, the service information held by the second service information holding means, the address information held by the first address information holding means, the address information held by the second address information holding means, and the information transferred by the transfer means.

According to this invention, after starting the communications between the first terminal device and the second terminal device, the corresponding service information and/or the address information are transmitted and received between the first router device and the second router device. Therefore, a predetermined service can be provided without fail even when each terminal device has been moved to an arbitrary location.

In this service control network, the service information specifying each service can be managed using a network access identifier of a corresponding terminal device so that the network access identifier corresponding to the source address and the destination address of a packet can be detected using the address information stored in at least one of the first and second address information holding means when the packet is transmitted from the first terminal device to the second terminal device, thereby providing the service using the service information corresponding to the detected network access identifier.

With this configuration, although the address of the second terminal device has been changed, the first router device can receive corresponding address information from the second router device, thereby detecting the network access identifier of the second terminal device. Therefore, the first router device can provide a corresponding service by accessing the service information using the network access identifier.

In the above mentioned service control network, the first router device can include: an address cache for individual managing the lifetime of the source address and the destination address of a received packet; and means for deleting or disabling corresponding address information and service information when the lifetime of the address managed by the address cache expires. With this configuration, the service information corresponding to the address not used over a predetermined period is deleted or nullified, thereby efficiently utilizing the memory area of the router device.

The router device of the present invention is used in the service control network having a first router device for accommodating a first terminal device, a second router device for accommodating a second terminal device, and a server device for managing service information specifying a service to be provided for the first and second terminal devices, as the above mentioned first router device. The router device includes: service information holding means for associating the service information specifying the service to be provided for the first terminal device and the service information specifying the service to be provided for the second terminal device respectively with the network access identifiers set in the first and second terminal devices, and holding them; enabling means for receiving from the second router device a network access identifier corresponding to the destination address of a packet when the packet is transmitted from the first terminal device to the second terminal device, extracting service information corresponding to the received network access identifier from the service information holding means, and enabling it; and providing means for providing a service according to the enabled service information.

With this invention, when a packet is transmitted from the first terminal device to the second terminal device, the router device obtains the network access identifier of the second terminal device from the second router device. Therefore, although the second terminal device has moved to an arbitrary location, the router device can provide a corresponding service without fail by accessing the service information using the network access identifier of the second terminal device.

Another aspect of the router device according to the present invention is also used in the service control network having a first router device for accommodating a first terminal device, a second router device for accommodating a second terminal device, and a server device for managing the service information specifying the service to be provided for the second terminal device, as the first router device. The router device includes: service information holding means for receiving service information specifying a service to be provided for the first terminal device from the server device, and holding the service information; and transmission means for extracting the service information from the service information holding means when a packet is transmitted from the first terminal device to the second terminal device, and transmitting to the second router device the extracted service information for use by the second router device.

According to this invention, when the first terminal device starts transmitting a packet to the second terminal device, the router device transmits the service information for the first terminal device to the second router device. Then, the second terminal device provides a corresponding service using the service information. That is, the router device can have the second router device perform a predetermined service.

### Brief Description of the Drawings

FIG. 1 shows the configuration (1) of the service control network according to an embodiment of the present invention;
FIG. 2 shows the configuration (2) of the service control network according to an embodiment of the present invention;
FIG. 3 shows the configuration (3) of the service control network according to an embodiment of the present invention;
FIG. 4 shows the configuration (4) of the service control network according to an embodiment of the present invention;
FIG. 5 shows the basic sequence of delivering service control information;
FIG. 6 shows a method of managing a delivered service profile;
FIG. 7 shows a sequence that an edge node obtains the host address information about a correspondent terminal;
FIG. 8 shows an example (1) of the operation of the service control network according to an embodiment of the present invention;
FIG. 9 shows an example (2) of the operation of the service control network according to an embodiment of the present invention;
FIG. 10 shows an example (3) of the operation of the service control network according to an embodiment of the present invention;
FIG. 11 is a function block diagram of an AAA server;
FIG. 12 shows an example of a service profile database;
FIG. 13A shows an embodiment of the original service profile cache;
FIG. 13B shows an embodiment of the original host address cache;
FIG. 14 is a flowchart (1) of the operation of the protocol control unit of the AAA server;
FIG. 15 is a flowchart (2) of the operation of the protocol control unit of the AAA server;
FIG. 16 is a flowchart (3) of the operation of the protocol control unit of the AAA server;
FIG. 17 is a flowchart of the operation of the service data management unit of the AAA server;
FIG. 18 shows the function of a mobility anchor point;
FIG. 19 is a function block diagram of the home agent and the mobility anchor point:
FIG. 20 is a flowchart (1) of the operation of the protocol control unit of the home agent or the mobility anchor point;
FIG. 21 is a flowchart (2) of the operation of the protocol control unit of the home agent or a mobility anchor point;
FIG. 22 is a function block diagram of an edge node and a gateway edge node;
FIGS. 23A through 23D show examples of each cache unit configuring a service execution data;
FIG. 24 shows a method of generating service execution data;
FIGS. 25A through 25C show examples of an address cache and a policy table for individual management of a source address and a destination address;
FIGS. 26A and 26B show examples of an address cache and a policy table for management of the combination of a source address and a destination address corresponding to each service;
FIG. 27 is a flowchart of the operations of the service control unit of an edge node or a gateway edge node;
FIG. 28 is a flowchart (1) of the process of checking an address cache;
FIG. 29 is a flowchart (2) of the process of checking an address cache;
FIG. 30 is a flowchart of the operations of the packet edition unit of an edge node or a gateway edge node;
FIG. 31 is a flowchart (1) of the operations of the protocol control unit of an edge node or a gateway edge node;
FIG. 32 is a flowchart (2) of the operations of the protocol control unit of an edge node or a gateway edge node;
FIG. 33 is a flowchart (3) of the operations of the protocol control unit of an edge node or a gateway edge node;
FIG. 34 is a flowchart (4) of the operations of the protocol control unit of an edge node or a gateway edge node;
FIG. 35 is a flowchart of the operations of the service data management unit of an edge node or a gateway edge node;
FIG. 36 is a flowchart (1) of the process performed when a hit miss occurs in an address cache:
FIG. 37 is a flowchart (2) of the process performed when a hit miss occurs in an address cache:
FIG. 38 is an example of the configuration of a network for explanation of enabling a service profile;
FIG. 39 is a flowchart (1) of the process of merging service profiles;
FIG. 40 is a flowchart (2) of the process of merging service profiles;
FIG. 41 is a flowchart (1) of the process performed when the lifetime of an IPv6 address is over;
FIG. 42 is a flowchart (2) of the process performed when the lifetime of an IPv6 address is over;
FIG. 43 shows a sequence of delivering service information to the edge node in the home domain;
FIG. 44 shows a sequence of delivering service information to the edge node in the foreign domain;
FIG. 45 shows a sequence of delivering service information to a gateway edge node;
FIG. 46 shows a sequence of delivering service information to a home agent;
FIG. 47 shows a sequence (1) of delivering service information to a mobility anchor point;
FIG. 48 shows a sequence (2) of delivering service information to a mobility anchor point;
FIG. 49 shows a sequence (3) of delivering service information to a mobility anchor point;
FIG. 50 shows a sequence of a source edge node obtaining control information from a destination edge node;
FIG. 51 shows a sequence of a source edge node transmitting control information to a destination edge node;
FIG. 52 shows a sequence of a source edge node and a destination edge node mutually transmitting control information;
FIG. 53 shows a sequence of an edge node obtaining control information from a home agent;
FIG. 54 shows a sequence of an edge node obtaining control information from a mobility anchor point;
FIG. 55 shows a sequence of an enabling process performed when a source hit miss occurs;
FIG. 56 shows a sequence of an enabling process performed when a destination hit miss occurs;
FIG. 57 shows a sequence of an enabling process performed when a source hit miss and destination hit miss occur;
FIG. 58 shows a sequence of an enabling process performed when a combination of a source address and a destination address is recorded;
FIG. 59 shows a sequence of a disabling process performed when the lifetime of the source address expires;
FIG. 60 shows a sequence of a disabling process performed when the lifetime of the destination address expires;
FIG. 61 shows a sequence of a disabling process performed when a combination of a source address and a destination address is recorded;
FIG. 62 shows a sequence of disabling a service at a request from an IPv6 host;
FIG. 63 shows a sequence of deleting/disabling service information about other nodes at a request from an IPv6 host;
FIG. 64 shows the configuration of an IPv6 header;
FIGS. 65A through 65C show the configurations of an ICMP-AAA request message;
FIGS. 66A through 66C show the configurations of an ICMP-AAA reply message;
FIGS. 67A through 67E show the configurations of a DIAMETER message;
FIGS. 68A and 68B show the data structures of an AHR (AMR) message and an AHA (AMA) message, respectively;
FIGS. 69A and 69B show the data structures of an ASR message and an ASA message, respectively;
FIGS. 70A through 70D show data structure of an HHR message, an HHA message, an STR message, and an STA message;
FIGS. 71A through 71D illustrate the data structure of an NAI-SPC request message;
FIGS. 72A through 72C show the data structure of an NAI-SPC reply message;
FIGS. 73A and 73B show the data structure of a binding update message;
FIGS. 74A through 74C show the data structures of an ICMP-AAA-Teardown request message; and
FIGS. 75A through 75C show the data structures of an ICMP-AAA-Teardown reply message.

### Best Mode for Carrying Out the Invention

The embodiments of the present invention are described below by referring to the attached drawings.

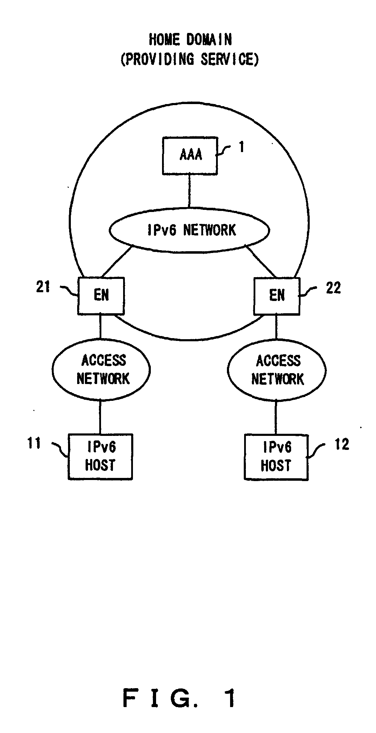

FIGS. 1 through 4 show the configurations of the service control network according to an embodiment of the present invention. The service control network according to the present invention is based on the IPv6 network, and includes an AAA (Authentication, Authorization, and Accounting) server which authenticates a terminal device, a router device as a communication node configuring the IPv6 network, an access network connecting the IPv6 network to a terminal device, and the IPv6 host as a terminal device.

The network shown in FIG. 1 is configured by a single domain. The domain is managed by a service provider. The IPv6 host belonging to the domain is authenticated by an AAA server 1. IPv6 hosts 11 and 12 are terminal devices having the communications functions according to the IPv6 protocol, and respectively belong to the domain. The user of the IPv6 hosts 11 and 12 has entered a subscriber contract with a service provider for managing the domain. The IPv6 hosts 11 and 12 are accommodated by edge nodes 21 and 22, respectively. An edge node can be realized by, for example, an IPv6 router device.

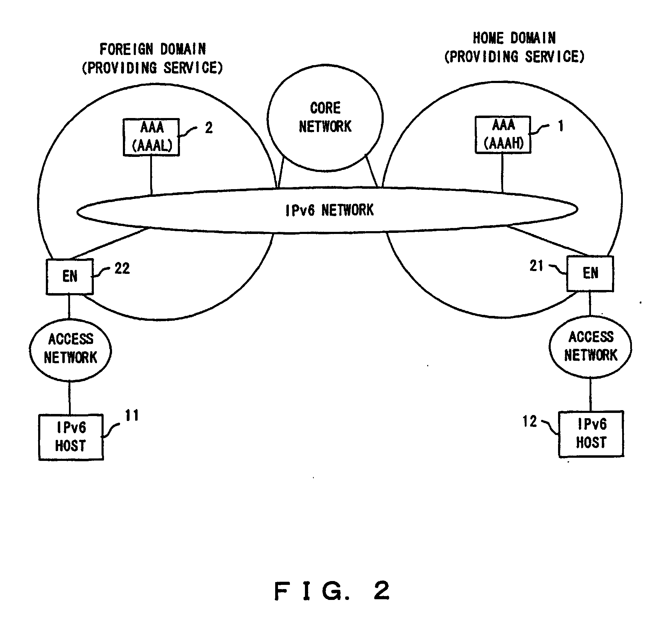

The network shown in FIG. 2 is configured by a plurality of domains. Then, the AAA server 1 is provided in the home domain of the IPv6 hosts 11 and 12, and an AAA server 2 is provided in the foreign domain. The IPv6 host 11 moves from the communications area of a home domain to the communications area of a foreign domain, and is accommodated by the edge node 22. The IPv6 hosts 11 and 12 are authenticated by the AAA server 1. That is, the AAA server 1 works as an AAAH for the IPv6 hosts 11 and 12, and the AAA server 2 works as an AAAL or an AAAF for the IPv6 hosts 11 and 12.

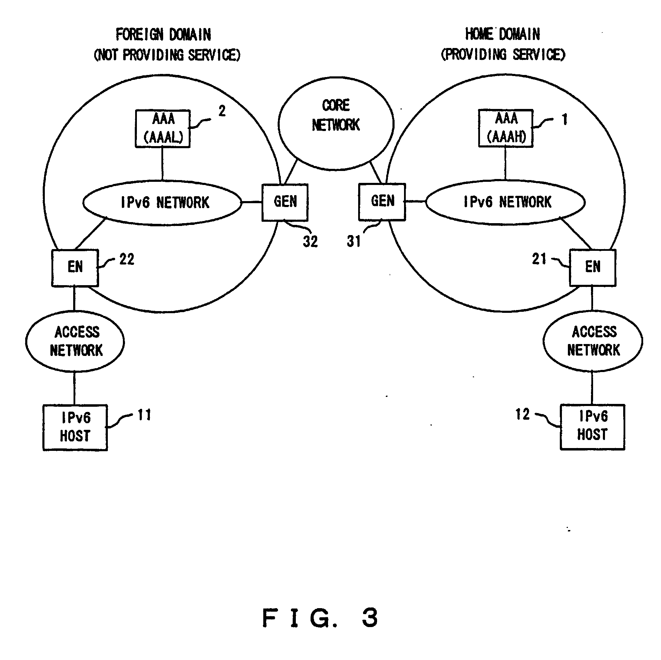

The network shown in FIG. 3 is configured by a plurality of domains as in the network shown in FIG. 2. However, the network shown in FIG. 2 has the configuration in which each domain provides a service such as a QoS, etc., while the network shown in FIG. 3 has the configuration in which a domain for providing a service is connected to a domain incapable of providing a service. In this example, a service can be provided in the home domain while no service can be provided in the foreign domain. The home domain and the foreign domain are interconnected to each other through a gateway edge node 31, a core network, and a gateway edge node 32.

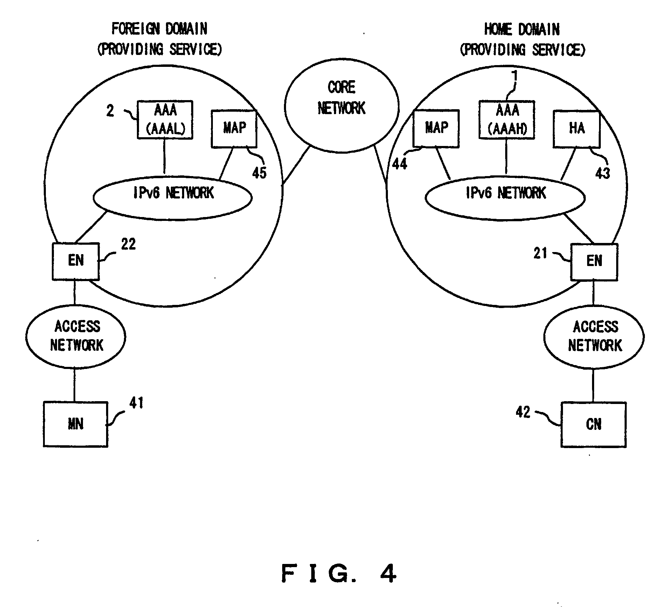

The network shown in FIG. 4 supports a mobile IPv6. That is, a mobile node (MN) 41 is connected to the IPv6 network according to the mobile IPv6. In the mobile IPv6, the location of the mobile node 41 is recorded in a home agent (HA) 43. A correspondent of the mobile node 41 is hereinafter referred to as a correspondent node (CN) 42. It is assumed that a hierarchical mobile IPv6 is used in this network. Therefore, mobility anchor points 44 and 45 are provided in the home domain and the foreign domain, respectively.

The configurations and the operations of the AAA server, the edge node (EN), the gateway edge node (GEN), the home agent (HA), and the mobility anchor point (MAP) are described later in detail.

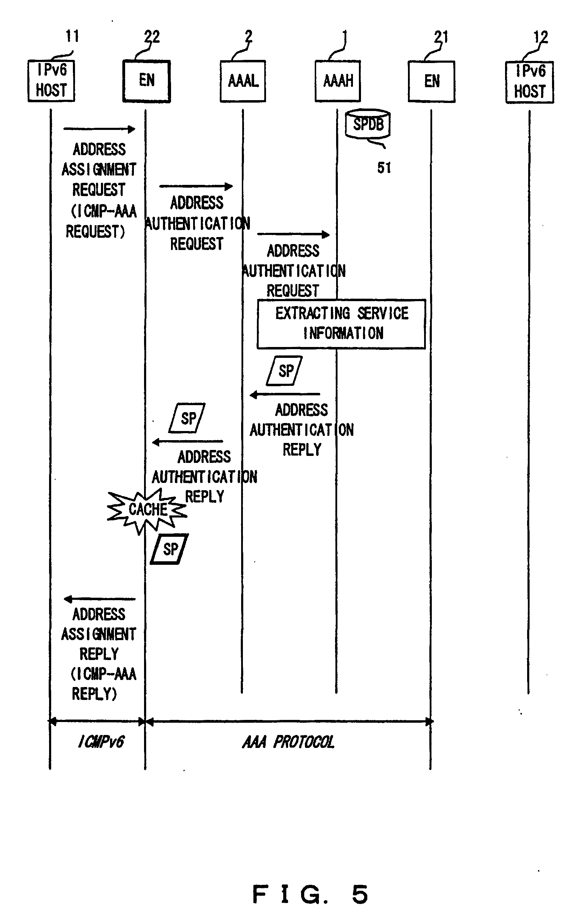

The basic sequence of delivering service control information and the basic sequence of using the delivered service control information in the service control network according to an embodiment of the present invention are described below by referring to FIGS. 5 through 7.

FIG. 5 shows a basic sequence of delivering service control information. It is described based on the network shown in FIG. 2. In this example, the service control information about the IPv6 host 11 is delivered to the edge node 22. The IPv6 host 11 is authenticated by the AAA server (AAAH) 1. The service control information about the IPv6 host 11 is assumed to be stored in a database (SPDB) 51 accessible by the AAA server 1.

The IPv6 host 11 periodically receives an ICMP advertisement through a network, however not shown in FIG. 5. The ICMP advertisement is, for example, a message transmitted from a router device to each terminal. In this example, the ICMP advertisement is assumed to have been transmitted from the edge node 22 to the IPv6 host 11.

Upon receipt of the ICMP advertisement, the IPv6 host 11 transmits an address assignment request (ICMP-AAA request) to the edge node 22 as necessary. The address assignment request is a message for request of a new IP address, and is defined by the ICMPv6. For example, the IPv6 host 11 outputs an address assignment request when no IP address is held, when a previously assigned IP address expires, when it moves from the communications area of a router device to the communications area of another router device, etc.

Upon receipt of the address assignment request, the edge node 22 determines the IP address to be assigned to the IPv6 host 11, and transmits an address authentication request to the AAA server (AAAL) 2. The AAA server 2 transfers the address authentication request to the AAA server (AAAH) 1.

Upon receipt of the address authentication request, the AAA server (AAAH) 1 authenticates the IPv6 host 11, and extracts a service profile (SP) as the service control information about the IPv6 host 11 from the database (SPDB) 51. The AAA server (AAAH) 1 transmits the service profile of the IPv6 host 11 together with an address authentication reply to the edge node 22 through the AAA server (AAAL) 2.

Upon receipt of the address authentication reply and the service profile of the IPv6 host 11, the edge node 22 first stores the service profile in the cache of the device. Then, it returns to the IPv6 host 11 the address assignment reply (ICMP-AAA reply) as a reply to the address assignment request.

According to this procedure, a new IPv6 address is assigned to the IPv6 host 11. In conjunction with the address assignment procedure, the IPv6 host 11 is authenticated by the AAA server (AAAH) 1, and the service profile of the IPv6 host 11 is delivered to the edge node 22 which accommodates the IPv6 host 11. Thus, in the network according to an embodiment of the present invention, the ICMPv6 is linked to the AAA protocol.

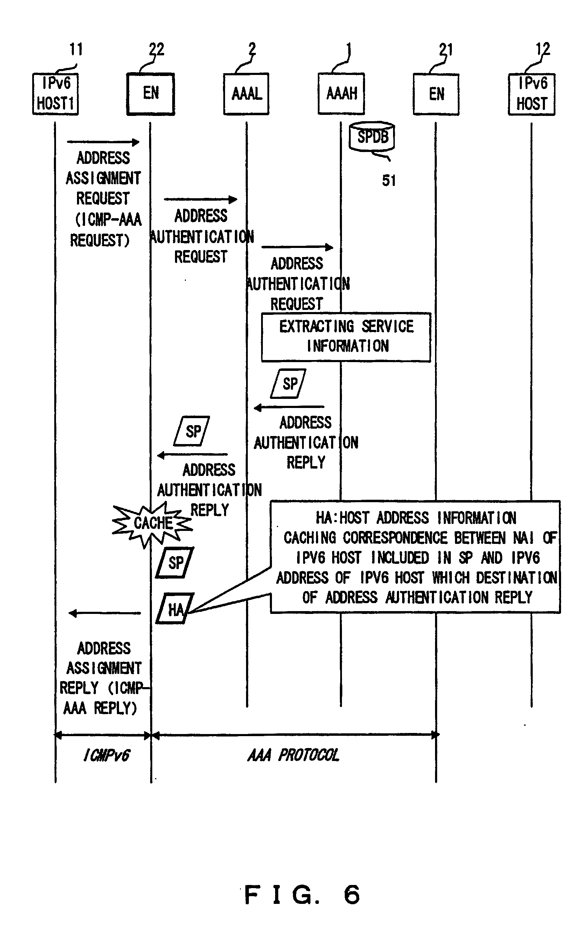

FIG. 6 shows the method of managing a delivered service profile. The procedure of delivering a service profile to the edge node 22 is shown in FIG. 5.

In the edge node 22, the delivered service profile is managed using a network access identifier of a corresponding terminal device as a key. The network access identifier is identification information uniquely assigned to each terminal, and is not changed after the terminal device is moved. The network access identifier of the IPv6 host 11 is transmitted to the edge node 22 by an address assignment request (ICMP-AAA request).

The edge node 22 holds host address information (HA) describing the correspondence between the network access identifier of the terminal device to which a corresponding service profile is delivered and the IPv6 address assigned to the terminal device. The network access identifier is included in the service profile transmitted from the AAA server 1. In the example shown in FIG. 6, when the service profile of the IPv6 host 11 is delivered to the edge node 22, the host address information (HA) describing the correspondence between the network access identifier of the IPv6 host 11 and the IPv6 address newly assigned to the IPv6 host 11 is generated.

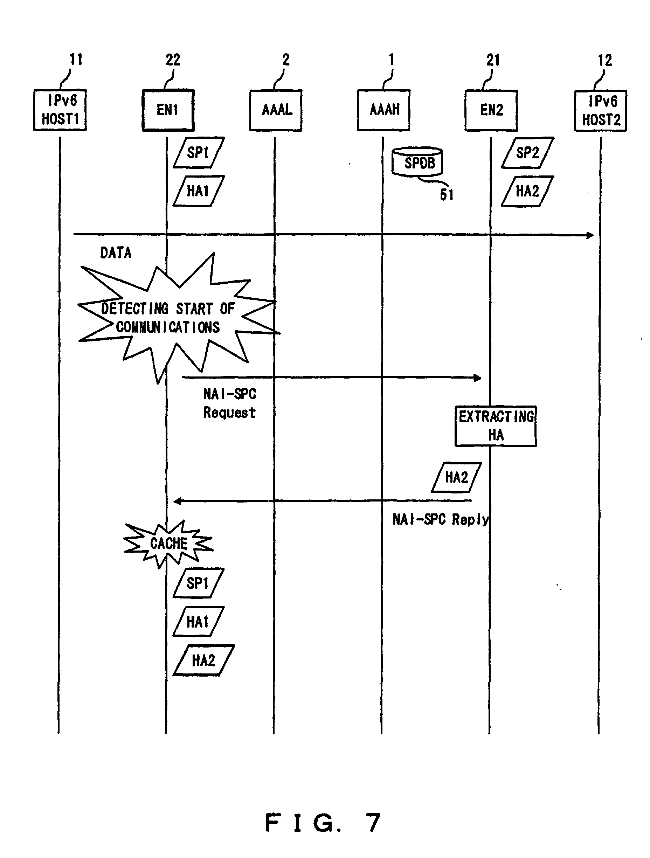

FIG. 7 shows the sequence of an edge node obtaining the host address information about a correspondent. In this example, the IPv6 host 11 is accommodated by the edge node 22, and the IPv6 host 12 is accommodated by the edge node 21. The edge node 22 holds the service profile and the host address information about the IPv6 host 11, and the edge node 21 holds the service profile and the host address information about the IPv6 host 12. It is assumed that a data packet has been transmitted from the IPv6 host 11 to the IPv6 host 12.

When the edge node 22 detects that the above mentioned communications have been started, it transmits an NAI-SPC request to the edge node 21 accommodating the IPv6 host 12. On the other hand, upon receipt of the request, the edge node 21 transmits the host address information (HA2) about the IPv6 host 12 to the edge node 22 using an NAI-SPC reply. Thus, the edge node 22 obtains the host address information about the IPv6 host 12. That is, the edge node 22 obtains the network access identifier of the destination host. The edge node 22 obtains in advance the network access identifier of the source host. Therefore, the edge node includes the network access identifiers of the source host and the destination host. Then, if the edge node 22 accesses a service profile using these network access identifiers, it extracts the service information specified for the communications in which the source host is the IPv6 host 11 and the destination host is the IPv6 host 12, thereby providing a corresponding service.

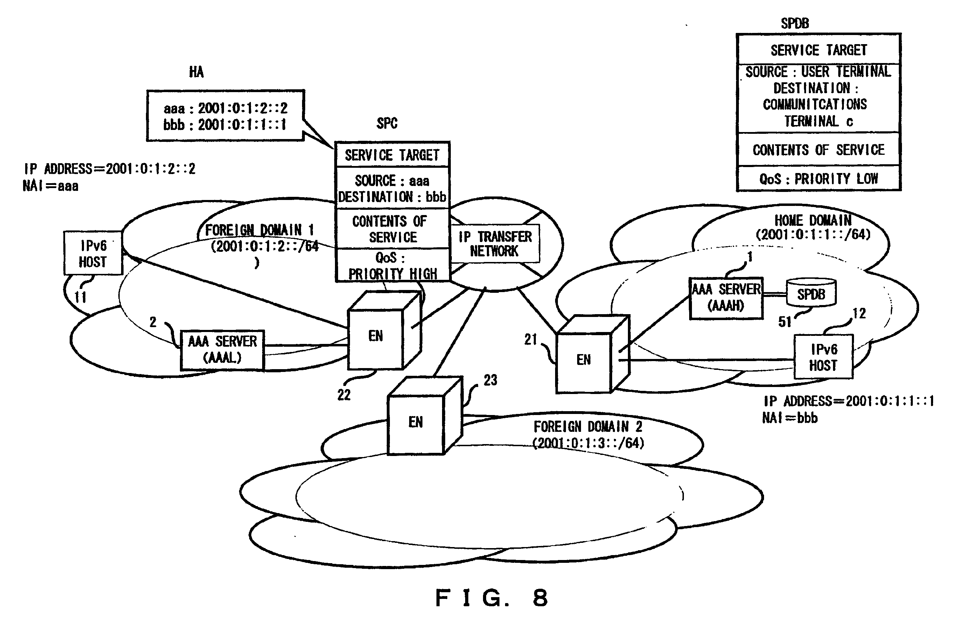

Next, an example of the operation of the service control network according to an embodiment of the present invention is described below by referring to FIGS. 8 through 10. In this example, data is transmitted from the IPv6 host 11 to the IPv6 host 12. The IPv6 host 11 and the IPv6 host 12 are respectively accommodated by the edge node 22 and the edge node 21 as shown in FIG. 8. The network access identifier of the IPv6 host 11 is "aaa", and the IPv6 host 11 is assigned an "IP address = 2001:0:1:2::2". On the other hand, the network access identifier of the IPv6 host 12 is "bbb", and the IPv6 host 12 is assigned an "IP address = 2001:0:1:1::1".

The edge node 22 holds the service profile of the IPv6 host 11 delivered from the AAA server (AAAH) 1. The procedure of delivering a service profile has been described above by referring to FIG. 5. The service profile of the IPv6 host 11 is managed using the network access identifier of the IPv6 host 11 as a key. The edge node 22 holds the host address information about the IPv6 host 11. In this example, the correspondence between the IPv6 address of the IPv6 host 11 and the network access identifier of the Ipv6 host 11, and the correspondence between the IPv6 address of the IPv6 host 12 which is a correspondent of the IPv6 host 11 and the network access identifier of the IPv6 host 12 are stored.

In this network, when a data packet is transmitted from the IPv6 host 11 to the IPv6 host 12, the edge node 22 detects the source IP address (2001:0:1:2::2) and the destination IP address (2001:0:1:1::1). Then, a set of network access identifiers (aaa and bbb) corresponding to the set of the above mentioned addresses is detected by referring to the host address information. Furthermore, the service information corresponding to the set of the network access identifiers is extracted from the service profile cache. Then, the transfer of a packet from the IPv6 host 11 to the IPv6 host 12 is controlled according to the extracted service information.

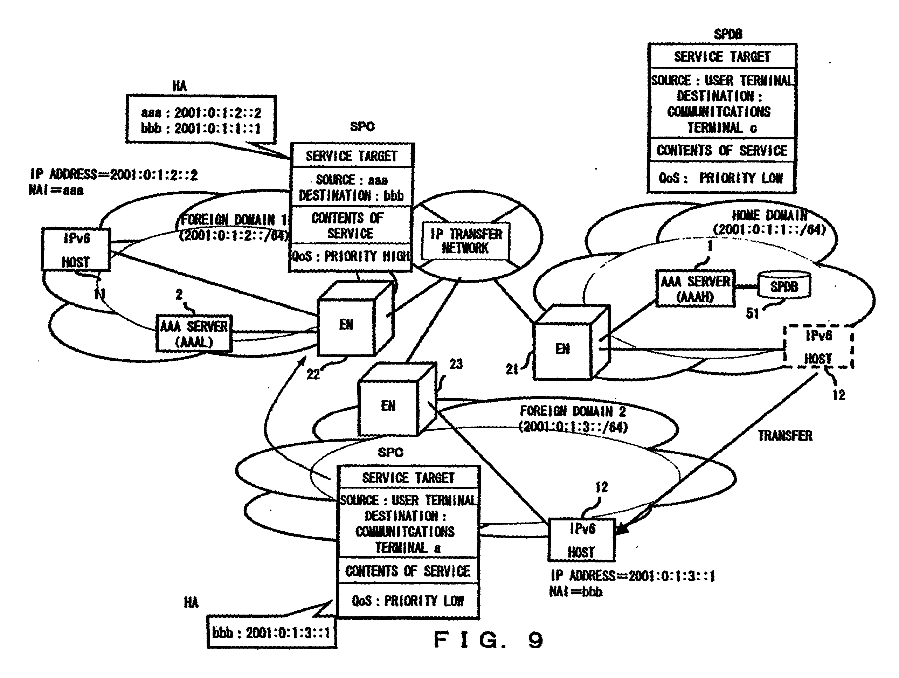

As shown in FIG. 9, it is assumed that the IPv6 host 12 has moved from the communications area of the edge node 21 to the communications area of an edge node 23. In this case, in the procedure described by referring to FIG. 5, a new IPv6 address (2001:0:1:3::1) is assigned to the IPv6 host 12, and the IPv6 host 12 is authenticated. In connection with the procedure, the service profile of the IPv6 host 12 is delivered from the corresponding AAA server 1 to the edge node 23, and the host address information HA describing the correspondence between the network access identifier of the IPv6 host 12 and a new IPv6 address is generated.

In this network, a data packet is transmitted from the IPv6 host 11 to the IPv6 host 12. At this time, the destination IP address of the packet is the IPv6 address (2001:0:1:3::1) newly assigned to the IPv6 host 12. However, an old IPv6 address (2001:0:1:1::1) assigned to the IPv6 host 12 is set in the host address information HA held by the edge node 22. Therefore, the edge node 22 cannot use the service profile corresponding to the packet received from the IPv6 host 11.

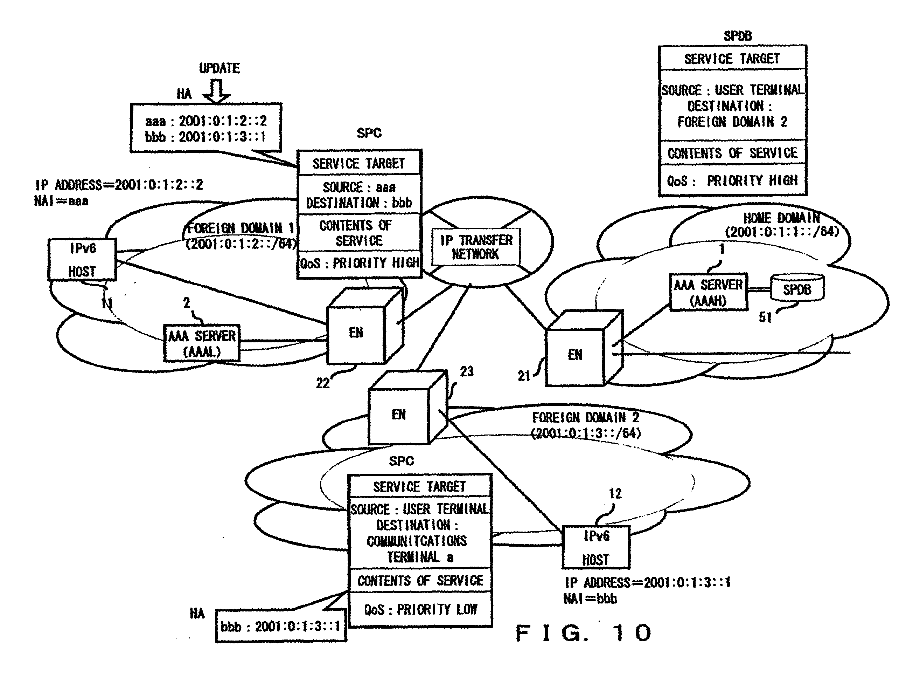

Then, the edge node 22 obtains the host address information about the IPv6 host 12 from the edge node 23 accommodating the IPv6 host 12 by performing the procedure shown in FIG. 7. At this time, the edge node 23 transmits the host address information about the IPv6 host 12 (or the host address information and the service profile of the IPv6 host 12) to the edge node 22 in response to the NAI-SPC request. Then, the edge node 22 updates the host address information in the device as shown in FIG. 10. As a result, the edge node 22 can use the service profile corresponding to the packet from the IPv6 host 11 to the IPv6 host 12, and the packet can be controlled according to the service profile.

Thus, in the service control network according to the embodiment of the present invention, the service profile of the IPv6 is managed by a corresponding network access identifier in each edge node, and the correspondence between the network access identifier of the IPv6 host and the IPv6 address is managed. Then, the information required to provide a corresponding service is transmitted and received between edge nodes when the communications between terminal devices are started. Accordingly, although the IP address of the IPv6 is changed, it is not necessary to deliver a service profile from an AAA server to an edge node again.

If the service profile of the IPv6 is managed by a corresponding IP address, then the service profile has to be delivered from the AAA server to a corresponding edge node each time the IP address of the IPv6 is changed. This configuration imposes heavy loads on the AAA server.

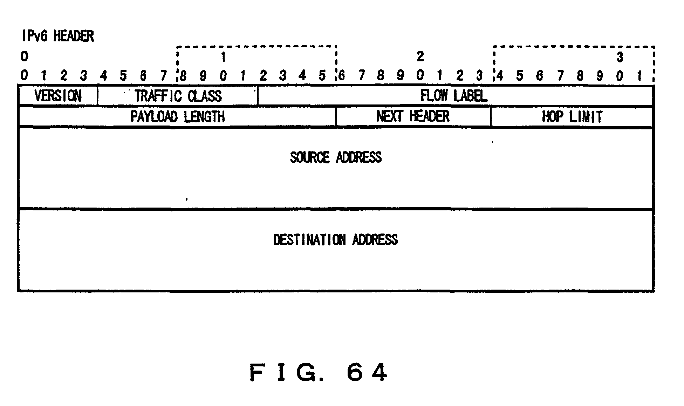

Described below is the data structure of various messages used in the service control network according to the embodiment of the present invention. Various messages are basically stored in an IPv6 packet and transmitted. The IPv6 packet is configured by an IPv6 header and a payload. As shown in FIG. 64, an IPv6 header is configured by version information, a traffic class, a flow label, a payload length, a next header, a hop limit, a source address, and a destination address.

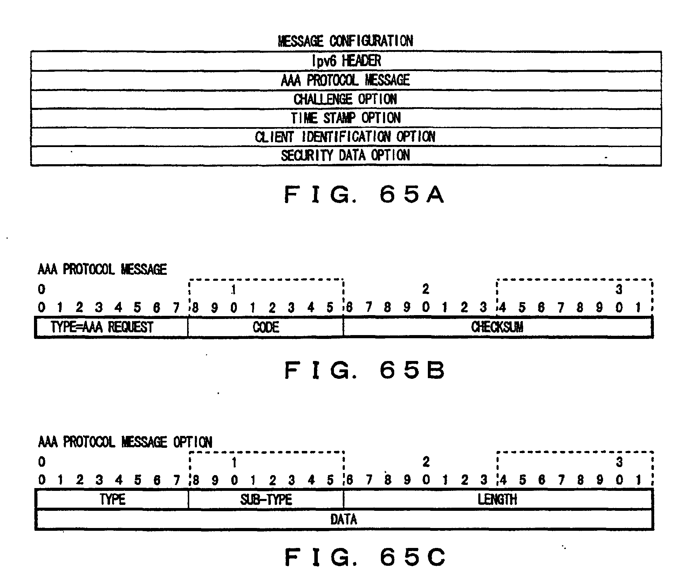

FIG. 65A shows the configuration of an ICMP-AAA request message. The message is transmitted from the IPv6 host which receives an ICMP advertisement to a router device (edge node), and is configured by an AAA protocol message, a challenge option, a time-stamp option, a client identification option, and a security data option. The configuration of an AAA protocol message is shown in FIG. 65B. Furthermore, the AAA protocol message can also be provided with an AAA protocol message option shown in FIG. 65C.

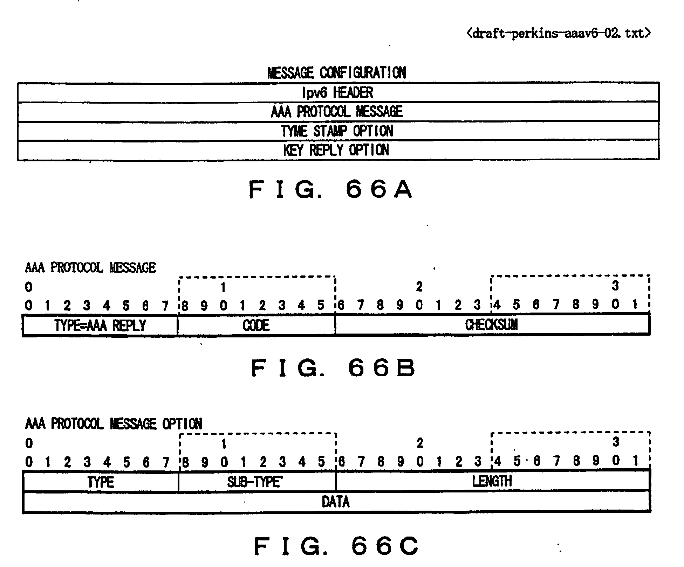

FIG. 66A shows the configuration of an ICMP-AAA reply message. The message is returned from a router device (edge node) to the IPv6 host in response to an ICMP-AAA request message, and is configured by an AAA protocol message, a time stamp option, a key reply option. The configuration of the AAA protocol message is shown in FIG. 66B. The AAA protocol message can also be provided with an AAA protocol message option shown in FIG. 66C.

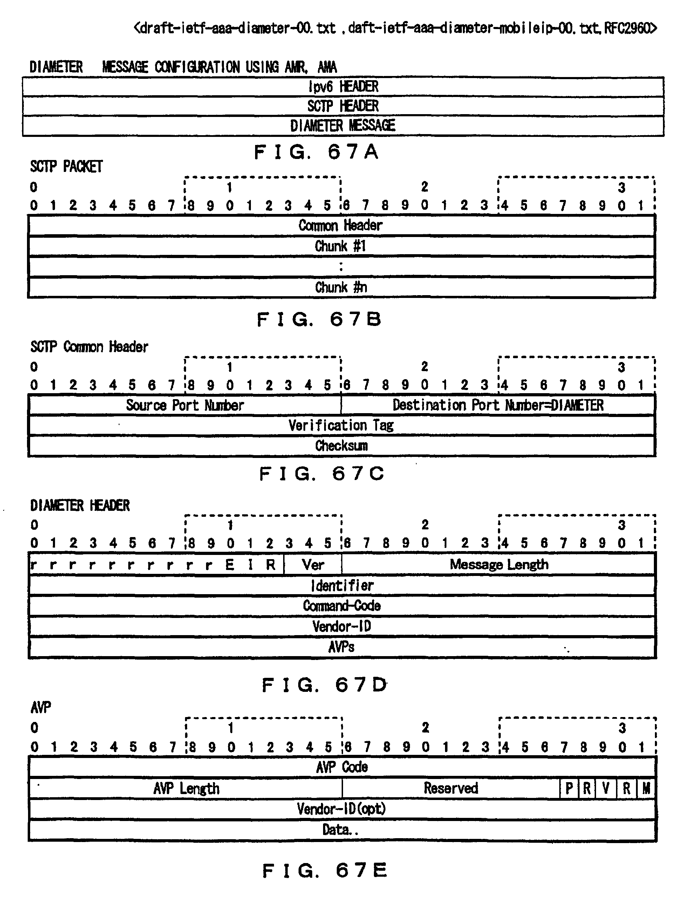

FIG. 67 shows the configuration of a packet containing a DIAMETER message to be transmitted. The DIAMETER message is stored in an SCTP packet as shown in FIG. 67A, and the SCTP packet is stored in the payload of the IPv6 packet. The DIAMETER is one of the AAA protocols.

As shown in FIG. 67B, the SCTP packet is configured by an SCTP common header and a plurality of chunks. The configuration of the SCTP common header is shown in FIG. 67C. The "DIAMETER" is specified as a destination port number.

The DIAMETER message has a DIAMETER header shown in FIG. 67D. The type of message can be identified by the command code in the header. As shown in FIG. 67E, the AVP area following the header stores the data corresponding to the message.

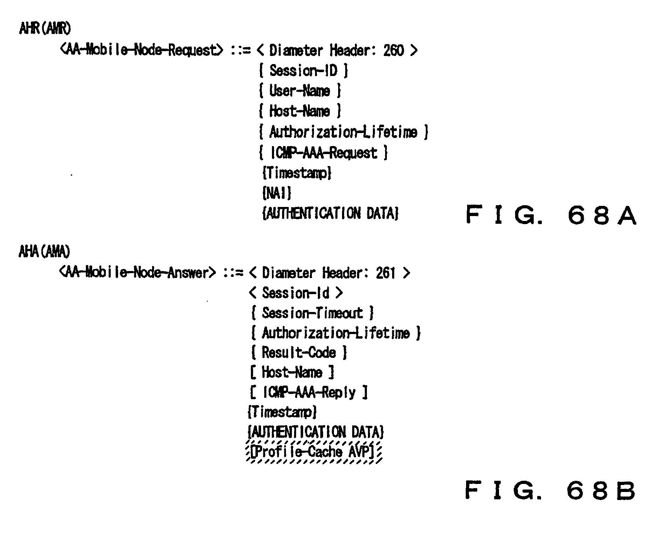

FIG. 68A shows the data structure of an AHR (AMR) message. The AHR message is one of the existing DIAMETER messages, and is used by a router device (edge node) to request the AAA server to authenticate an IPv6 host. In this message, the network access identifier of an IPv6 host to be authenticated is set, and the message contains an ICMP-AAA request according to the embodiment of the present invention.

FIG. 68B shows the data structure of an AHA (AMA) message. The AHR message is one of the existing DIAMETER messages, and is returned from the AAA server to the router device (edge node) when the AHR message is generated. The message includes an ICMP-AAA reply, and can store the service profile of the IPv6 authenticated by the AAA server according to the embodiment of the present invention. In this case, the service profile is stored in the "profile cache AVP".

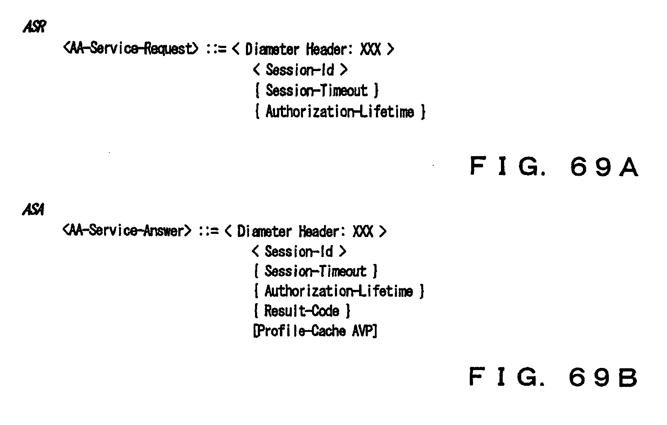

FIG. 69A shows the data structure of an ASR message. The ASR message is newly introduced in the network according to the embodiment of the present invention, and is used by the mobility anchor point to request the AAA server for a service profile of a mobile node in the hierarchical mobile IPv6. A unique value different from the values of other messages is used for the command code of the message.

FIG. 69B shows the data structure of an ASA message. The ASA message is newly introduced in the network according to the embodiment of the present invention, and is returned from the AAA server to the mobility anchor point in the hierarchical mobile IPv6. The message has an area for storing the service profile requested by the ASR message. A unique value different from the values of other messages is used for the command code of the message.

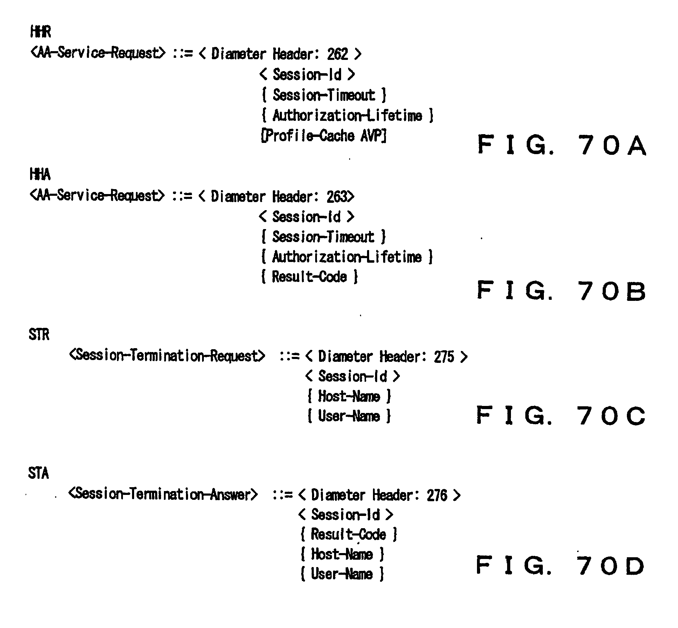

FIG. 70A shows the data structure of an HHR message. The HHR message is one of the existing DIAMETER messages, and is used by the AAA server to notify the gateway edge node, the home agent of the IPv6, or the mobility anchor point of the hierarchical mobile IPv6 of the information about the location of the corresponding terminal device. According to the embodiment of the present invention, the message can store a service profile of a corresponding terminal device or mobile node.

FIG. 70B shows the data structure of an HHA message. The HHA message is one of the existing DIAMETER messages, and is returned to the AAA server from the gateway edge node, the home agent of the mobile IPv6, or the mobility anchor point of the hierarchical mobile IPv6 which received the HHR message.

FIG. 70C shows the data structure of an STR message. The STR message is one of the existing DIAMETER messages to request to terminate a session. FIG. 70D shows the data structure of an STA message. The STA message is one of the existing DIAMETER messages, and is issued in response to the STR message.

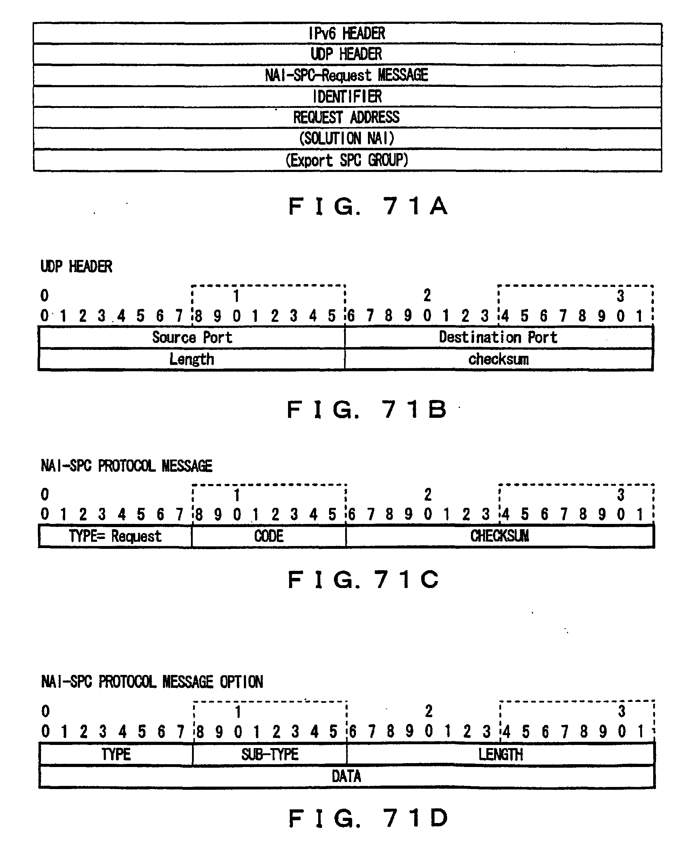

FIG. 71 shows the data structure of the NAI-SPC request message. The NAI-SPC request message is newly introduced in the network according to the embodiment of the present invention, and is stored in an UDP packet as shown in FIG. 71A. The UDP packet is stored in the payload of the IPv6 packet.

The NAI-SPC request message is used to request to solve the NAI between the router devices (edge nodes). In this case, an IPv6 address corresponding to a target network access identifier is set in this message. In addition, this message can also be used to transmit a service profile and/or host address information between the router devices (edge nodes).

FIG. 71B shows the configuration of a UDP header. FIGS. 71C and 71D show data structures of an NAI-SPC protocol message and an NAI-SPC protocol message option included in the NAI-SPC request, respectively.

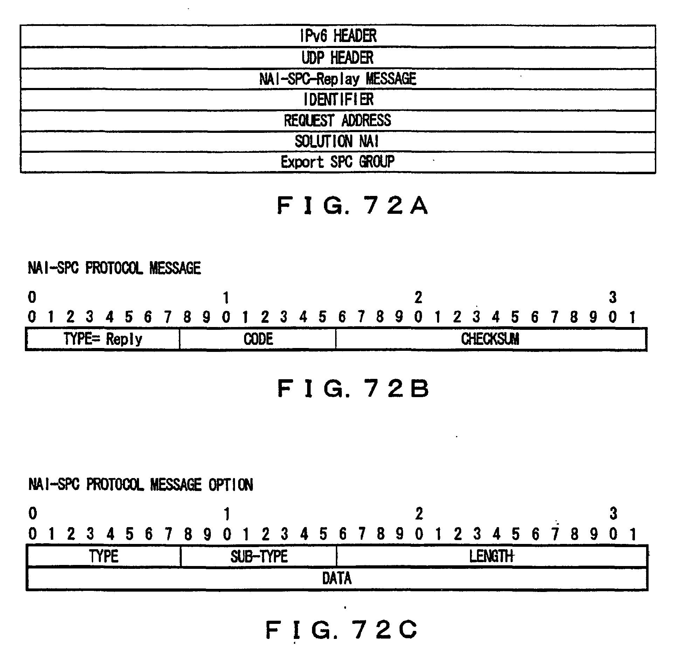

FIG. 72 shows the data structure of an NAI-SPC reply message. The NAI-SPC reply message is newly introduced in the network according to the embodiment of the present invention, and is stored in the UDP packet as shown in FIG. 72A.

The NAI-SPC reply message is issued in response to the NAI-SPC request message, and can store a service profile and/or host address information. The message can also be used to return the result of the solution to the requested NAI. FIGS. 72B and 72C show the data structures of the NAI-SPC protocol message and the NAI-SPC protocol message option included in the NAI-SPC reply, respectively.

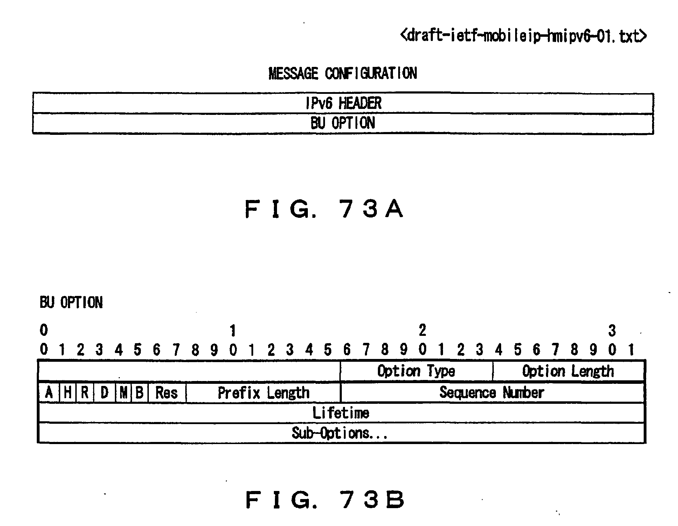

FIG. 73 shows the data structure of a binding update message. The binding update message is one of the existing mobile Ipv6 messages, and is used to perform a binding update process when a mobile node is moved. The message is stored in the payload of the IPv6 packet as shown in FIG. 73A. FIG. 73B shows the data structure of the binding update message.

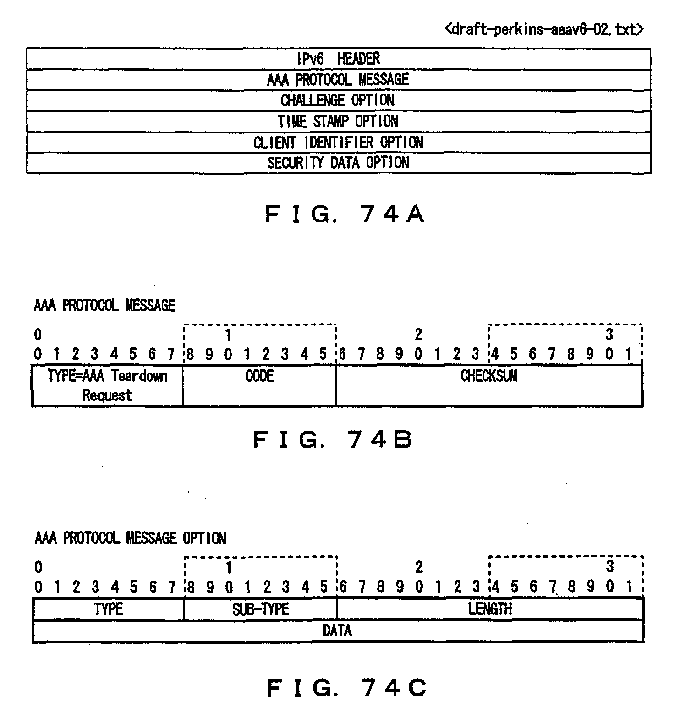

FIG. 74 shows the data structure of an ICMP-AAA-Teardown request message. This request message requests to disable the provided service, and is configured by an AAA protocol message, a challenge option, a time stamp option, a client identification option, and a security data option, as shown in FIG. 74.

FIG. 74B shows the data structure of the AAA protocol message of the ICMP-AAA-Teardown request message. FIG. 74C shows the data structure of an AAA protocol message option of the ICMP-AAA-Teardown request message.

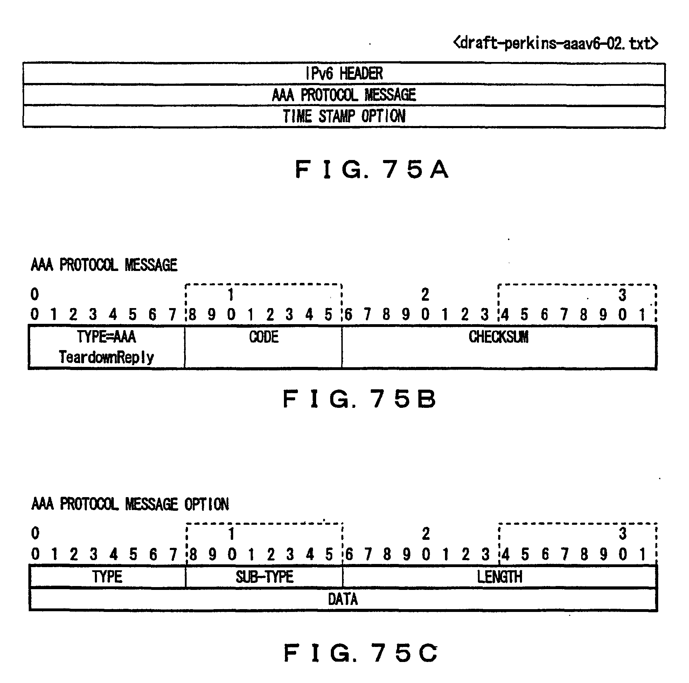

FIG. 75 shows the data structure of an ICMP-AAA-Teardown reply message. This reply message is issued in response to the ICMP-AAA-Teardown request message, and is configured by an AAA protocol message and a time stamp option, as shown in FIG. 75A.

FIG. 75B shows the data structure of an AAA protocol message of the ICMP-AAA-Teardown reply message. FIG. 75C shows the data structure of an AAA protocol message option of the ICMP-AAA-Teardown reply message.

Described below are the function entities (an AAA server, a home agent HA, a mobility anchor point MAP, an edge node EN, and a gateway edge node GEN) configuring the service control network according to the embodiment of the present invention. The IPv6 host is a subscriber terminal communicating data through the IPv6. The mobile node MN is a subscriber terminal communicating data through the mobile IPv6. These subscriber terminals have the functions of connecting to a cable LAN such as Ethernet, etc., a radio LAN, a radio access network such as a CDMA, etc. A correspondent node CN is an IPv6 host communicating with a mobile node. Configuration and Operation of AAA server

An AAA server is one or more server computers for authentication, authorization, and accounting an IPv6 host or a mobile node, and is named in an IETF. A protocol for the AAA server can be DIAMETER <draft-calhoun-diameter-12.txt>, <draft-calhoun-diameter-mobileip-07.txt>. An AAA server which performs authentication/authorization/accounting for a subscriber is an "AAAH (AAA Home)" for the subscriber. An AAA server other than the AAAH is an "AAAF (AAA foreign)" or "AAAL (AAA local)" for the subscriber.

The AAA server used in the service control network according to the embodiment of the present invention has also the functions of, in addition to the above mentioned basic functions, extracting from the database (SPDB) 51 a service profile as service control information corresponding to the NAI (network access identifier) of the subscriber terminal when an IPv6 address is assigned to the subscriber terminal, and delivering the service profile to the router device, etc. accommodating the subscriber terminal.

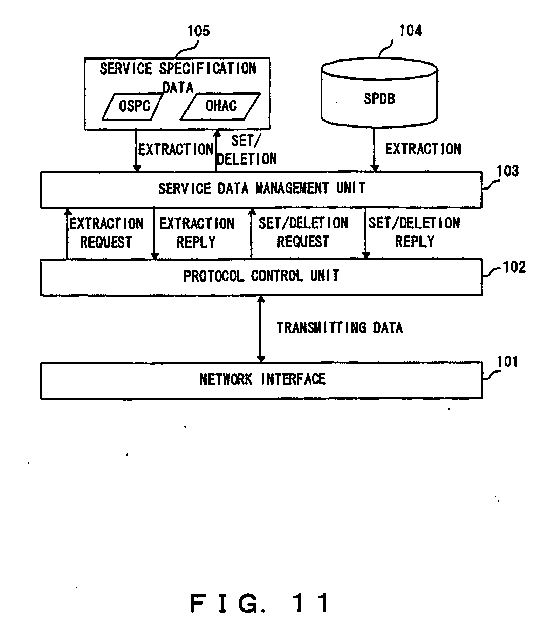

FIG. 11 is a function block diagram of the AAA server.

A network interface 101 terminates a line connected to the IPv6 network.

A protocol control unit 102 analyzes a packet received through the network interface 101, and performs a corresponding process depending on the type of the packet. If the received packet contains a message relating to the embodiment of the present invention, the protocol control unit 102 requests a service data management unit 103 to perform the process corresponding to the message. For example, a request to extract a corresponding service profile from a service profile database 104, a request to access a service specification data 105, etc. are generated.

The service data management unit 103 accesses the service profile database 104 or the service specification data 105 at a request from the protocol control unit 102.

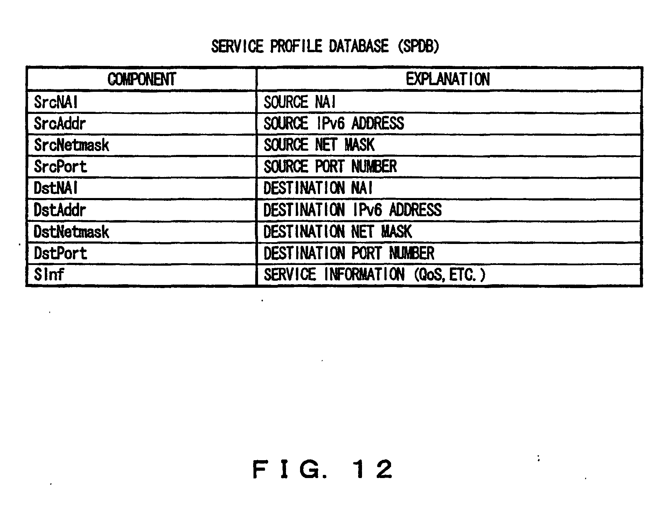

The service profile database 104 stores the service control information (service profile) about each subscriber belonging to the domain managed by the AAA server. FIG. 12 shows an example of a service profile stored in the service profile database 104. A service profile is fundamentally recorded for each service in the service profile database 104, and each service profile is managed using as a key the NAI of the subscriber who obtains the service. A QoS class, etc. is set as service information.

The service profile can describe not only the one-to-one inter-IPv6-host communications but also the one-to-many inter-IPv6-host communications, the many-to-one inter-IPv6-host communications, and the many-to-many inter-IPv6-host communications. If a plurality of IPv6 hosts are set in the service profile, a wild card can be used to specify an IPv6 address, or a net mask can be appropriately set. For example, in the network shown in FIGS. 8 through 10, when the QoS of the packets collectively transmitted from the IPv6 host 11 to all terminal devices accommodated in the foreign domain 2 is collectively described, the "source IPv6 address" and the "destination IPv6 address" are respectively set to "2001:0:1:2::2" and "2001:01:3:*".

The service specification data 105 stores the service profile delivered from the AAAH and the host address information when the AAA server operates as an AAAL. The service profile is stored in the original service profile cache (OSPC), and the host address information is stored in the original host address cache (OHAC).

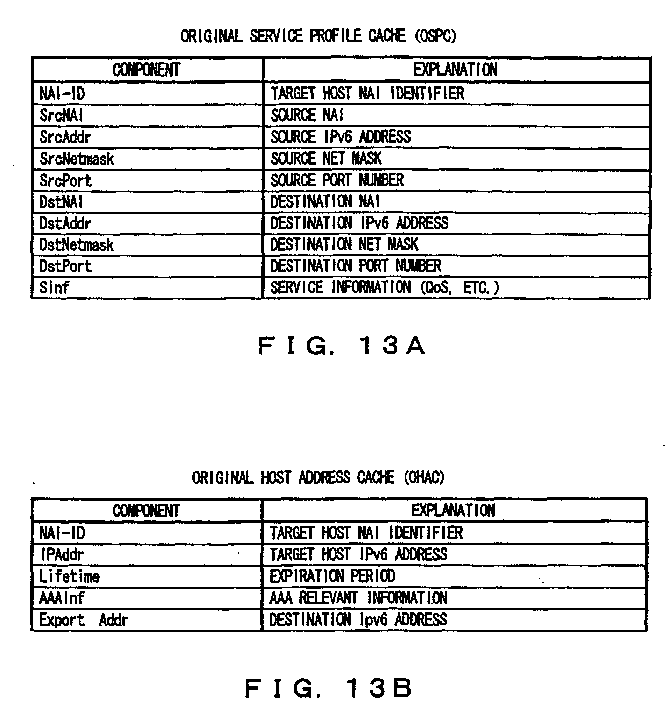

FIG. 13A shows an embodiment of the original service profile cache (OSPC). The original service profile cache (OSPC) stores a service profile for each IPv6 host and service. Each service profile is recorded using the NAI (NAI-ID) of the IPv6 host to be managed as a key. The recorded information can be a "source NAI", a "source IPv6 address", a "source net mask", a "source port number", a "destination NAI", a "destination IPv6 address", a "destination net mask", a "destination port number", a "service information", etc. However, it is not necessary to record all of these items.

For example, in the network shown in FIG. 8, the original service profile cache (OSPC) storing the service profile of the IPv6 host 11 is as follows. Here, the service relating to the transmission of data from the IPv6 host 11 to the IPv6 host 12 is specified.

Target host NAI identifier: aaa
Source NAI: aaa
Source IPv6 address:
Source net mask:
Source port number:
Destination NAI: bbb
Destination IPv6 address:
Destination net mask:
Destination port number:
Service information: QoS = high priority

FIG. 13B shows an example of an original host address cache (OHAC). A "target host IPv6 address", an "Lifetime", an "AAA relevant information", a "destination IPv6 address", etc. are recorded in the original host address cache (OHAC) using the NAI (NAI-ID) of the IPv6 host to be managed as a key. The "target host IPv6 address" is assigned to the IPv6 host to be managed. Therefore, when the IPv6 address assigned to the IPv6 host is changed, the "target host IPv6 address" is updated correspondingly. As a result, the correspondence between the NAI of the IPv6 host and the current IPv6 address is constantly recorded. The "Lifetime" refers to the remaining time effectively available for the service profile corresponding to the IPv6 address. The "destination IPv6 address" refers to the IPv6 address of the destination entity when a service profile is delivered from the corresponding entity to another entity.

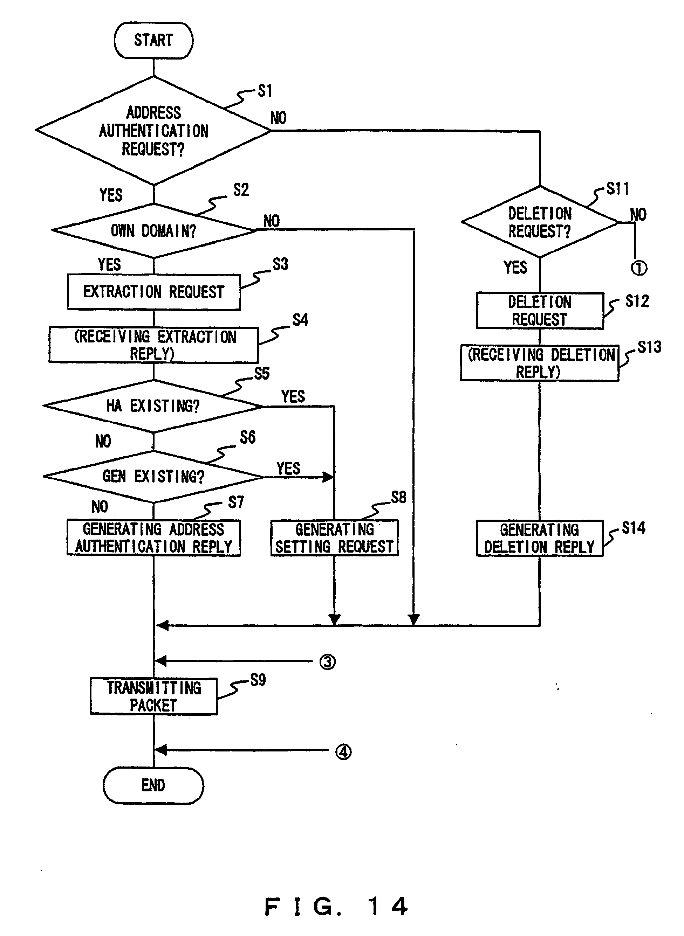

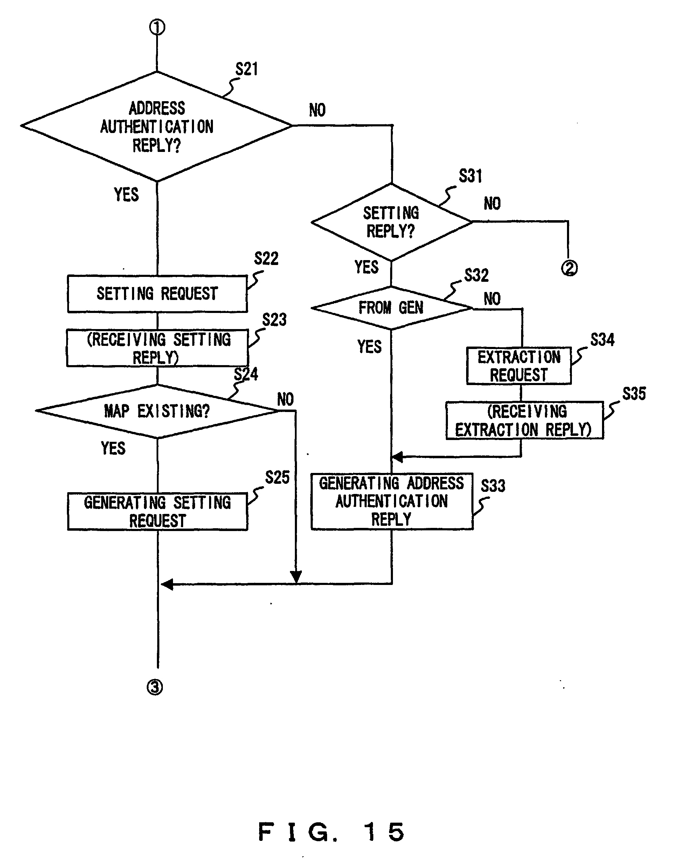

FIGS. 14 through 16 are flowcharts of the operations of the protocol control unit 102 of the AAA server. The process is performed when a message is received from the network interface 101.

In step S1, it is checked whether or not an address authentication request has been received. The AHR message of the DIAMETER protocol is used as an address authentication request. The type of DIAMETER message is detected by, for example, the command code of the DIAMETER header shown in FIG. 67D.

When an address authentication request is received, it is checked in step S2 whether or not the destination of the message is this AAA server. If the destination of the message is this AAA server, the processes in and after step S3 are performed. Otherwise, control is passed to step S9.

The processes in steps S3 through S8 are performed by the AAAH. In step S3, the authenticating process is performed, and the service data management unit 103 is requested to extract a service profile corresponding to the NAI of the IPv6 host set in the address authentication request. In step S4, a corresponding service profile is received from the service data management unit 103.

In step S5, it is checked whether or not there is a home agent for recording the location (address) of the IPv6 host associated with the address authentication request. The home agent is provided in the mobile IPv6 network. In step S6, it is checked whether or not there is a gateway edge node. A gateway edge node is provided in, for example, the network shown in FIG. 3.

When there is no home agent or gateway edge node, an address authentication reply is generated in step S7. The address authentication reply includes a service profile obtained in step S4, and the AHA message of the DIAMETER protocol is used to transmit it. On the other hand, when a home agent or a gateway edge node exists, a setting request is generated in step S8. The setting request includes the service profile obtained in step S4, and the HHR message of the DIAMETER protocol is used to transmit it

In step S9, a packet storing a generated message is passed to the network interface 101, thereby transmitting the generated message to the network.

In step S11, it is checked whether or not a delete request has been received. The delete request is an STR message in the DIAMETER protocol. If the delete request has been received, then a delete request is transmitted to the service data management unit 103. The delete request includes a request to delete the session information not shown in the attached drawings. If a delete reply is received from the service data management unit 103 in step S13, then a delete reply message is generated in step S14. The delete reply message is stored in a packet in step S9, and is returned to the source of the delete request.

In step S21, it is checked whether or not an address authentication reply has been received. The address authentication reply is an AHA message in the DIAMETER protocol. If the address authentication reply has been received, then the processes in steps S22 through S25 are performed. The processes in steps S22 through S25 are performed by the AAAL.

In step S22, a setting request is transmitted to the service data management unit 103. The setting request is an instruction to store a service profile received together with the address authentication request in the service specification data 105. If the setting reply corresponding to the setting request is received in step S23, then it is checked in step S24 whether or not there is a mobility anchor point. The mobility anchor point is described later in detail, but exists in a hierarchical mobile IPv6 network.

If there is a mobility anchor point, then a setting request is generated in step S25. The setting request is the same as the setting request generated in step S8, but the destination is the mobility anchor point. If there is no mobility anchor point, then step S25 is omitted. In this case, the received address authentication reply is transmitted as is.

In step S31, it is checked whether or not a setting reply has been received. The setting reply is a message corresponding to the setting request, and is an HHA message in the DIAMETER protocol. If the setting reply has been received, then it is checked in step S32 whether or not the source of the setting reply is a gateway edge node.

If the setting reply has been received from the gateway edge node, an address authentication reply is generated in step S33. In this case, the address authentication reply does not include a service profile. On the other hand, if a setting reply has been received from an entity other than the gateway edge nodes, in steps S34 and S35, a corresponding service profile is obtained. In this case, address authentication reply generated in step 33 includes the service profile.

In step S41, it is checked whether or not an extraction request has been received. The extraction request is a message for requesting a service profile to be delivered, and can be realized by the ASR message shown in FIG. 69A according to the embodiment of the present invention. If an extraction request has been received, the extraction request is transmitted to the service data management unit 103 in step S42, and a corresponding service profile is obtained in step S43. Then, an extraction reply is generated in step S44. The extraction reply is realized by the ASA message shown in FIG. 69B. The extraction reply includes the service profile obtained in step S43.

If the received packet does not store an address authentication request, a deletion request, an address authentication reply, a setting reply, or an extraction request, then other processes are performed in step S45.

Thus, the protocol control unit 102 generates a corresponding message based on the received message, and transmits a request to extract/set/delete a corresponding service profile to the service data management unit 103 as necessary. When the service profile is obtained, it is transmitted together with the generated message to a corresponding entity.

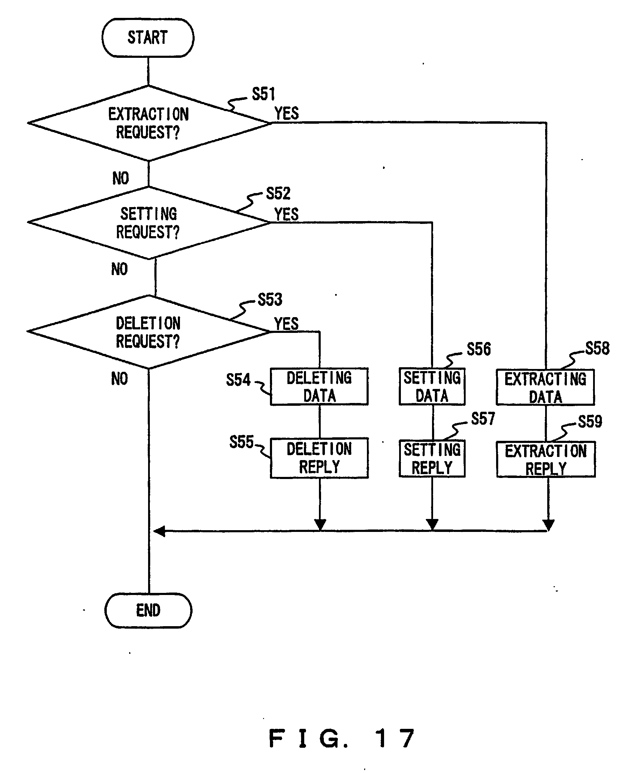

FIG. 17 is a flowchart of the operation of the service data management unit 103 of the AAA server. This process is performed when a request is received from the protocol control unit 102.

In steps S51 through S53, it is checked whether or not an extraction request, a setting request, or a deletion request has been received.

If a deletion request has been received, then a deletion reply is transmitted to the protocol control unit 102 in step S55 after deleting the corresponding information from the service specification data 105 in step S54. The processes in steps S54 and S55 are performed in the AAAL.

When a setting request is received, a service profile and/or host address information is set in the service specification data 105 in step S56. Then, a setting reply is transmitted to the protocol control unit 102 in step S57. The processes in steps S56 and S57 are performed in the AAAL.

When an extraction request is received, a corresponding service profile is extracted from the service profile database 104 or the service specification data 105 in step S58. The AAAH extracts a service profile from the service profile database 104, and the AAAL extracts it from the service specification data 105. The service profile is transmitted together with an extraction reply to the protocol control unit 102 in step S59.

### Configurations and Operations of Home Agent and Mobility Anchor Point

A home agent is an entity having a home address of a mobile node in the mobile IPv6 network, and is provided with a table containing the record of the location of a mobile node. When a packet addressed to the home address of a mobile node, the packet is capsuled and transferred to the care-of-address of the mobile node. A "care-of-address of a mobile node" refers to an IP address assigned to the mobile node in the destination domain.

In addition to the above mentioned basic function, the home agent according to the embodiment of the present invention has the functions of caching the service profile of a mobile node delivered from the AAA server, generating and caching the host address information relating to the service profile, and extracting and transferring the cached service profile and host address information.

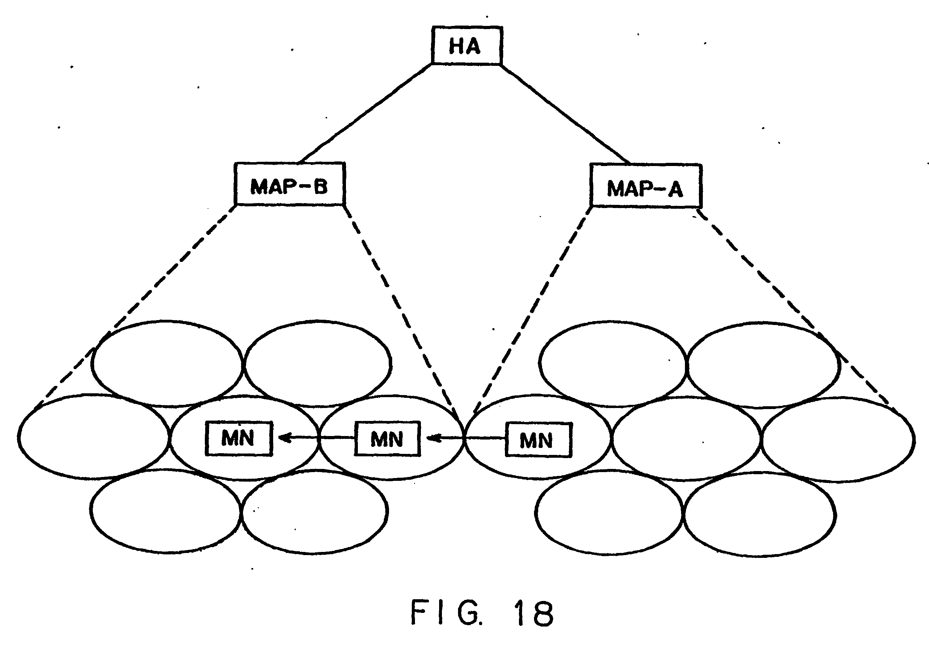

The mobility anchor point is an entity which works as a lower order home agent in a foreign domain in the hierarchical mobile IPv6 in which the functions of a home agent are hierarchically managed. The functions of a mobility anchor point are described below by referring to FIG. 18.

In the hierarchical mobile IPv6, the location of a mobile node (MN) is identified by an RCOA (regional care-of-address) and an LCOA (local care-of-address). The RCOA is an address for identifying the mobility anchor point (MAP) for managing the communications area in which the mobile node is located. The LCOA is an address used in an area managed by each mobility anchor point.

In FIG. 18, when a mobile node (MN) roams from an area managed by a mobility anchor point (MAP-A) to an area managed by another mobility anchor point (MAP-B), the notification of the RCOA is issued to the home agent, and the notification of the LCOA is issued to the mobility anchor point (MAP-B). On the other hand, if the mobile node moves within an area managed by one mobility anchor point, then the location is recorded in the mobility anchor point, but the location is not recorded in the home agent. As a result, the access to the home agent can be reduced, thereby reducing the load on the network, and realizing a high-speed process performed when the mobile node is moved. The mobility anchor point is described in detail in <draft-ietf-mobileip-hmipv6-02.txt> issued by the IETF.

In addition to the above mentioned basic function, the mobility anchor point according to the embodiment of the present invention has the functions of caching the service profile of a mobile node delivered from the AAA server or an edge node, generating and caching the host address information relating to the service profile, and extracting and transferring the cached service profile and host address information.

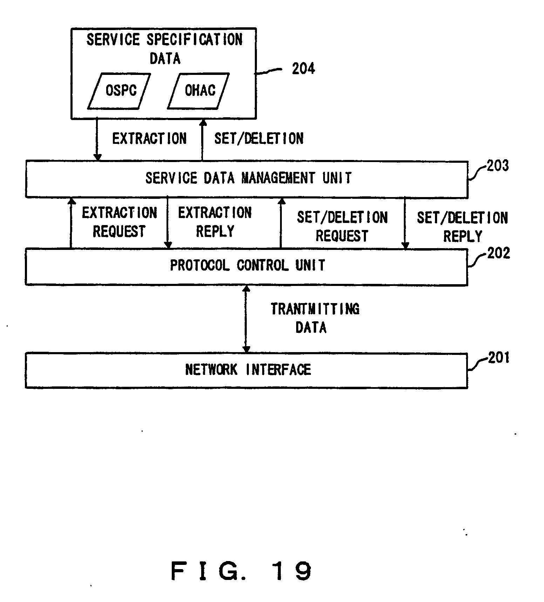

FIG. 19 is a block diagram of the functions of a home agent and a mobility anchor point.

A network interface 201 terminates the line connected to the IPv6 network.

A protocol control unit 202 analyzes a packet received through the network interface 201, and performs a corresponding process depending on the type of the packet. If the received packet contains a message according to the embodiment of the present invention, the protocol control unit 202 requests a service data management unit 203 to perform the process corresponding to the message. For example, a request to access a service specification data 204, etc. is generated.

The service data management unit 203 accesses the service specification data 204 at a request from the protocol control unit 102.

The service specification data 204 is basically the same as the service specification data 105 in AAA server.

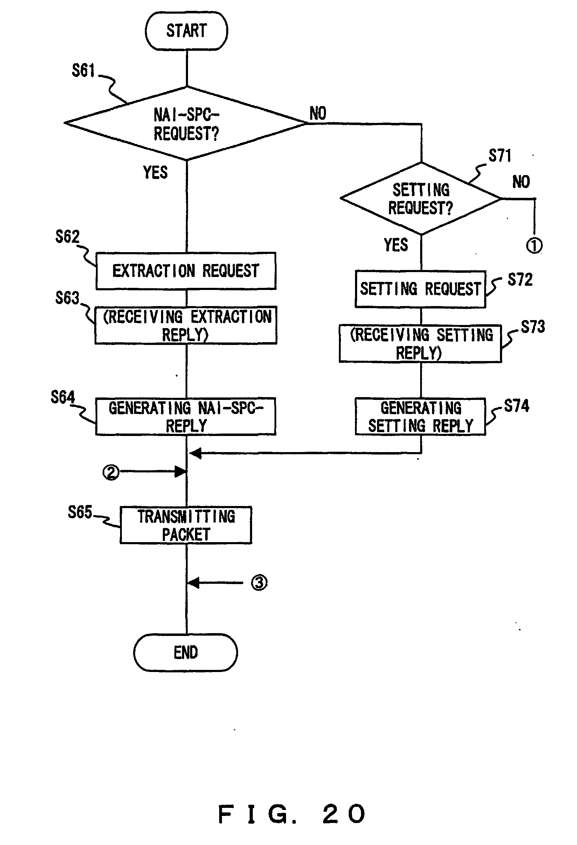

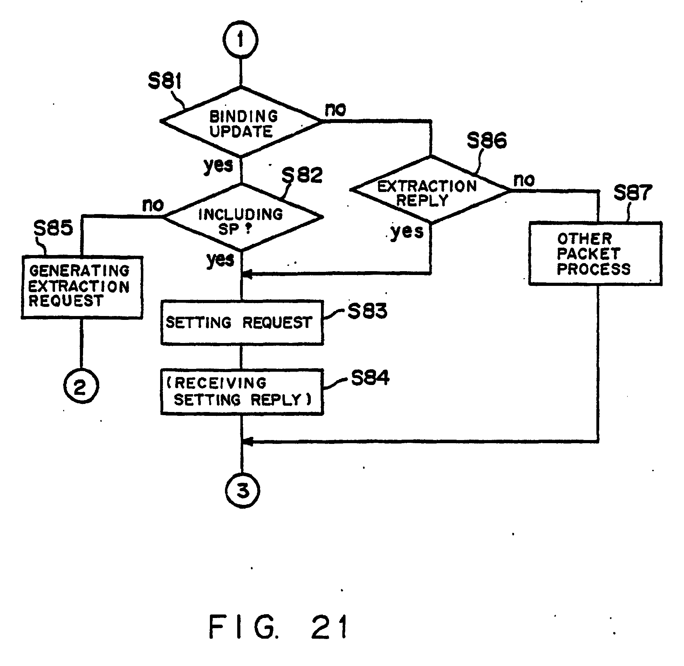

FIGS. 20 and 21 are flowcharts of the operations of the protocol control unit 202 of the home agent or a mobility anchor point. This process is performed when a message is received from the network interface 201.

In step S61, it is checked whether or not an NAI-SPC request has been received. The data structure of the NAI-SPC request is shown in FIG. 71. When the NAI-SPC request is received, a request to extract a corresponding service profile is issued to the service data management unit 203 in step S62. Then, in step S63, upon receipt of a service profile together with an extraction reply, an NAI-SPC reply is generated in step S64. The NAI-SPC reply includes the service profile received in step S63.

In step S65, a packet storing a generated message is passed to the network interface 201, thereby transmitting the generated message to the network.

In step S71, it is checked whether or not a setting request has been received. A setting request includes a corresponding service profile, and is realized by an HHR message of the DIAMETER protocol according to the embodiment of the present invention

When a setting request is received, the service data management unit 203 is requested in step S72 to set in the service specification data 204 the service profile contained in the setting request. If a setting reply corresponding to the above mentioned setting request is received in step S73, a setting reply message is generated in step S74. The setting reply message is an HHA message in the DIAMETER protocol.

In step S81, it is checked whether or not binding update message has been received. If binding update message has been received, it is checked in step S82 whether or not the binding update message includes the service profile of the IPv6 host.

When the binding update message includes the service profile of the IPv6 host, the processes in steps S83 and S84 are performed. That is, the service data management unit 203 is requested to set in the service specification data 204 the service profile contained in the message, and a corresponding setting reply is received. On the other hand, if the binding update message does not include the service profile of the IPv6 host, an extraction request is generated in step S85. This extraction request is realized by the ASR message shown in FIG. 69A.

It is checked in step S86 whether or not an extraction reply has been received. The extraction reply is realized by the ASA message shown in FIG. 69B. The extraction reply stores a service profile extracted according to the extraction request generated in step S85. When the extraction reply is received, the processes in steps S83 and S84 are performed.

If a received packet does not store an NAI-SPC request, a setting request, binding update message, or an extraction reply, other processes are performed in step S87.

Thus, the protocol control unit 202 generates a corresponding message according to a received message, and transmits a request relating to extracting/setting a corresponding service profile to the service data management unit 203 as necessary. When it obtains the service profile, it transmits the service profile together with the generated message to the corresponding entity.

The operation of the service data management unit 203 of a home agent or a mobility anchor point is basically the same as the operation of the service data management unit 103 of the AAA server shown in FIG. 17. Therefore, the explanation is omitted here.

### Configuration and Operation of Edge Node and Gateway Edge Node

An edge node is an IPv6 router device located at the edge of a domain. The edge node according to the embodiment has the following four functions in addition to a general routing functions.
(1) Function of caching service information (service profile) delivered from the AAA server when an IP address is assigned to a subscriber terminal, and host address information generated according to the service information.
(2) Function of obtaining the host address information and/or service information of a correspondent terminal when communications of a subscriber terminal is started.
(3) Function of performing service control by enabling service information held in advance.
(4) Function of stopping service control by nullifying or deleting service information after completion of transmitting data of a subscriber terminal.

A gateway edge node is an IPv6 router device located at the gateway of each provider network. The gateway edge node according to the embodiment has the above mentioned functions (1) through (4) of the edge node in addition to the general gateway functions.

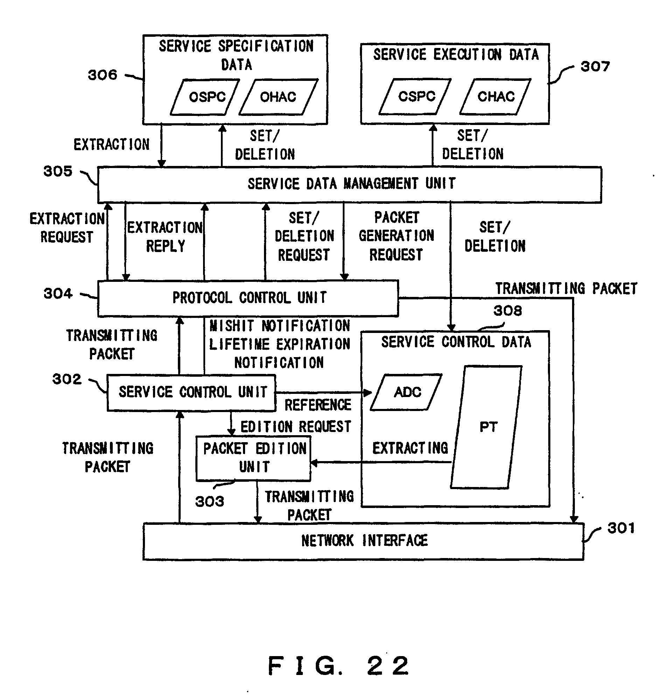

FIG. 22 is a function block diagram of an edge node and a gateway edge node.

A network interface 301 terminates the line connected to the IPv6 network.

Upon receipt of a packet through the network interface 301, a service control unit 302 checks whether or not the IPv6 address of the source host and the IPv6 address of the destination host of the packet are cached in the address cache (ADC) in a service control data 308. If both of the IPv6 addresses of the hosts have been cached, it is determined that the service information for the communications between the hosts can be effective, and the service control unit 302 requests a packet edition unit 303 to perform the service. On the other hand, if the IPv6 address of at least one of the source host and the destination host has not been cached, the packet received through the network interface 301 is transmitted to a protocol control unit 304, and a hit miss notification is transmitted to a service data management unit 305. In addition, the address cache (ADC) is periodically monitored, and the service data management unit 305 is notified of the expiration of the lifetime when the expiration of the lifetime set for each IPv6 address is detected. The address checking process and the lifetime counting process depend on the configuration of the address cache (ADC).

Upon receipt of a packet through the service control unit 302, the packet edition unit 303 extracts the service information (service profile) corresponding to the source host and the destination host of the packet from the policy table (PT) in the service control data 308, and provides the service according to the service information. Then, as necessary, the packet is transmitted to the network through the network interface 301.

The protocol control unit 304 analyzes a packet received through the service control unit 302, and performs the process corresponding to the type of the packet. Practically, if the received packet includes a message relating to the present embodiment, then the protocol control unit 304 requests the service data management unit 305 to access (extract, set, and delete various information) service specification data 306, and access (set and delete various information) service execution data 307 and the service control data 308.

In response to the request from the protocol control unit 304, the service data management unit 305 accesses (extract, set, and delete various information) the service specification data 306, and accesses (set and delete various information) the service execution data 307 and the service control data 308. Upon receipt of a hit miss notification from the service control unit 302, the service data management unit 305 requests the protocol control unit 304 to generate an NAI-SPC request message so as to obtain the host address information and/or service information about the destination host. On the other hand, upon receipt of a lifetime expiration notification, the service data management unit 305 nullifies or deletes the corresponding information in the service execution data 307 and the service control data 308. The setting process and the deleting process of the service execution data 307 and the service control data 308 depend on the configuration of the address cache (ADC).

The service specification data 306 comprises an original service profile cache (OSPC) for storing the service information delivered from the AAA server when an address is assigned to the IPv6 host accommodated by the node, and an original host address cache (OHAC) for storing the host address information about the IPv6 host. The configuration of the service specification data 306 is basically the same as the service specification data 105 in the AAA server.

When the IPv6 host accommodated by this node communicates with other IPv6 hosts, the service execution data 307 comprises a communicating service profile cache (CSPC) for storing the service information (service profile) about the hosts, and a communicating host address cache (CHAC) for storing the host address information about the hosts.

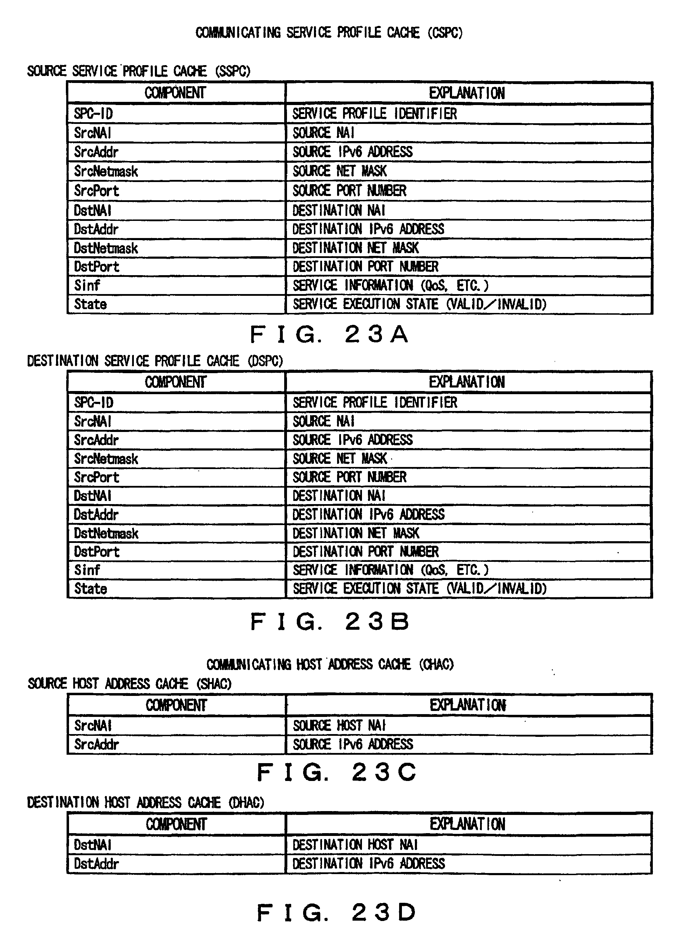

FIGS. 23A and 23B show examples of a source service profile cache (SSPC) and a destination service profile cache (DSPC) in the communicating service profile cache (CSPC) respectively. A "service profile identifier" refers to an identifies a service profile generated for each IPv6 host and service. For the "source NAI" through "service information", the information stored in the service specification data 306 is basically stored as is. The "service execution state" indicates whether or not the "source NAI" through "service information" set in the communicating service profile cache (CSPC) are available.

FIGS. 23C and 23D show examples of a source host address cache (SHAC) and a destination host address cache (DHAC) in the communicating host address cache (CHAC), respectively. These caches store the correspondence between the NAI of the source IPv6 host and the source IPv6 address, and the correspondence between the NAI of the destination IPv6 host and the destination IPv6 address.

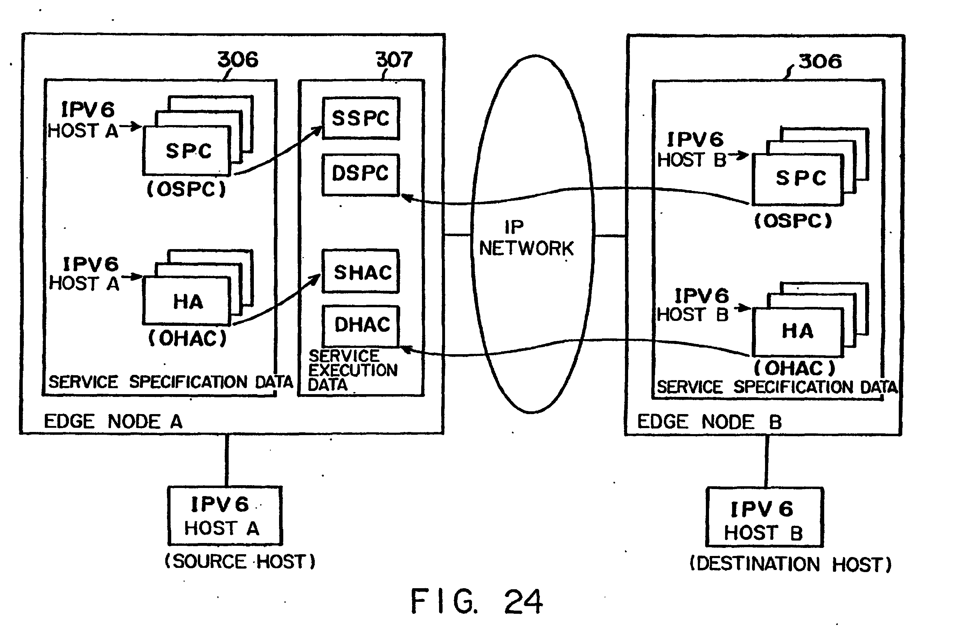

FIG. 24 shows the method of generating the service execution data 307. In this example, it is assumed that a packet is transferred from the IPv6 host-A accommodated by the edge node-A to the IPv6 host-B accommodated by the edge node-B. Furthermore, the case in which the service execution data 307 of the edge node-A is set is described below.

The service profile of the IPv6 host-A, which is a source host, is set in the source service profile cache (SSPC). The service profile of the IPv6 host-A is stored in the service specification data 306 of the edge node-A accommodating the IPv6 host-A. Therefore, the service profile to be set in the source service profile cache (SSPC) is obtained from the service specification data 306 of the edge node-A.

On the other hand, the service profile of the IPv6 host-B, which is a destination host, is set in the destination service profile cache (DSPC). The service profile of the IPv6 host-B is stored in the service specification data 306 of the edge node-B accommodating the IPv6 host-B. Therefore, the service profile to be set in the destination service profile cache (DSPC) is obtained from the service specification data 306 of the edge node-B.

Similarly, the host address information to be set in the source host address cache (SHAC) is obtained from the service specification data 306 of the edge node-A, and the host address information to be set in the destination host address cache (DHAC) is obtained from the service specification data 306 of the edge node-B.

In the example shown in FIG. 24, the service execution data of the edge node accommodating the source host is set, but the service execution data can also be set in the edge node accommodating the destination host.

The service control data 308 comprises the policy table (PT) for caching the service information (service profile) enabled in the service execution data 307, and the address cache (ADC) for caching the IPv6 address of the IPv6 host corresponding to the service information enabled in the service execution data 307. The address cache (ADC) can be configured such that a source address and a destination address are individually managed, and can also be configured such that the combination of a source address and a destination address is managed corresponding to each service.

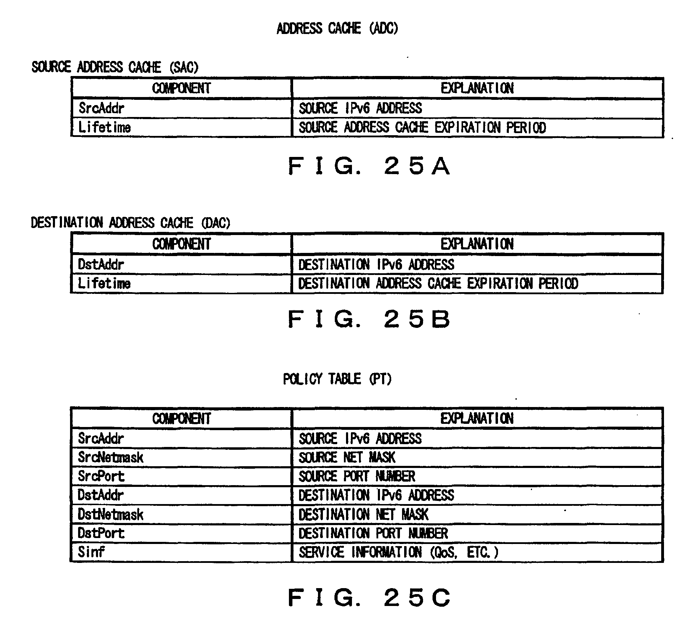

FIGS. 25A through 25C show examples of a source address cache (SAC), a destination address cache (DAC), and a policy table (PT) in a case where the IPv6 addresses of the source host and the destination host are individually managed. In this case, the lifetime of each of the source IPv6 addresses and the destination IPv6 addresses is managed.

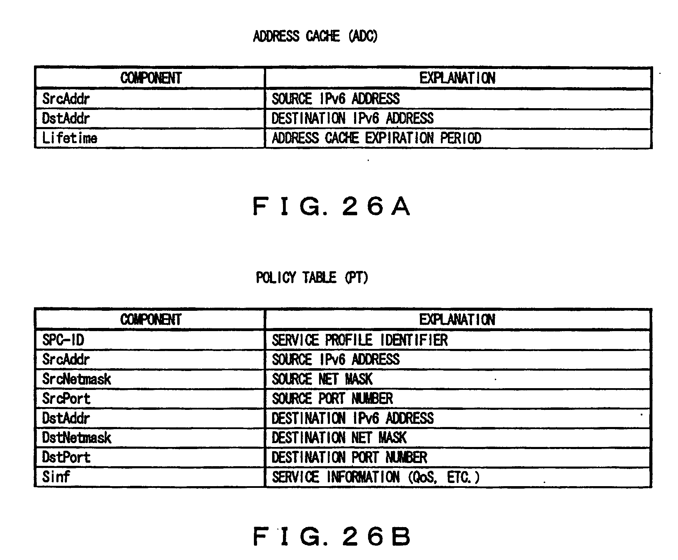

FIGS. 26A and 26B show examples of the address cache (ADC) and the policy table (PT) in a case where a combination of the IPv6 addresses of a source host and a destination host is managed for each service. In this case, the policy table (PT) is managed using a service profile identifier as a key for identification of a combination of a source IPv6 host and a destination IPv6 host.

The configuration for individual managing a source address and a destination address has a reduced size of memory for generating the address cache (ADC). On the other hand, the configuration for managing a combination of a source address and a destination address for each service shortens a retrieval time for the address cache (ADC).

However, as described above, a service profile of a source host and a service profile of a destination host in the communications can be set in the service execution data 307. For example, in FIG. 24, a service profile specified for the IPv6 host for the service relating to the transfer of a packet from the IPv6 host-A to the IPv6 host-B, and a service profile specified for the IPv6 host-B for the same service are stored in the service execution data 307 of the edge node-A. That is, two sets of service profiles are set for one service in the service execution data 307.

Therefore, to use one set of service profile for one service, the edge node enables a service profile of the highest priority, and other service profiles are nullified. The service profile enabled by the service execution data 307 is recorded in the policy table (PT) of the service control data 308.

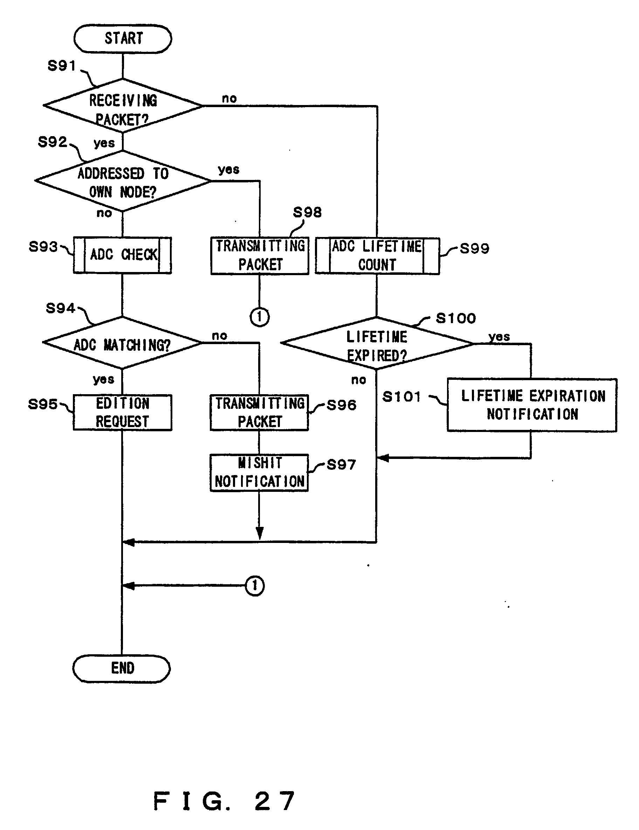

FIG. 27 is a flowchart of the operations of the service control unit 302 of an edge node or a gateway edge node. This process is performed at predetermined intervals.

In step S91, it is checked whether or not a packet has been received through the network interface 301. In step S92, it is checked whether or not the destination of a received packet is the IPv6 host accommodated by this edge node. If the destination of the received packet is the IPv6 host accommodated by this edge node, then the packet is transmitted to the protocol control unit 304 in step S98.

If the destination of the received packet is not the IPv6 host accommodated by this edge node, then it is checked in steps S93 and S94 whether or not the source address and the destination address of the packet are stored in the address cache (ADC) of the service control data 308. If there is a hit in the address cache (ADC), then the packet is edited according to the policy table (PT) of the service control data 308 in step S95. The "edit" includes the process of rewriting the header of a packet. On the other hand, if there is no hit in the address cache (ADC), then the packet is passed to the protocol control unit 304 in step S96. Furthermore, in step S97, a hit miss notification is transmitted to the service data management unit 305.

If no packet is received ("NO" in step S91), the lifetime (expiration period) managed in the address cache (ADC) of the service control data 308 is checked. If the lifetime of the source address or the destination address is over, a lifetime expiration notification is transmitted to the service data management unit 305. On the other hand, if the lifetime remains, then step S101 is omitted. The lifetime of each IPv6 address managed in the address cache (ADC) of the service control data 308 is periodically decremented.

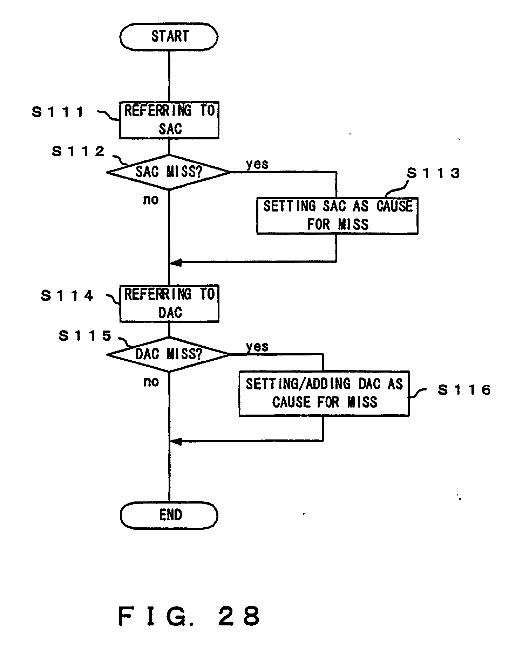

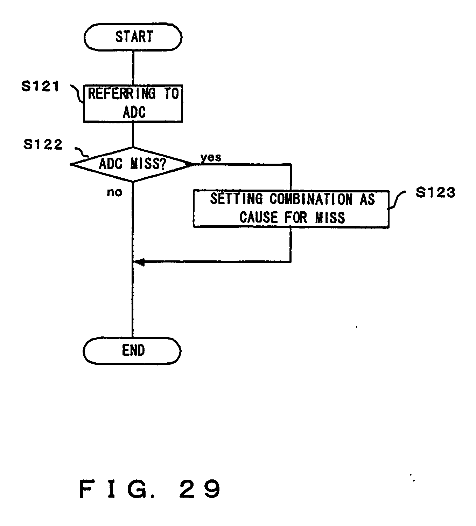

FIGS. 28 and 29 are flowcharts of the process of checking the address cache, and corresponds to step S93 shown in FIG. 27. FIG. 28 is a flowchart of individually managing the source address and the destination address, and the address cache shown in FIGS. 25A and 25B is checked. FIG. 29 is a flowchart of managing a combination of a source address and a destination address corresponding to each service, and the address cache shown in FIG. 26A is checked.

In FIG. 28, it is checked in steps S111 and S112 whether or not the source address set in the header of the received packet is stored in the source address cache (SAC) in the address cache (ADC) of the service control data 308. If there is no hit in the source address cache (SAC), a hit miss notification message is generated and the cause of the hit miss for the message is written in step S113. If there is a hit in the source address cache (SAC), step S113 is omitted.

Similarly, it is checked in steps S114 and S115 whether or not the destination address set in the header of the received packet is stored in the destination address cache (DAC). If there is no hit in the destination address cache (DAC), then the cause of the hit miss for the hit miss notification message is written in step S116.

In FIG. 29, it is checked in steps S121 and S122 whether or not the combination of the source address and the destination address set in the header of the received packet is stored in the address cache (ADC) of the service control data 308. If there is no hit in the address cache (ADC), a hit miss notification message is generated in step S123, and the cause for the hit miss corresponding to the message is written. If there is a hit in the address cache (ADC), then step S123 is omitted.

Thus, if there is a hit miss of at least one of the source address and the destination address, the hit miss notification message is generated.

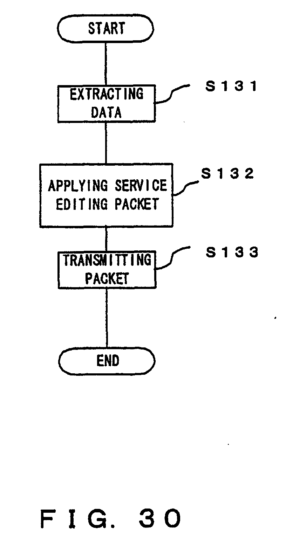

FIG. 30 is a flowchart of the operation of the packet edition unit 303 of an edge node or a gateway edge node. This process is performed when an edition request is received from the service control unit 302. The service control unit 302 outputs an edition request when a source address and a destination address of a received packet are stored in the address cache of the service control data 308.

In step S131, information (service profile, etc.) about a received packet is extracted from the policy table (PT) of the service control data 308. In step S132, a packet is edited according to the information extracted from the policy table. In step S133, the edited packet is transmitted through the network interface 301.

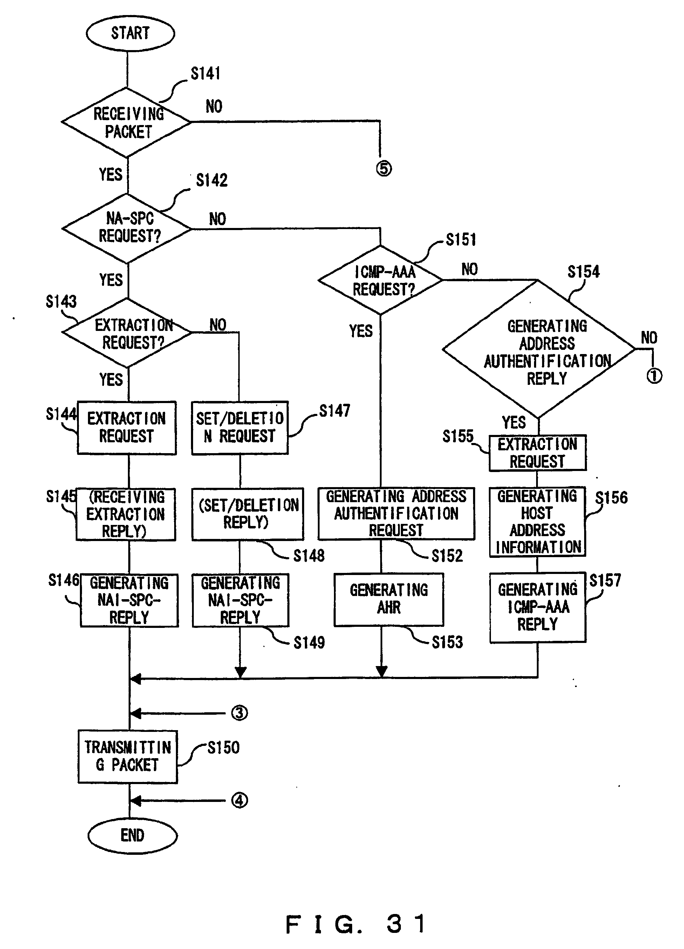

FIGS. 31 through 34 are flowcharts of the operations of the protocol control unit 304 of an edge node or a gateway edge node. This process is performed when a packet is received from the service control unit 302 or a packet generation request is received from the service data management unit 305.

In step S141, it is checked whether or not a packet is received from the service control unit 302. In step S142, it is checked whether or not an NAI-SPC request message is included in the received packet. If the received packet includes an NAI-SPC request message, then it is checked in step S143 whether or not the message includes an extraction request.

If an extraction request is included in the NAI-SPC request message, then the extraction request is transmitted to the service data management unit 305 in step S144. The extraction request requests a corresponding service profile and/or host address information to be extracted from the service specification data 306. In step S145, a corresponding service profile and/or host address information is received from the service specification data 306. In step S146, an NAI-SPC reply message is generated. This message stores the service profile and/or host address information obtained in step S145. In step S150, a packet storing the generated message is transmitted.

If an extraction request is not included in the NAI-SPC request message, then a setting request or a deletion request is transmitted to the service data management unit 305 in step S147. The setting request is a request to set the service profile and/or host address information transmitted together with the NAI-SPC request message in the service execution data 307. On the other hand, the deletion request is a request to delete the service profile and/or host address information specified in the NAI-SPC request message from the service execution data 307. Upon receipt of a setting reply or a deletion reply from the service data management unit 305 in step S148, an NAI-SPC reply message is generated in step S149.

In step S151, it is checked whether or not an ICMP-AAA request message is included in a received packet. If the ICMP-AAA request message is included in the received packet, then the IPv6 address to be assigned to the IPv6 host which has transmitted the ICMP-AAA request is determined in step S152, and an AHR message including an authentication request is generated.

In step S154, it is checked whether or not an address authentication reply message is included in the received packet. If the address authentication reply message is included in the received packet, then a request to set the service profile transmitted together with the address authentication reply message in the service specification data 306 is transmitted to the service data management unit 305 in step S155. In step S156, the host address information about the IPv6 host which has transmitted the ICMP-AAA request is generated. The host address information is set in the original host address cache (OHAC) of the service specification data 306. In step S157, the ICMP-AAA reply message to be transmitted to the IPv6 host which has transmitted the above mentioned ICMP-AAA request is generated.

In step S161, it is checked whether of not a binding update message is included in the received packet. If the binding update message is included in the received packet, then it is checked in step S162 whether or not the service profile of the corresponding IPv6 host is to be set in a mobility anchor point (MAP).

When a corresponding service profile is set in the mobility anchor point (MAP), a service profile is obtained in steps S163 and S164. The processes in steps S163 and S164 are the same as those in steps S144 and S145. Then, in step S165, a binding update message including the obtained service profile is generated.

In step S171, it is checked whether or not a deletion reply message is included in the received packet. The deletion reply message is realized by an STA message. In step S172, the service data management unit 305 is requested to delete service profile and/or host address information corresponding to the deletion reply message.

Upon receipt of a deletion reply from the service data management unit 305 in step S173, it is checked in step S174 whether or not the service profile and/or host address information to be deleted exists in other edge nodes. If the service profile and/or host address information deleted in steps S172 and S173 has been transmitted to other edge nodes, then they are to be deleted. If the service profile and/or host address information has been transmitted from this edge node to other edge nodes, then the destination address is recorded as the "destination IPv6 address" of the service specification data 306 (FIG. 13B).

When there is service profile and/or host address information to be deleted in other edge nodes, then an NAI-SPC request message is generated in step S175. If there are no such information, then an AAA-Teardown reply message is generated in step S176.

In S181, it is checked whether or not an NAI-SPC reply message is included in a received packet. In step S182, it is checked whether or not a deletion reply is included in the received NAI-SPC reply message. If the deletion reply is included, then an AAA-Teardown reply message is generated in step S183. If no deletion reply is included, then a setting request is transmitted to the service data management unit 305 in steps S184 and S185. This setting request is issued to request a service profile and/or host address information transmitted together with the NAI-SPC reply message to be set in the service execution data 307.

In step S191, it is checked whether or not a setting request message is included in the received packet. In step S192, a setting request is transmitted to the service data management unit 305. Upon receipt of a setting reply from the service data management unit 305 in step S193, a setting reply message is generated in step S194.

In step S201, it is checked whether or not an AAA-Teardown request message is included in the received packet. If the AAA-Teardown request message is included, then a deletion request message is generated in step S202. The deletion request message is realized by an STR message.

If the received packet does not include an NAI-SPC request, an ICMP-AAA request, an address authentication reply, binding update information, a deletion reply, an NAI-SPC reply, a setting request, or an AAA-Teardown request, then other packet processes are performed in step S203.

In step S211, it is checked whether or not a packet generation request has been received from the service data management unit 305. If a packet generation request has been received, then a corresponding packet (including an NAI-SPC request, in this example) is generated in step S212.

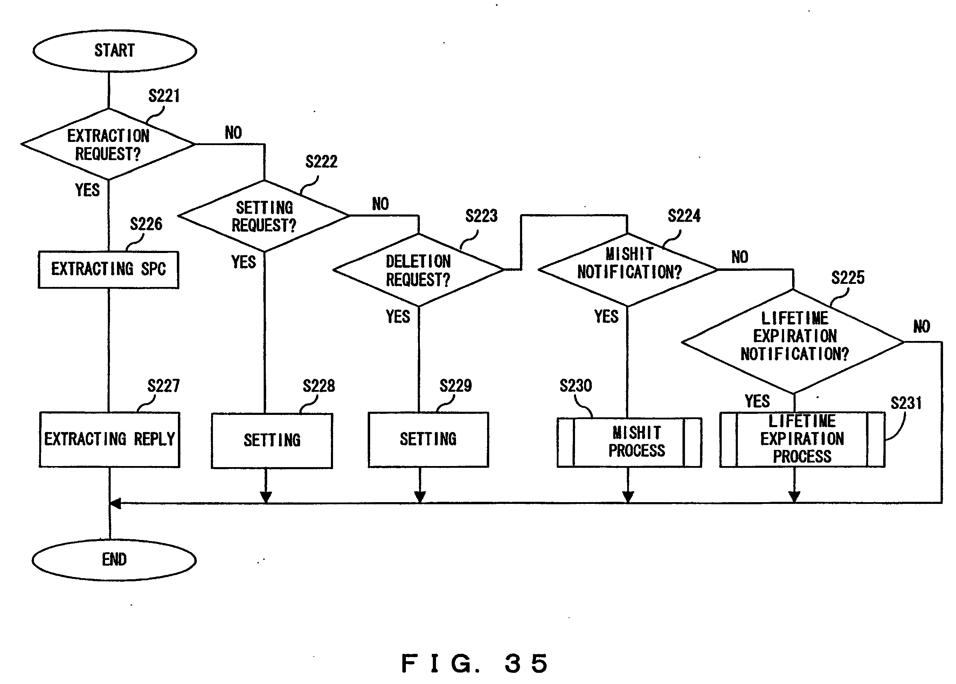

FIG. 35 is a flowchart of the operations of the service data management unit 305 of an edge node or a gateway edge node. This process is performed when a request is received from the protocol control unit 304 or a notification received from he service control unit 302.

In steps S221 through S225, the type of the request from the protocol control unit 304 or the type of the notification received from the service control unit 302 is detected.

If an extraction request is received, a specified service profile and/or host address information is extracted from the service specification data 306 in step S226. Then, in step S227, the extracted information is transmitted to the protocol control unit 304.

When a setting request is received, a service profile and/or host address information transmitted together with the request is set in the service specification data 306 or the service execution data 307 in step S228. A setting reply is returned to the protocol control unit 304 as necessary.

If a deletion request is received, then a specified service profile and/or host address information is deleted from the service specification data 306 or the service execution data 307 in step S229. Then, a deletion reply is returned to the protocol control unit 304.

If a hit miss notification is received, a corresponding hit miss process is performed in step S230. If a lifetime expiration notification is received, a corresponding lifetime expiration process is performed in step S231.

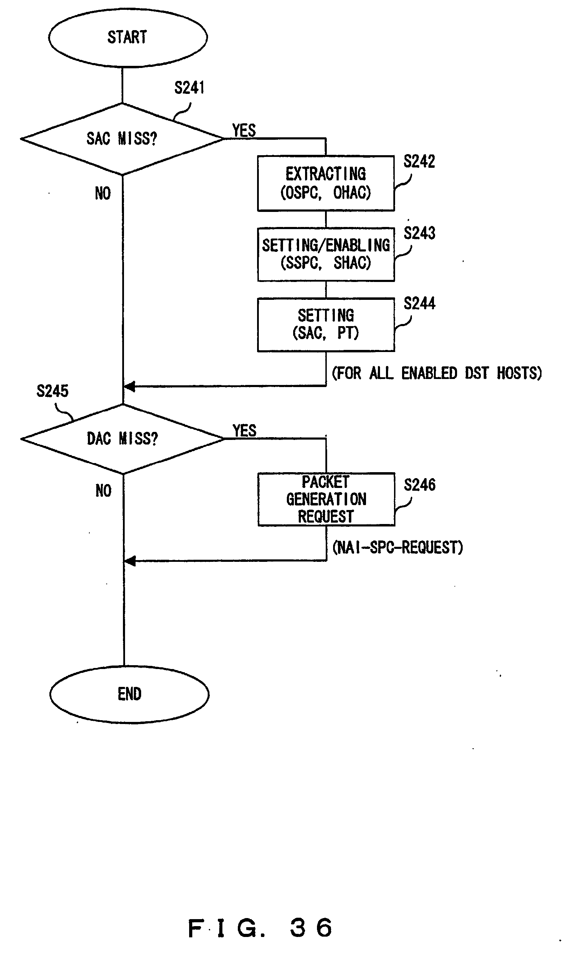

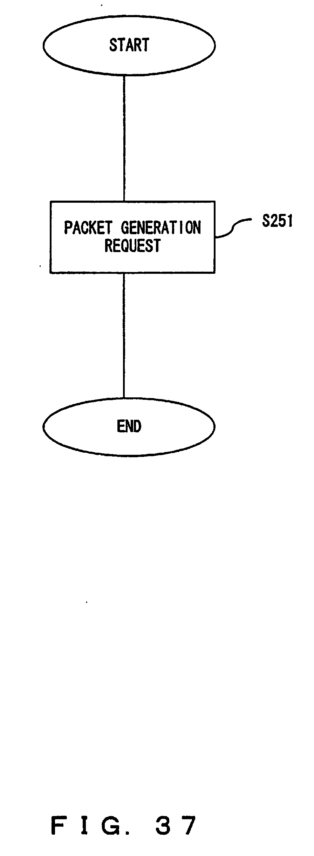

FIGS. 36 and 37 are flowcharts of the processes performed when a hit miss is detected in the address cache, and correspond to step S230 shown in FIG. 35. FIG. 36 is a flowchart of the process performed when source addresses and destination addresses are individually managed. FIG. 37 is a flowchart of the process performed when the combination of a source address and a destination address corresponding to each service is managed.

In FIG. 36, it is checked in step S241 whether or not a cache hit miss (source hit miss) has been found for a source IPv6 address. The type of cache hit miss is set in the hit miss notification generated by the service control unit 302. When a source hit miss is detected, the information corresponding to the source address of the received packet is extracted from the service specification data 306 in step S242. Practically, a corresponding service profile is extracted from the original service profile cache (OSPC), and corresponding host address information is extracted from the original host address cache (OHAC).

In step S243, the information extracted in step S242 is set in the service execution data 307. Practically, the service profile is set in the source service profile cache (SSPC), and the host address information is set in the source host address cache (SHAC). At this time, the service profile set in the source service profile cache (SSPC) is enabled. That is, in FIG. 23A, "service execution state = effective" is set. In step S244, the service profile enabled in step S243 is set in the policy table (PT) of the service control data 308, and the corresponding IPv6 address is set in the source address cache (SAC) in the address cache of the service control data 308.

In step S245, it is checked whether or not a cache hit miss (destination hit miss) has been detected for the destination IPv6 address. If a destination hit miss has been detected, a packet generation request is generated to generate a packet including an NAI-SPC request message. The packet generation request is transmitted to the protocol control unit 304. The NAI-SPC request message is issued to obtain a service profile and/or host address information corresponding to the destination address set in the received packet from the edge node accommodating the destination host.

If each service is managed by the corresponding combination of a source address and a destination address, then the above mentioned packet generation request is transmitted to the protocol control unit 304 when a hit miss is detected as shown in FIG. 37.

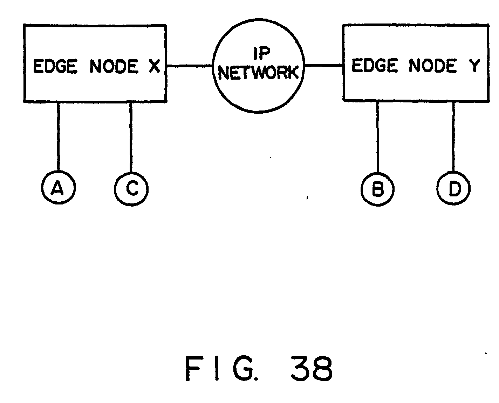

The processes in steps S242 through S244 shown in FIG. 36 can be performed not only on the service profile of the destination address set in the packet in which the hit miss has been detected, but also on other service profiles. For example, a network shown in FIG. 38 is assumed. In this network, the IPv6 host-A and the IPv6 host-C are accommodated in the edge node-X, and the IPv6 host-B and the IPv6 host-D are accommodated in the edge node-Y. Furthermore, it is assumed that data is being transmitted from the IPv6 host-C to the IPv6 host-D. In this case, in the service control data 308 of the edge node-X, "IPv6 host-C" is set in the source address cache while "IPv6 host-D" is set in the destination address cache.

With the above mentioned configuration, it is assumed that data transmission from the IPv6 host-A to the IPv6 host-B is started. If the address of the IPv6 host-A is not stored in the source address cache of the edge node-X, a source hit miss occurs, and the processes in steps S242 through S244 shown in FIG. 36 are performed. As a result, "IPv6 host-A" and "IPv6 host-C" are set in the source address cache of the edge node-X, and "IPv6 host-B" and "IPv6 host-D" are set in the destination address cache.

When the above mentioned source hit miss is detected, the service profile relating to the data transmission from the IPv6 host-A to the IPv6 host-B is enabled in the edge node-X. At this time, not only "IPv6 host-B" but also "IPv6 host-D" is set in the destination address cache. Therefore, if data transmission is started from the IPv6 host-A to the IPv6 host-D, there is no hit miss in the edge node-X. That is, in this case, it is necessary for the service profile relating to the data transmission from the IPv6 host-A to the IPv6 host-D to be set in the policy table (PT) of the service control data 308. Therefore, in the edge node-X, when the above mentioned source hit miss occurs a service profile relating to the communications from the IPv6 host-A to each destination address set in the destination address cache is to be enabled.

In addition, in steps S242 through S244 in FIG. 36, one of the service profiles is enabled when two or more service profiles are set for one service in service execution data 307. For example, in the example shown in FIG. 24, a service profile specified for the IPv6 host-A and a service profile specified for the IPv6 host-B are stored in the service execution data 307 of the edge node-A for the service relating to the packet transfer from the IPv6 host-A to the IPv6 host-B. The service profile for the former is extracted from the service specification data 306 of the edge node-A, and the service profile of the latter is obtained from the edge node-B. In this case, one of these two service profiles is enabled. When a plurality of service profiles are set for one service, the process of enabling one service profile from the plurality of service profiles is hereinafter referred to "merging".

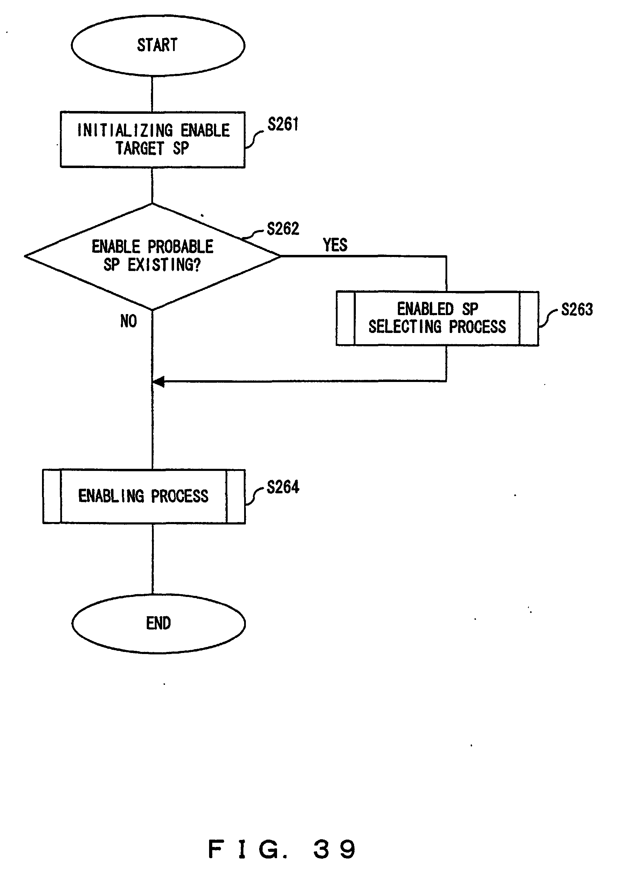

FIG. 39 is a flowchart of the process of merging service profiles. In step S261, a service profile to be enabled (target service profile) is initialized. Practically, the corresponding area in the service execution data 307 is cleared. In step S262, it is checked whether or not there is another service profile (probable service profile) specifying the same service as the target service profile. If there is the probable service profile, then one service profile is selected from among the target service profile and the probable service profiles in step S263. In step S264, the service profile selected in step S263 is enabled.

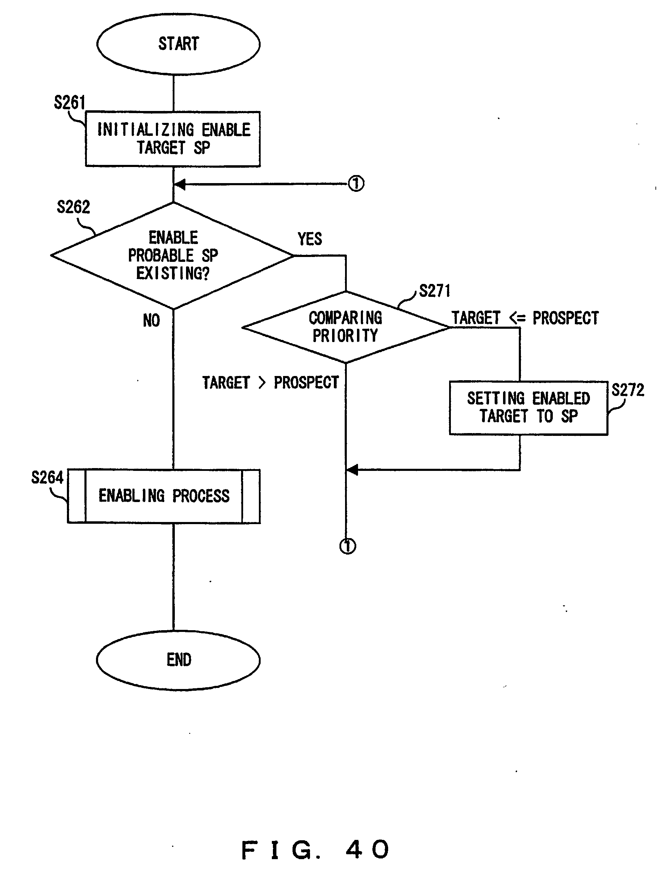

FIG. 40 is a flowchart of the embodiment of the selecting process shown in FIG. 39. That is, step S263 shown in FIG. 39 is described as steps S271 and S272. In this embodiment, it is assumed that a priority is set for each service profile.

In step S271, the priority of the target service profile is compared with the priority of the probable service profile. If the priority of the target service profile is higher, then control is returned to step S262. If the priority of the probable service profile is higher, the probable service profile is defined as a target service profile, and control is returned to step S262. By performing the processes in step S271 and S272 on all probable service profiles, the service profile having the highest priority is selected. Therefore, in step S264, the service profile having the highest priority is enabled.

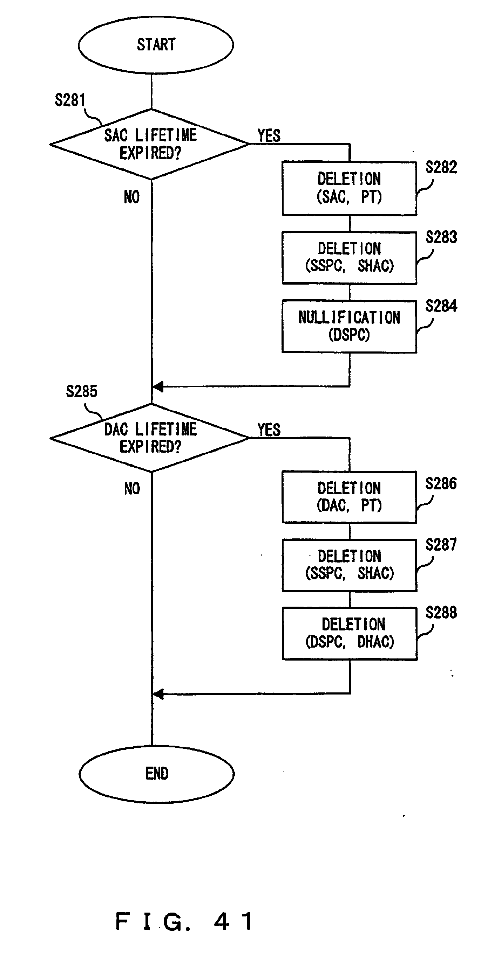

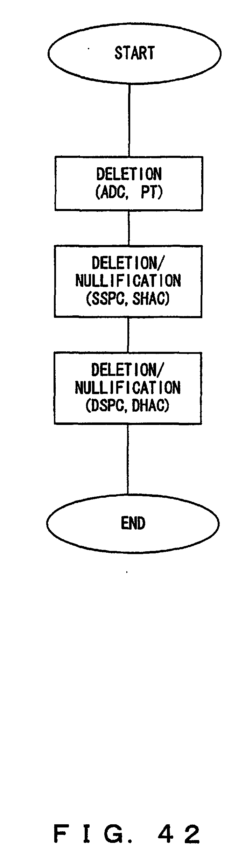

FIGS. 41 and 42 are flowchart of the processes performed when the lifetime of the IPv6 address expires, and corresponds to step S231 shown in FIG. 35. FIG. 41 is a flowchart of individually managing source addresses and destination addresses. FIG. 42 is a flowchart of managing each service by a combination of a source address and a destination address.

In step S281 in FIG. 41, it is checked whether or not a lifetime has expired for the source address cache (SAC) in the service control data 308. Whether the lifetime has expired in the source address cache or in the destination address cache is set in the lifetime expiration notification generated by the service control unit 302.

When a lifetime expiration occurs in the source address cache, the information about the IPv6 address whose lifetime expiration has been detected is deleted from the policy table and the source address cache in the service control data 308. In step S283, the information about the IPv6 address whose lifetime expiration has been detected is deleted from the source service profile cache and the source host address cache in the service execution data 307. In step S284, in the destination service profile cache of the service execution data 307, the service profile corresponding to the IPv6 address whose lifetime has expired is nullified. For example, in the network shown in FIG. 38, assuming that the lifetime of the IPv6 address assigned to the IPv6 host-A has expired, the service profile of the IPv6 host-B and the IPv6 host-D is nullified.

The process performed when a lifetime has expired in the destination address cache is basically the same as the process performed when a lifetime has expired in the source address cache. However, when a lifetime expires in the destination address cache, the corresponding information is deleted from the destination service profile cache (DSPC) and the destination host address cache (DHAC) in step S288.

When each service is managed by the combination of a source address and a destination address, and when the lifetime of an IPv6 address expires, the corresponding information is deleted in the address cache (ADC) and the policy table (PT) of the service control data 308 as shown in FIG. 42, the corresponding information is deleted/nullified in the source service profile cache (SSPC) and the source host address cache (SHAC) of the service execution data 307, and the corresponding information is deleted/nullified in the destination service profile cache (DSPC) and the destination host address cache (DHAC) of the service execution data 307.

### Embodiments

Described below are embodiments of the operations in the service control network with the above mentioned configuration. The embodiments 1 through 7 below show the sequence of delivering service information corresponding to the host to a node on the communications path when an address of the IPv6 host is assigned or a binding update process is performed (FIGS. 7 and 8). The embodiments 8 through 12 show the sequence of the edge node, which performs service control, obtaining the host address information of a correspondent host and/or a service profile (FIG. 9). The embodiments 13 through 16 show the sequence of enabling predetermined service information in an edge node. The embodiments 17 through 21 show the sequence of nullifying the service information when the lifetime of an IPv6 address expires or when the communications of the IPv6 host terminate.

In the following embodiments, a DIAMETER protocol is used as an AAA protocol, but the present invention is not limited to this application.

### Embodiment 1

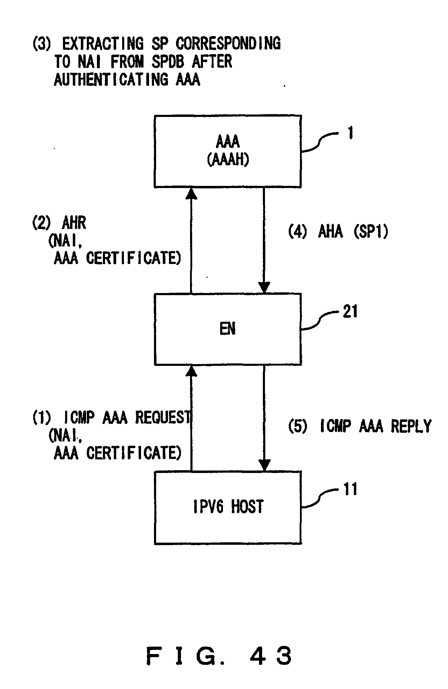

Embodiment 1 is based on the network configuration shown in FIG. 1. When the IPv6 host 11 issues a request for the assignment of an address in the home domain, AAA server (AAAH) 1 delivers service information to the edge node 21 accommodating the IPv6 host 11. The sequence of delivering service information is described below by referring to FIG. 43. The sequences of the present and subsequent embodiments 2 through 5 are assumed to start when the IPv6 host 11 or the mobile node 41 receives an ICMP advertisement message from the edge node 21 or 22.
(1) The IPv6 host 11 transmits an ICMP-AAA request message including an NAI of the IPv6 host 11 and an AAA certificate to the edge node 21.
(2) Upon receipt of the ICMP-AAA request message, the edge node 21 transmits an AHR (address authentication request) message including the NAI and the AAA certificate to the AAA server in the domain to which the edge node 21 belongs. That is, the AHR message is transmitted to the AAA server (AAAH) 1. This process is realized in steps S152 and S153 shown in FIG. 31.
(3) Upon receipt of the AHR message, the AAA server (AAAH) 1 authenticates the IPv6 host 11 based on the AAA certificate. Then, it accesses the service profile database (SPDB) 104 using the received NAI as a retrieval key, and extracts corresponding service information (service profile). This process is realized by step S3 shown in FIG. 14, and step S58 shown in FIG. 17.
(4) The AAA server (AAAH) 1 transmits an AHA (authentication reply) message including the service profile extracted in (3) above. This process is realized in steps S7 and S9 shown in FIG. 14.
(5) Upon receipt of the AHA message, the edge node 21 sets the corresponding information in the service specification data 306 based on the received service profile. Practically, the received service profile is set in the original service profile cache (OSPC), and the host address information indicating the correspondence between the NAI of the IPv6 host 11 and the IPv6 address to be assigned to the IPv6 host 11 is set in the original host address cache (OHAC). Then, an ICMP-AAA reply message is transmitted to the IPv6 host 11. This process is realized in steps S154 through S156 shown in FIG. 31.

In this sequence, the edge node 21 accommodating the IPv6 host 11 obtains the service information about the IPv6 host 11. That is, when the IPv6 host 11 turns power on in the communications area of the edge node 21, or the IPv6 host 11 moves into the communications area of the edge node 21 from the communications area of another node, the service information about the IPv6 host 11 is set in the edge node 21. The edge node 21 holds the correspondence between the NAI of the IPv6 host 11 and the newly assigned IPv6 address. Therefore, the edge node 21 can provide a corresponding service for a packet transmitted and received by the IPv6 host 11.

### Embodiment 2

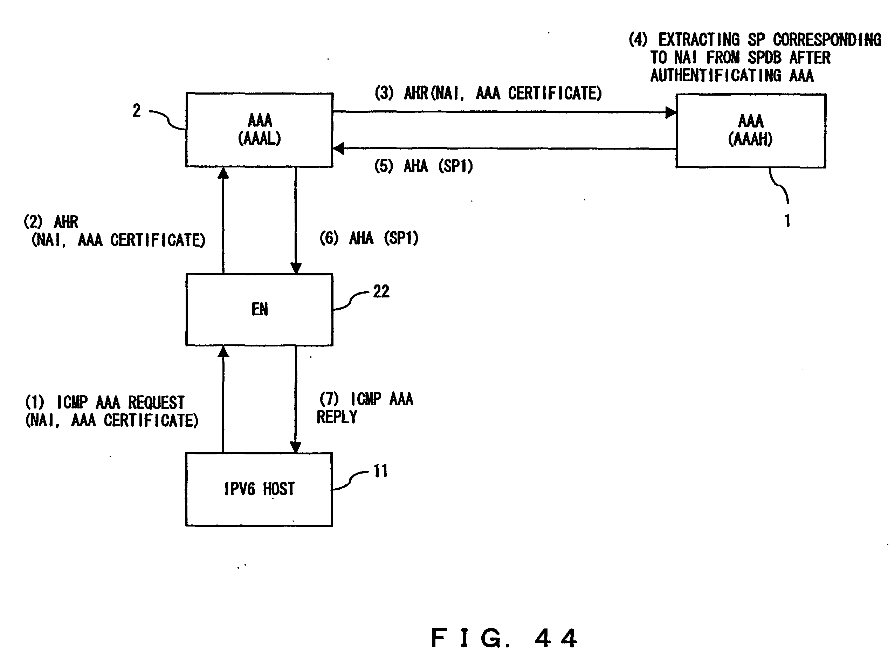

Embodiment is based on the network configuration shown in FIG. 2. When the IPv6 host 11 issues a request for the assignment of an address in the foreign domain, the AAA server (AAAH) 1 delivers service information to the edge node 22 accommodating the IPv6 host 11. The AAA server (AAAH) 1 is set in the home domain of the IPv6 host 11. The delivery sequence of service information is described below by referring to FIG. 44.
(1) As described in (1) above according to the embodiment 1, the IPv6 host 11 transmits an ICMP-AAA request message to the edge node 22.
(2) As described in (2) above according to the embodiment 1, the edge node 22 transmits an AHR message to the AAA server. However, the message is transmitted to the AAA server (AAAL) 2 which is an AAAL.
(3) When the AAA server (AAAL) 2 receives an AHR message, it recognizes the home domain of the IPv6 host 11 based on the NAI stored in the received message, and passes the AHR message to the AAA server (AAAH) 1. This process is performed by the determination "NO" in step S2 shown in FIG. 14.
(4) As described in (3) above according to the embodiment 1, the service profile of the IPv6 host 11 is extracted.
(5) As described in (4) above according to the embodiment 1, the AAA server (AAAH) 1 transmits an AHA message. The message is temporarily transmitted to the AAA server (AAAL) 2.
(6) The AAA server (AAAL) 2 passes the received AHA message to the edge node 22.
(7) As described in (5) above according to the embodiment 1, the edge node 22 transmits an ICMP-AAA reply message to the IPv6 host 11.

In the above mentioned sequence, although the IPv6 host 11 moves to a foreign domain, the service information about the Ipv6 host 11 is delivered to the edge node 22 accommodating the IPv6 host 11. Therefore, although the IPv6 host 11 moves to a foreign domain, it can be provided with same service as in the home domain.

### Embodiment 3

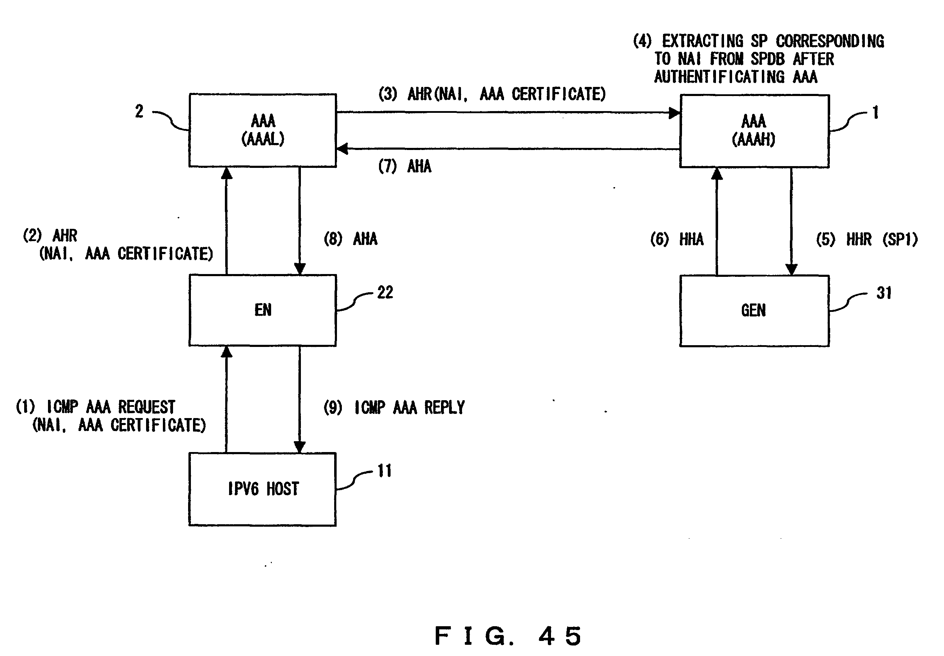

Embodiment 3 is based on the network configuration shown in FIG. 3. When the IPv6 host 11 issues a request for assignment of an address in a foreign domain, the AAA server (AAAH) 1 delivers service information to the gateway edge node 31 set in the home domain. Here, the AAA server (AAAH) 1 is provided in the home domain of the IPv6 host 11. The home domain of the IPv6 host 11 can provide a service specified in the contract for the IPv6 host 11, but a foreign domain to which the edge node 22 belongs cannot provide such a service. The sequence of delivering service information is described below by referring to FIG. 45.
(1) - (3) As described in (1) through (3) above according to the embodiment 2, the IPv6 host 11 transmits an ICMP-AAA request message. Upon receipt of the ICMP-AAA request message, the edge node 22 transmits an AHR message to the AAA server (AAAH) 1 which is an AAAH.
(4) As described in (4) above according to the embodiment 2, a service profile of the IPv6 host 11 is extracted.
(5) Since the above mentioned AHR message is transmitted from a foreign domain (no-service domain), the AAA server (AAAH) 1 transmits an HHR (setting request) message including a service profile extracted in (4) above to the gateway edge node 31 in the home domain. This process is realized in steps S6, S8, and S9 shown in FIG. 14.
(6) Upon receipt of the HHR message, the gateway edge node 31 sets the information corresponding to the service profile contained in the message in the service specification data 204. Practically, the received service profile is set in the original service profile cache (OSPC), and the host address information indicating the correspondence between the NAI of the IPv6 host 11 and the IPv6 address to be assigned to the IPv6 host 11 is set in the original host address cache (OHAC). Then, an HHA (setting reply) message is returned to the AAA server (AAAH) 1. This process is realized in steps S72 through S74 shown in FIG. 20.
(7) - (9) As described in (5) through (7) above according to the embodiment 2, the AHA message is transmitted from the AAA server (AAAH) 1 to the edge node 22 through the AAA server (AAAL) 2, and the ICMP-AAA reply message is transmitted from the edge node 22 to the IPv6 host 11. In this embodiment, since a foreign domain is a no-service domain, no service profile is delivered from the AAA server (AAAH) 1 to the edge node 22.

In this sequence, although the IPv6 host 11 moves to a no-service domain, the service information about the IPv6 host 11 is delivered to the gateway edge node 31 provided in the home domain. Therefore, for example, when communications are established between the IPv6 host 11 and the IPv6 host 12 in the network shown in FIG. 3, a service specified in the contract for the IPv6 host 11 is provided for the communications between the gateway edge node 31 and the IPv6 host 12.

### Embodiment 4

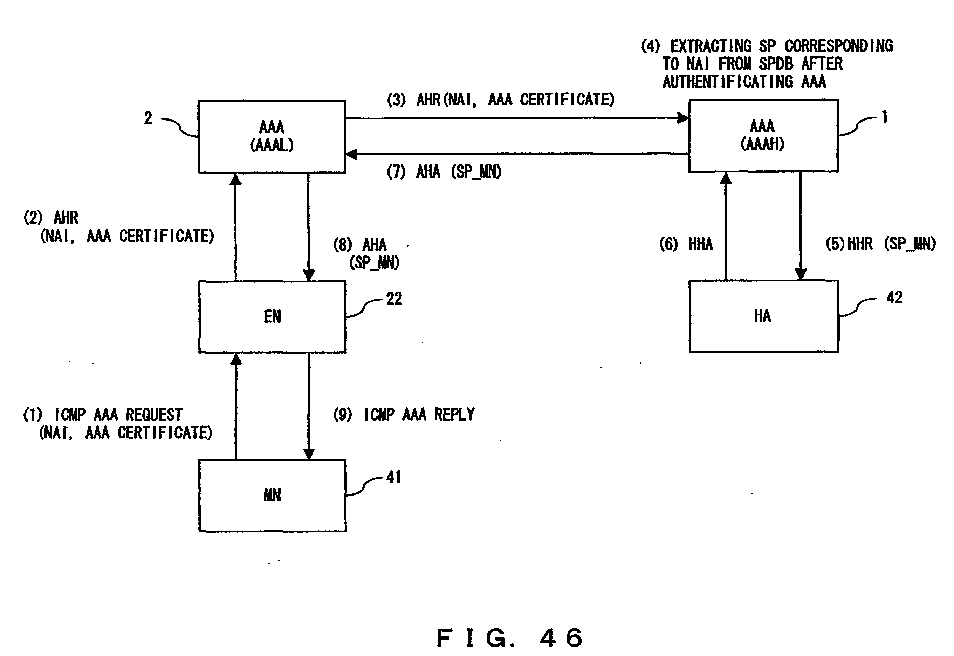

Embodiment 4 is based on the network configuration shown in FIG. 4. When the mobile node 41 issues a request for the assignment of an address in a foreign domain, the AAA server (AAAH) 1 delivers service information to the home agent 42 and the edge node 22 accommodating the mobile node 41. The sequence of delivering service information is described below by referring to FIG. 46.
(1) - (3) As described in (1) through (3) above according to the embodiment 3, the mobile node 41 transmits the ICMP-AAA request message. Upon receipt of the ICMP-AAA request message, the edge node 22 transmits the AHR message to the AAA server (AAAH) 1.
(4) As described in (4) above according to the embodiment 3, a service profile of the IPv6 host 11 is extracted.
(5) Upon receipt of the AHR message in the mobile IPv6 environment, the AAA server (AAAH) 1 transmits an HHR (setting request) message including a service profile extracted in (4) above to the home agent 42 managing the mobile node 41. This process is realized in steps S5, S8, and S9 shown in FIG. 14.
(6) Upon receipt of the HHR message, the home agent 42 sets the information corresponding to the service profile contained in the message in the service specification data 204. Practically, the received service profile is set in the original service profile cache (OSPC), and the host address information indicating the correspondence between the NAI of the mobile node 41 and the IPv6 address to be assigned to the mobile node 41 is set in the original host address cache (OHAC). Then, an HHA (setting reply) message is returned to the AAA server (AAAH) 1.
(7) - (9) As described in (7) through (9) above according to the embodiment 3, the AHA message is transmitted from the AAA server (AAAH) 1 to the edge node 22 through the AAA server (AAAL) 2, and the ICMP-AAA reply message is transmitted from the edge node 22 to the IPv6 host 11. In this embodiment, the service profile of the mobile node 41 is delivered together with the AHA message to the edge node 22.

In this sequence, in the mobile IPv6 environment, the service information of the mobile node 41 can be delivered to the home agent 42 and the edge node 22 accommodating the mobile node 11.

### Embodiment 5

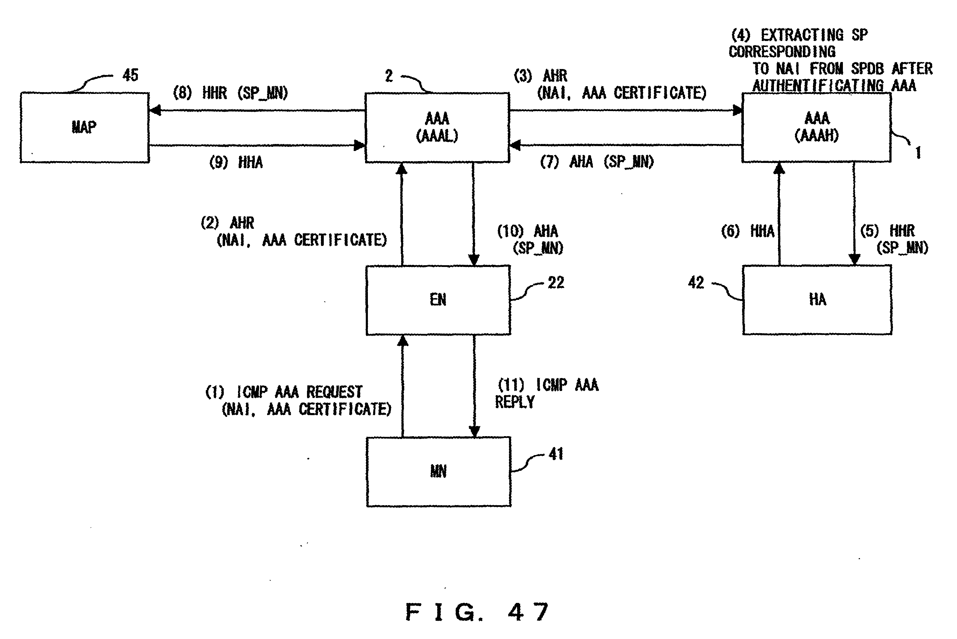

Embodiment 5 is based on the network configuration shown in FIG. 4. In the network, it is assumed that a hierarchical mobile IPv6 is applied. When the mobile node 41 issues a request for the assignment of an address in a foreign domain, the AAA server (AAAH) 1 delivers service information to the home agent 42, the mobility anchor point (MAP) 45 in the domain to which the mobile node 41 belongs, and the edge node 22 accommodating the mobile node 41. The sequence of delivering service information is describe below by referring to FIG. 47.
(1) - (7) The sequence is the same as in (1) through (7) according to the embodiment 4. That is, the ICMP-AAA request message is transmitted from the mobile node 41 to the edge node 22, and the AHR message is transmitted from the edge node 22 to the AAA server (AAAH) 1 through the AAA server (AAAL) 2. Then, the service information about the mobile node 41 is extracted in the AAA server (AAAH) 1. The service profile is delivered to the home agent 42 using the HHR message. In addition, the AHA message including the service profile of the mobile node 41 is transmitted from the AAA server (AAAH) 1 to the AAA server (AAAL) 2.
(8) Upon receipt of the AHA message, the AAA server (AAAL) 2 obtains the service profile of the mobile node 41 from the message. Then, it generates the HHR message including the service profile, and transmits it to the mobility anchor point (MAP) 45 in the same domain. This process is realized in steps S22 through S25 shown in FIG. 22.
(9) As described in (6) above according to the embodiment 4, the mobility anchor point (MAP) 45 receives the HHR message, and sets the information corresponding to the service profile included in the message in the service specification data 204. Then, it returns the HHA message to the AAA server (AAAL) 2. This process is realized in steps S72 through S74 shown in FIG. 20.
(10) Upon receipt of the HHA message, the AAA server (AAAL) 2 transfers the AHA message received from the AAA server (AAAH) 1 to the edge node 22.
(11) Upon receipt of the AHA message, the edge node 22 obtains the service profile of the mobile node 41, and transmits the ICMP-AAA reply message to the mobile node 41.

In this sequence, the service information about the mobile node 41 is delivered to the mobility anchor point (MAP) 45 provided in the foreign domain to which the mobile node belongs.

### Embodiment 6

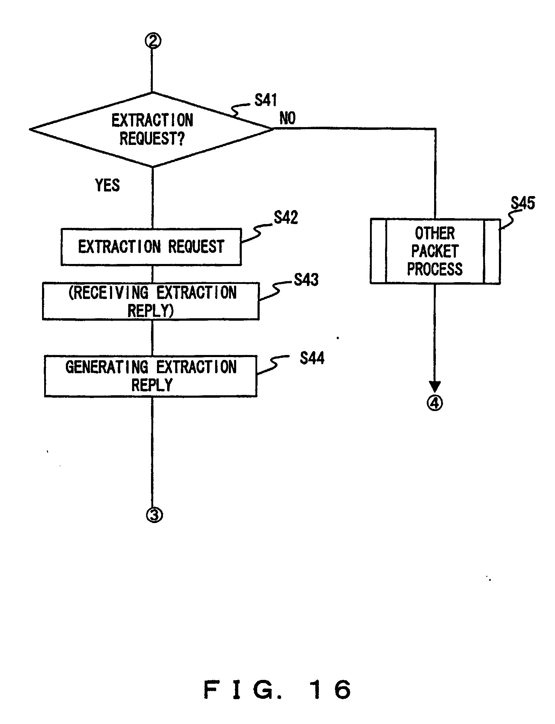

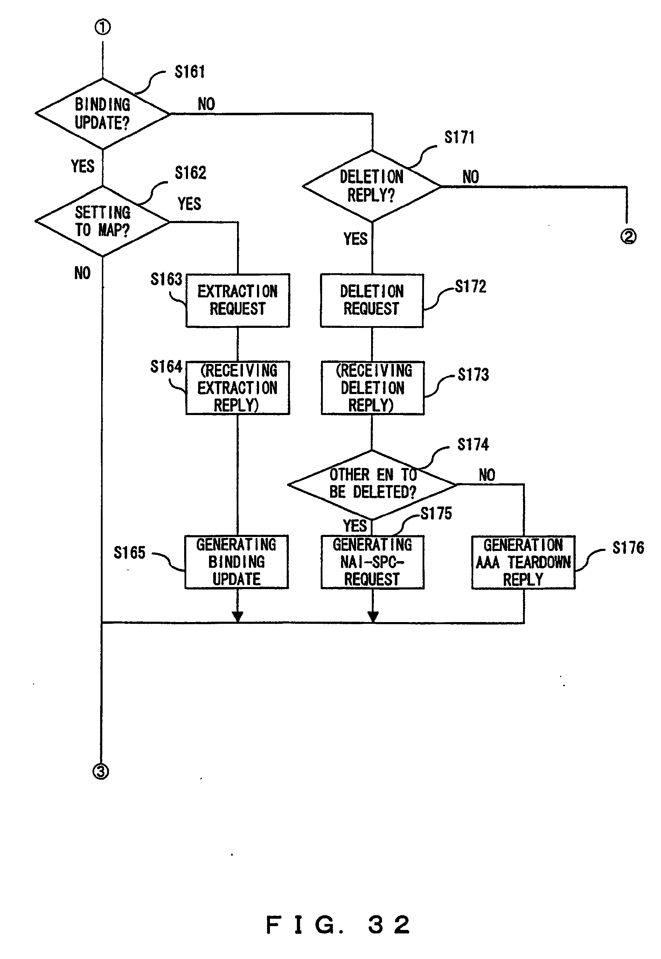

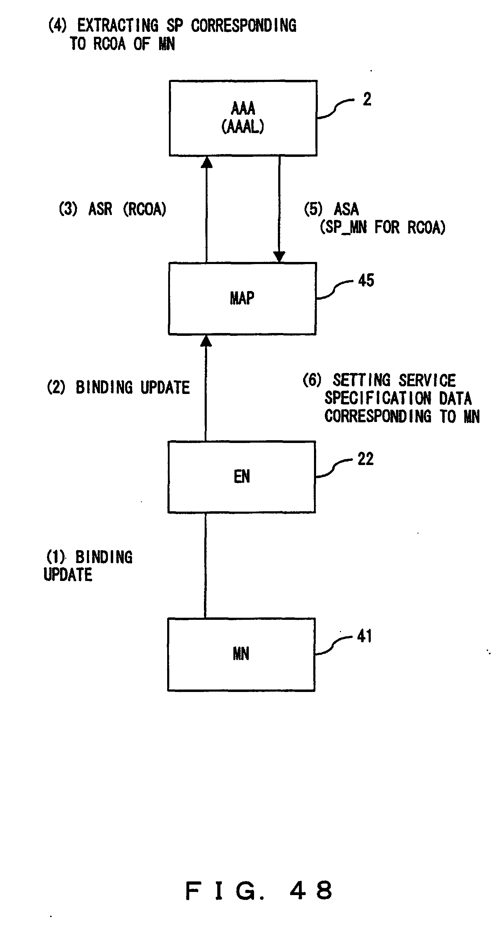

Embodiment 6 is based on the network configuration shown in FIG. 4. In this network, it is assumed that a hierarchical mobile IPv6 is applied, and the mobile node 41 belongs to a foreign domain. When the mobile node 41 issues a request for binding update in the foreign domain, the AAA server (AAAL) 2 delivers service information to the mobility anchor point (MAP) 45 managing the mobile node 41. The sequence of delivering the service information is described below by referring to FIG. 48. In this process, the AAA server (AAAL) 2 is assumed to have obtained the service information about the mobile node 41 in the sequence according to the embodiment 4 or 5.
(1) The mobile node 41 transmits a binding update message to the mobility anchor point (MAP) 45. The binding update message is used in recording the location of a mobile node.
(2) The edge node 22 transfers the binding update message from the mobile node 41 to the mobility anchor point 45. This process is performed by being determined "NO" in step S162 shown in FIG. 32.
(3) Upon receipt of the binding update message from the mobile node 41, the mobility anchor point 45 generates an ASR (extraction request) message including an RCOA (regional care-of-address) of the mobile node 41. The RCOA is an address for identification of the mobility anchor point managing the communications area to which the mobile node belongs. The ASR message is transmitted to the AAA server (AAAL) 2. This process is realized in step S85 in FIG. 21.
(4) Upon receipt of the ASR message, the AAA server (AAAL) 2 extracts the service profile corresponding to the RCOA of the mobile node 41 from the service specification data 105 set when the address of the mobile node 41 is assigned. This process is realized in steps S42 and S43 shown in FIG. 16.
(5) The AAA server (AAAL) 2 stores the service profile extracted in (4) above in an ASA (extraction reply) message, and transmits the message to the mobility anchor point 45. This process is realized in step S44 shown in FIG. 16.
(6) Upon receipt of the ASA message, the mobility anchor point 45 sets the information corresponding to the service profile included in the message in the service specification data 204 as described above in (6) according to the embodiment 4.

In this sequence, when the mobile node 41 issues a request for binding update in the foreign domain, the service information about the mobile node 41 can be delivered to the mobility anchor point without accessing the AAA server (AAAH) 1 provided in the home domain, thereby reducing the load on the AAA server (AAAH) 1.

### Embodiment 7

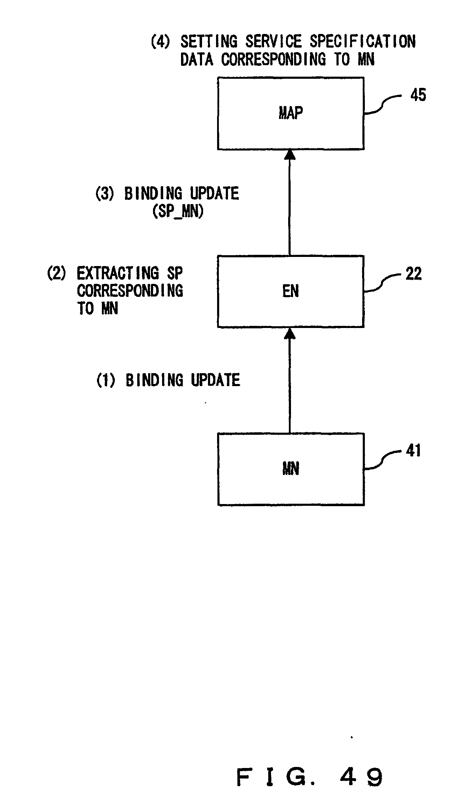

Embodiment 7 is based on the network configuration shown in FIG. 4. In this network, it is assumed that a hierarchical mobile IPv6 is applied, and the mobile node 41 belongs to a foreign domain. When the mobile node 41 issues a request for binding update in the foreign domain, the edge node 22 accommodating the mobile node 41 delivers service information to the mobility anchor point (MAP) 45 managing the mobile node 41. The sequence of delivering the service information is described below by referring to FIG. 49. The edge node 22 is assumed to have obtained the service information about the mobile node 41 in the sequence described above in the embodiment 4 or 5.
(1) The mobile node 41 transmits the binding update message to the mobility anchor point (MAP) 45.
(2) Upon receipt of the binding update message, the edge node 22 extracts a service profile of the mobile node 41 from the service specification data 306 set when an address is assigned to the mobile node 41. This process is realized in steps S162 through S164 in FIG. 32.
(3) The edge node 22 generates a binding update message including the service profile extracted in (2) above, and transmits the message to the mobility anchor point 45.
(4) Upon receipt of the binding update message, the mobility anchor point 45 sets the information corresponding to the service profile included in the message in the service specification data 204 as described above in (6) according to the embodiment 4.

According to this sequence, the service information about the mobile node 41 is delivered from the edge node 22 accommodating the mobile node 41 to the mobility anchor point 45 managing the mobile node 41 in the foreign domain without accessing the AAA server.

### Embodiment 8

Embodiment 8 is based on the network configuration shown in any of FIGS. 1 through 4. The IPv6 host 11 is accommodated by the edge node 22, and the IPv6 host 12 is accommodated by the edge node 21. The service profile and the host address information about the IPv6 host 11 are set in the edge node 22, and the service profile and the host address information about the IPv6 host 12 are assumed to have been set in the edge node 21. The procedure of setting the service profile and host address information about the IPv6 host in the edge node is described above in the embodiments 1, 2, 4, and 5. In the embodiments and the subsequent embodiments 9 and 10, the IPv6 host can be a mobile IPv6 terminal.

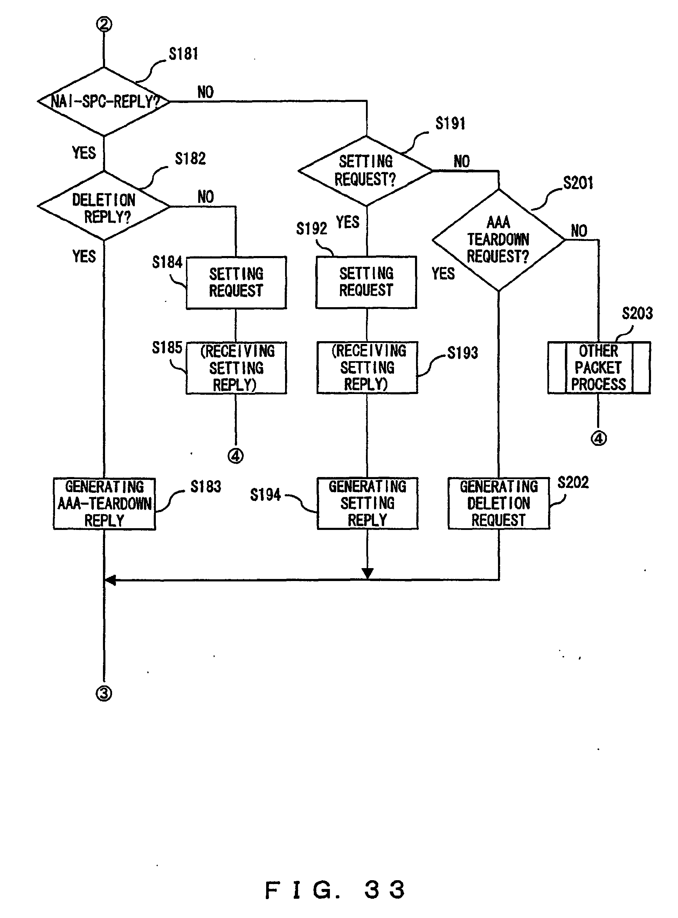

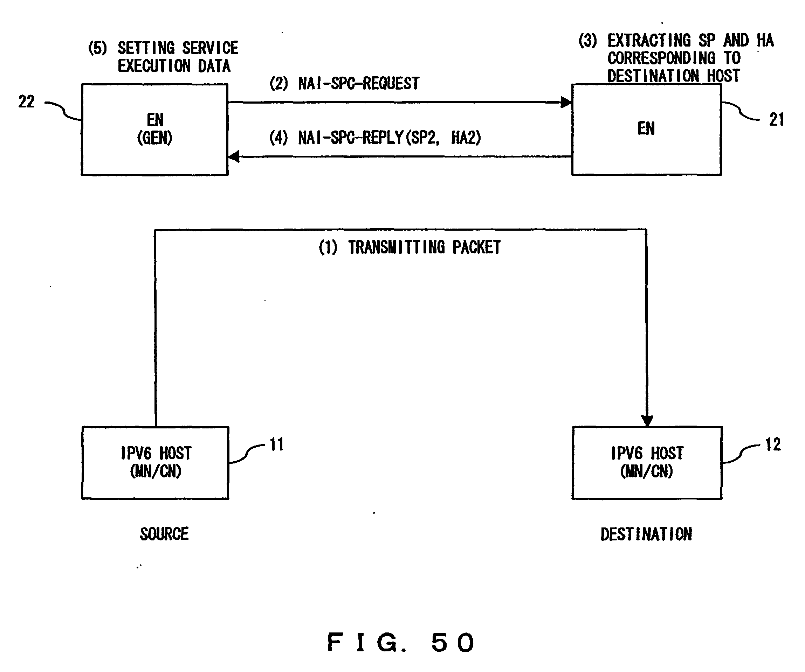

In the above mentioned network, when the transmission of a packet from the IPv6 host 11 to the IPv6 host 12 is started, the edge node 22 accommodating a source host (IPv6 host 11) obtains host address information and/or service profile of the destination host from the edge node 21 accommodating the destination host (IPv6 host 12). The sequence of transferring the host address information and/or service profile of the IPv6 host between edge nodes is described below by referring to FIG. 50.
(1) The IPv6 host 11 transmits a data packet to the IPv6 host 12.
(2) The edge node 22 relaying the data packet checks whether or not the source address and the destination address of the packet are stored in the address cache (ADC) of the service control data 308. In this example, it is assumed that the destination address has not been stored. In this case, the edge node 22 generates an NAI-SPC request message including an extraction request, and transmits the message to the destination address of the data packet. This process is realized in steps S93, S94, S96, and S97 shown in FIG. 27, in steps S114 through S116 shown in FIG. 28, in step S230 shown in FIG. 35, in step S246 shown in FIG. 36, and in step S212 shown in 34.
(3) Upon receipt of the NAI-SPC request message for the IPv6 host 12, the edge node 21 extracts the service profile and the host address information about the IPv6 host 12 from the service specification data 306 in response to the extraction request included in the message. Practically, the service profile and the host address information corresponding to the destination address of the NAI-SPC request message are extracted. This process is realized in steps S143 through S145 shown in FIG. 31, and steps S226 and S227 shown in FIG. 35.
(4) The edge node 21 generates an NAI-SPC reply message including the service profile and the host address information about the IPv6 host 12 extracted in (3) above, and transmits the message to the edge node 22. This process is realized in steps S146 and S150 shown in FIG. 31.
(5) Upon receipt of the NAI-SPC reply message, the edge node 22 extracts the service profile and the host address information about the IPv6 host 12 from the message, and sets them in the service execution data 307. This process is realized in step S184 shown in FIG. 33, and in step S228 shown in FIG. 35.

In this sequence, the edge node accommodating the source host can obtain the service profile and/or host address information about the destination host from the edge node accommodating the destination host.

### Embodiment 9

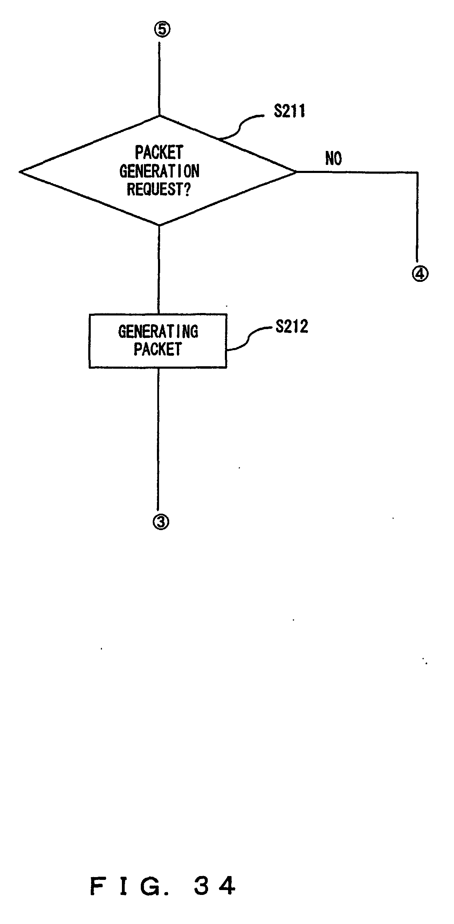

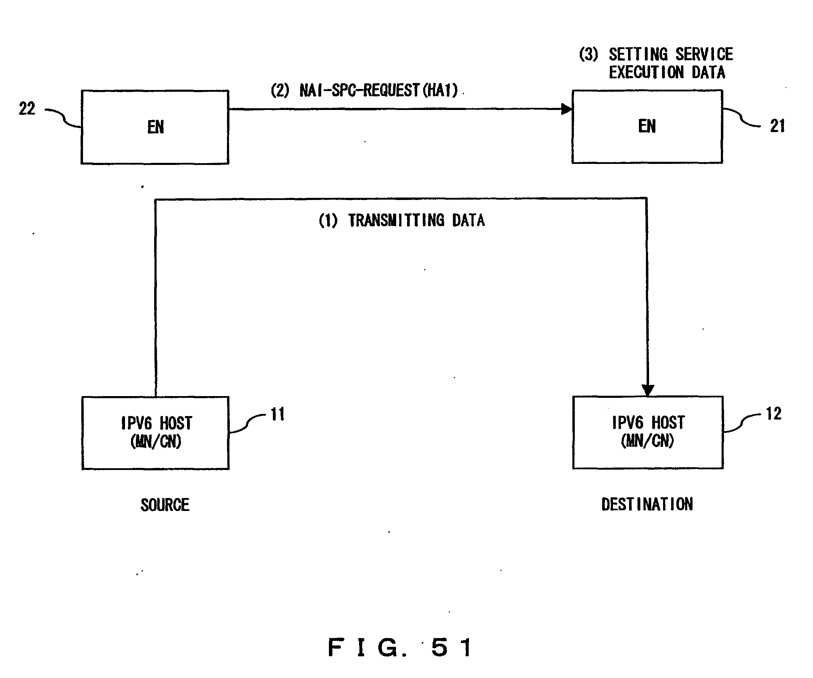

Embodiment 9 is based on the network configuration shown in any of FIGS. 1 through 4. The IPv6 hosts 11 and 12, and the edge nodes 21 and 22 are assumed to be the same as those according to the embodiment 8. When the transmission of a packet is started from the IPv6 host 11 to the IPv6 host 12, the host address information about the source host (IPv6 host 11) is transferred from the edge node 22 accommodating the source host to the edge node 21 accommodating the destination host (IPv6 host 12). The sequence of transferring the host address information about the IPv6 host between edge nodes is described below by referring to FIG. 51.
(1) A data packet is transmitted from the IPv6 host 11 to the IPv6 host 12.
(2) The edge node 22 relaying the data packet checks the address cache (ADC) of the service control data 308 in the same procedure as in (2) above according to the embodiment 8. In this example, it is assumed that the source address or the destination address has not been stored. In this case, the edge node 22 generates an NAI-SPC request message including the host address information about the IPv6 host 11 and a setting request, and transmits the message to the destination address of the data packet. These processes are realized in steps S93, S94, S96, and S97 shown in FIG. 27, in steps S111 through S116 shown in FIG. 28, in step S230 shown in FIG. 35, in the sequence shown in FIG. 36 or FIG. 37, and in step S212 shown in FIG. 34.
(3) Upon receipt of the NAI-SPC request message for the IPv6 host 12, the edge node 21 sets the host address information about the IPv6 host 11 included in the message in the service execution data 307. This process is realized in step S147 shown in FIG. 31, and in step S228 shown in FIG. 35.

In this sequence, the edge node accommodating the destination host can obtain the host address information about the source host from the edge node accommodating the source host. In the above embodiment, only the host address information about the source host is transmitted, but both of the service profile and the host address information about the source host can be transferred.

### Embodiment 10

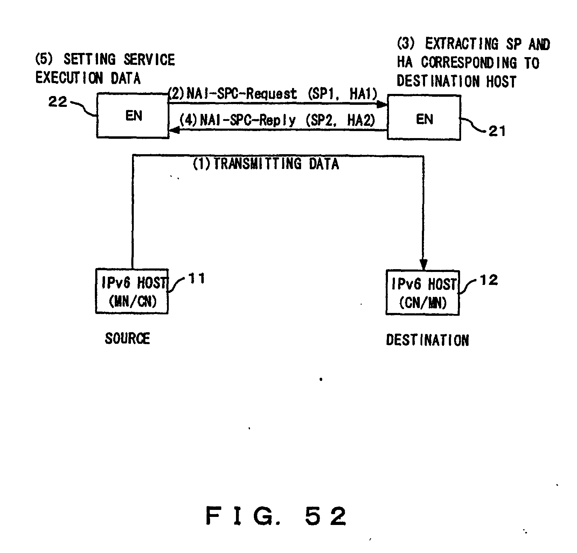

Embodiment 10 is based on the network configuration shown in any of FIGS. 1 through 4. The IPv6 host 11 and 12, and the edge nodes 21 and 22 are the same those according to the embodiment 8 or 9. When the transmission of a packet from the IPv6 host 11 to the IPv6 host 12 is started, the service profiles and the host address information are exchanged between the edge node 22 accommodating the source host (IPv6 host 11) and the edge node 21 accommodating the destination host (IPv6 host 12). The sequence of transferring the service profiles and the host address information about the IPv6 hosts between the edge nodes is described below by referring to FIG. 52. The sequence according to the embodiment 10 can be realized by combining the sequences according to the embodiments 8 and 9.
(1) A data packet is transmitted from the IPv6 host 11 to the IPv6 host 12.
(2) The edge node 22 relaying the data packet checks the address cache (ADC) of the service control data 308 in the same procedure as in (2) above according to the embodiment 8. In this example, it is assumed that the source address or the destination address has not been stored. In this case, the edge node 22 generates an NAI-SPC request message including the service profile and the host address information about the IPv6 host 11, a setting request, and an extraction request, and transmits the message to the destination address of the data packet. These processes are realized in steps S93, S94, S96, and S97 shown in FIG. 27, in the sequence shown in FIG. 28 or FIG. 29, in step S230 shown in FIG. 35, in the sequence shown in FIG. 36 or FIG. 37, and in step S212 shown in FIG. 34.
(3) Upon receipt of the NAI-SPC request message for the IPv6 host 12, the edge node 21 sets the service profile and the host address information about the IPv6 host 11 included in the received message in the service execution data 307. The edge node 21 extracts the service profile and the host address information about the IPv6 host 12 from the service specification data 306. These processes are realized in steps S143 through S150 shown in FIG. 31, and in steps S226 through S228 shown in FIG. 35.
(4) - (5) As described above in (4) and (5) according to the embodiment 8, the service profile and the host address information about the IPv6 host 12 are transferred from the edge node 21 to the edge node 22 using the NAI-SPC reply message, and they are set in the service execution data 307 of the edge node 22. At this time, the service profile and the host address information about the IPv6 host 11 held in the service specification data 306 are set in the service execution data 307 as necessary in the edge node 22.

In this sequence, the service profile and the host address information about the source host are transferred from the edge node accommodating the source host to the edge node accommodating the destination host, and the service profile and the host address information about the destination host are transferred from the edge node accommodating the destination host to the edge node accommodating the source host. Thus, each edge node can individually select the optimum service information from the service information about the IPv6 hosts being in communications.

### Embodiment 11

Embodiment 11 is based on the network configuration shown in FIG. 4. The mobile node 41 is accommodated in the edge node 22, and the correspondent node (CN) 42 is accommodated in the edge node 21. A service profile and host address information about the mobile node 41 is stored in home agent 43. The procedure of setting service profile and the host address information about the mobile node 41 in the home agent is described according to the embodiments 4 and 5.

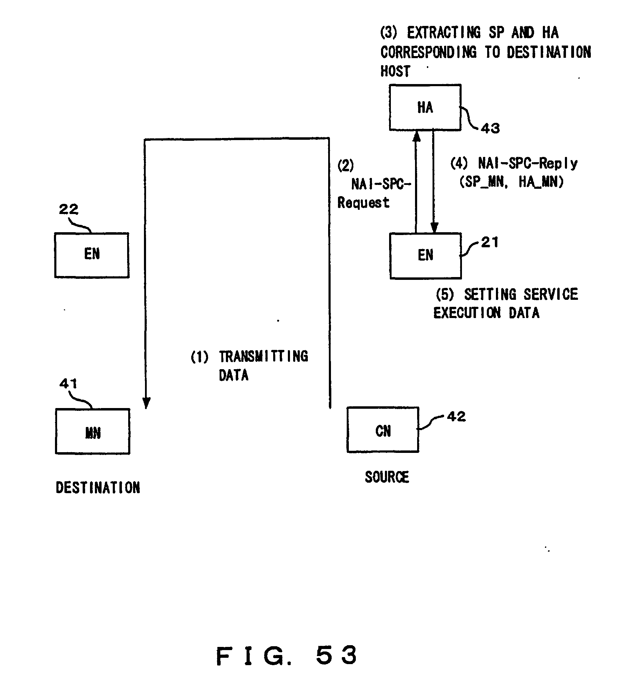

In the embodiment 11, the service profile and the host address information about the destination host are transferred from the home agent 43 managing the destination host (mobile node 41) to the edge node 21 accommodating the source host (correspondent node 42) when the packet transmission from the correspondent node 42 to the mobile node 41 is started in the above mentioned environment. The sequence of transferring the service profile and the host address information about the mobile node is described below by referring to FIG. 53.
(1) A data packet is transmitted from the correspondent node 42 to the mobile node 41.
(2) The edge node 21 relaying the data packet checks the address cache (ADC) of the service control data 308 as described in (2) above according to the embodiment 8. If the destination address has not been stored, then the NAI-SPC request message including an extraction request is transmitted to the destination address of the data packet. Since the destination address of the data packet is the mobile node 41, the NAI-SPC request message is temporarily transferred to the home agent 43 managing the mobile node 41.
(3) Upon receipt of the NAI-SPC request message, the home agent 43 extracts the service profile and the host address information about the mobile node 41 from the service specification data 204 in response to the extraction request included in the message. Practically, the service profile and the host address information corresponding to the destination address of the NAI-SPC request message is extracted. This process is realized in steps S61 through S63 shown in FIG. 20.
(4) The home agent 43 generates an NAI-SPC reply message including the service profile and the host address information about the mobile node 41 extracted in (3) above, and transmits the message to the edge node 21. This process is realized in steps S64 and S65 shown in FIG. 20.
(5) Upon receipt of the NAI-SPC reply message, the edge node 21 extracts the service profile and the host address information about the mobile node 41 from the message, and sets them in the service execution data 307. This process is realized in step S184 shown in FIG. 33, and in step S228 shown in FIG. 35.

In the sequence above, the edge node accommodating the source host can obtain the service profile and the host address information about the destination host from the home agent of the destination host. That is, the service profile and the host address information can be transferred through a shorter path depending on the relative locations between the source host and the destination host.

### Embodiment 12

Embodiment 12 is based on the network configuration shown in FIG. 4. A hierarchical mobile IPv6 is applied to the network, and the mobility anchor point (MAP) 45 is provided in the foreign domain to which the mobile node 41 moves. The mobile node 41, the correspondent node 42, the edge nodes 21 and 22 are the same as those according to the embodiment 11.

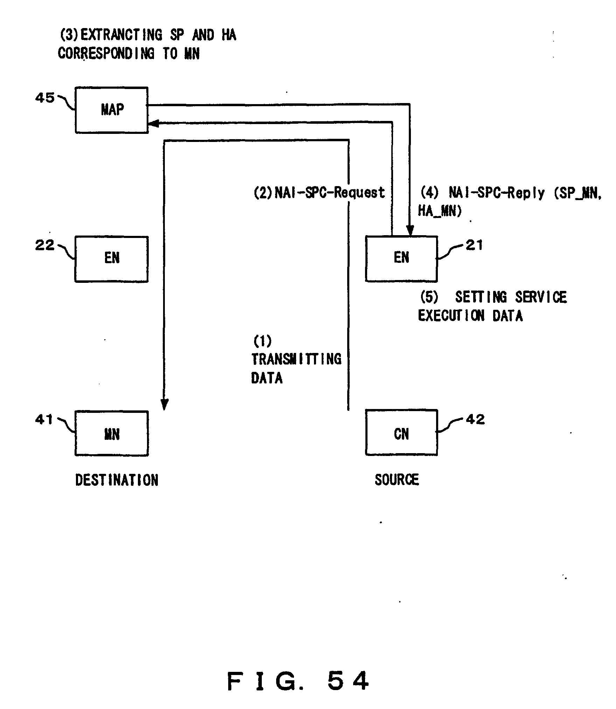

In the embodiment 12, the service profile and the host address information about the destination host are transferred from the mobility anchor point 45 managing the destination host (mobile node 41) to the edge node 21 accommodating the source host (correspondent node 42) when the transmission of a packet from the correspondent node 42 to the mobile node 41 is started in the above mentioned environment. The sequence of transferring the service profile and the host address information about the mobile node is described below by referring to FIG. 54.
(1) A data packet is transmitted from the correspondent node 42 to the mobile node 41.
(2) - (5) Basically, the processes are the same as those according to (2) through (5) according to the embodiment 11. However, the edge node 21 specifies the RCOA of the mobile node 41 as the destination address of the NAI-SPC request message. Therefore, the NAI-SPC request message is transferred to the mobility anchor point 45 managing the mobile node 41. Upon receipt of the message, the mobility anchor point 45 transmits the service profile and the host address information about the mobile node 41 to the edge node 21.

In this sequence, the service profile and the host address information can be transferred through a shorter path depending on the relative positions between the source host and the destination host.

In the embodiments 8 through 12, the edge node accommodating the source terminal checks the address when data transfer is started between terminal devices. Depending on the checking result, a service profile is enabled, and the service profile and/or the host address information are transferred between edge nodes. However, the present invention is not limited to this application. That is, for example, when data transfer is started between terminal devices, the address is checked in the edge node accommodating the destination terminal, and similar processes are performed depending on the check result.

### Embodiment 13

In the service control network according to the embodiment, a service profile corresponding to the communication node accommodating the IPv6 host is delivered when an address is assigned to the IPv6 host as described above. Then, a communications service is provided according to the delivered service profile.

However, the delivered service profile is enabled when it is actually used. That is, the delivered service profile is enabled when the communications is started by an IPv6 host. Practically, upon receipt of a packet from the IPv6 host, an edge node first recognizes the service to be provided based on the source address and the destination address of the packet. Then, it checks whether or not the service has ever been provided. If the service has been provided, then the service is provided according to the service profile used before. If the service has never been provided before, a policy table is generated to provide the service by enabling the service profile.

Thus, if the edge node is requested to provide a service which has never been provided, then a service profile corresponding to the service is to be prepared and enabled. Each service is basically specified by the source address and the destination address of a packet. Therefore, whether or not a service has ever been provided can be recognized by checking whether or not a packet having the source address and the destination address of the service has ever been received.

Therefore, the edge node has the function of storing the source address and the destination address of a received packet in the address cache, the function of checking whether or not the source address and the destination address of a packet have been stored in the address cache when the packet is received from the IPv6 host, and the function of enabling the corresponding service profile if the addresses have not been stored.

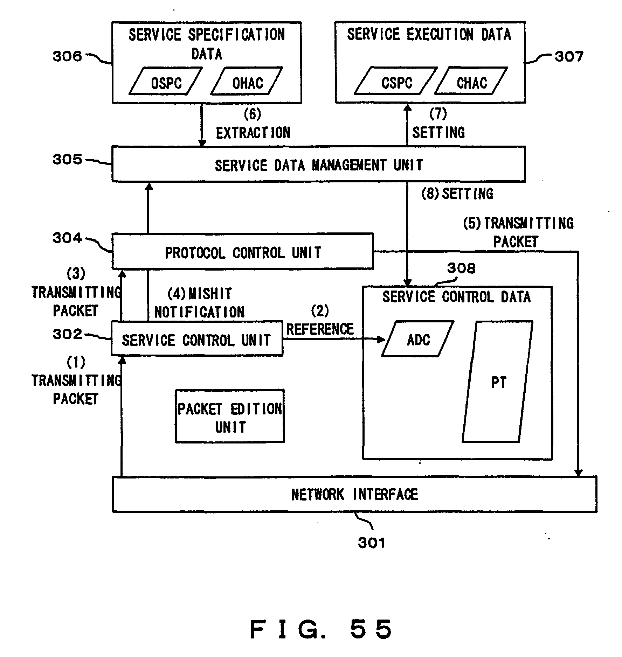

The embodiment 13 shows the sequence of enabling the service profile corresponding a packet when the source address of the received packet has not been stored in the address cache in the edge node with the above mentioned configuration. The address cache is configured such that a source address and a destination address are individually managed as shown in FIGS. 25A and 25B. The case in which the source address of a received packet is not stored in the address cache is hereinafter referred to as a "source cache miss". The enabling sequence according to the embodiment 13 is described below by referring to FIG. 55.
(1) The network interface 301 transfers a packet received from the network to the service control unit 302.
(2) The service control unit 302 checks whether or not the source address and the destination address of a received packet have been stored in the address cache (ADC) in the service control data 308. This process is realized in step S93 shown in FIG. 27, and by the sequence shown in FIG. 28.
(3) In (2) above, if at least one of the source address and the destination address has not been stored, then the service control unit 302 transmits the packet to the protocol control unit 304. This process is realized by step S96 shown in FIG. 27. In this embodiment, it is assumed that the source address is not stored in the address cache. That is, it is assumed that a source hit miss has been detected. In this case, this address is written into the address cache.
(4) The service control unit 302 sends a hit miss notification to the service data management unit 305. The hit miss notification includes the information that a source hit miss has been detected, and the corresponding IPv6 address. This process is realized in step S97 shown in FIG. 27, and in step S113 shown in FIG. 28.
(5) The protocol control unit 304 performs a general routing process on the packet received from the service control unit 302, and transmits it to the network interface 301. This process corresponds to step S203 shown in FIG. 33.
(6) Upon receipt of the hit miss notification, the service data management unit 305 extracts the host address information (HA) and the service profile about the source host of the packet from the service specification data 306. This process is realized in step S230 shown in FIG. 35, and in step S242 shown in FIG. 36.
(7) The service data management unit 305 sets the information extracted in (6) above in the service execution data 307. Then, the service execution state of the service profile, whose source host is an IPv6 host corresponding to the hit miss, and whose destination host is an IPv6 host communicating with an arbitrary IPv6 host belonging to this edge node, is set "valid" in the service profiles stored in the service execution data 307. This process is realized in step S243 in FIG. 36.
(8) The service data management unit 305 writes the service profile enabled in (7) above to the policy table in the service control data 308.

In this sequence, when a source hit miss is detected, the service profile corresponding to the hit miss is extracted from the service specification data 306, and the service profile is enabled, thereby generating a policy table. As a result, a service is thereafter provided according to the policy table.

### Embodiment 14

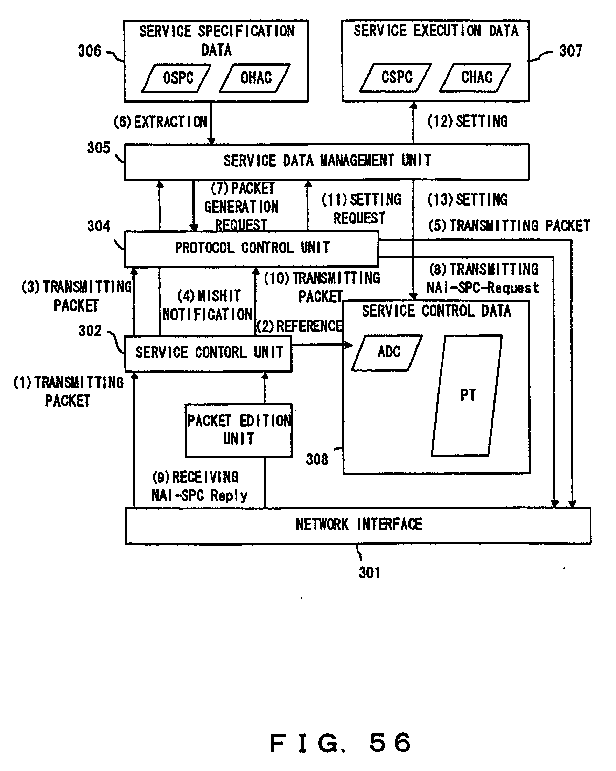

Embodiment 14 shows the sequence of enabling a service profile corresponding to a packet when the destination address of the received packet is not stored in the address cache. The address cache is assumed to be configured such that a source address and a destination address are individually managed. The case in which the destination address of a received packet is not stored in the address cache is referred to as a "destination cache miss". The enabling sequence in the embodiment 14 is described below by referring to FIG. 56.
(1) The network interface 301 transfers a packet received from the network to the service control unit 302.
(2) The service control unit 302 checks the address cache (ADC) in the service control data 308 as described in (2) according to the embodiment 13.
(3) In this example, it is assumed that the destination address has not been stored in the address cache. That is, it is assumed that a destination hit miss has been detected. In this case, the service control unit 302 transmits the packet to the protocol control unit 304 as described in (3) above according to the embodiment 14. The address is written to the address cache.
(4) The service control unit 302 sends a hit miss notification to the service data management unit 305. The hit miss notification includes the information that a destination hit miss has been detected, and the corresponding IPv6 address. This process is realized in step S97 shown in FIG. 27, and in step S116 shown in FIG. 28.
(5) The protocol control unit 304 transmits the packet to the network interface 301 as described in (5) according to the embodiment 13.
(6) Upon receipt of the hit miss notification, the service data management unit 305 extracts the host address information and/or the service profile corresponding to the source host of the packet from the service specification data 306 as necessary. The case in which those information are extracted refers to the case in which host address information and/or a service profile are transferred to the edge node accommodating the destination host as shown in FIG. 51 or 52. This process is realized in step S230 shown in FIG. 35.
(7) The service data management unit 305 transmits a request to generate a packet to the protocol control unit 304. This process is realized in step S246 shown in FIG. 36.
(8) The protocol control unit 304 generates a NAI-SPC request message in response to the request to generate a packet, and transmits the packet to the network interface 301. This message includes an extraction request to the edge node accommodating the destination host for the host address information and/or the service profile about the destination host. When the host address information and/or the service profile about the source host are extracted in (6) above, the message also includes the extracted information. This process is realized in step S212 shown in FIG. 34.
   When the NAI-SPC request message is transmitted, the edge node accommodating the destination host returns a corresponding NAI-SPC reply message by performing steps S144 through S146 shown in FIG. 31, and steps S226 and S227 shown in FIG. 35. The NAI-SPC reply message includes the host address information and/or the service profile about the destination host.
(9) Upon receipt of the NAI-SPC reply message, the network interface 301 transfers the message to the service control unit 302.
(10) When the service control unit 302 detects that the destination of the packet is this edge node, it transmits the packet to the protocol control unit 304. This process is realized in step S98 shown in FIG. 23.
(11) The protocol control unit 304 transmits a setting request to the service data management unit 305 according to the received NAI-SPC reply message. The setting request requests the information transmitted using the NAI-SPC reply message to be set in the service execution data 307. This process is realized in step S184 shown in FIG. 33.
(12) According to the setting request, the service data management unit 305 sets the host address information and/or the service profile about the destination host in the service execution data 307. Then, the service execution state of the service profile, whose source host is a communicating IPv6 host belonging to this edge node, and whose destination host is an IPv6 host corresponding to the hit miss, is set "valid" in the service profiles stored in the service execution data 307.
(13) The service data management unit 305 writes the service profile enabled in (12) above to the policy table in the service control data 308.

In this sequence, when a destination hit miss is detected, predetermined information is obtained from the edge node accommodating the destination host, and the corresponding service profile is enabled according to the information. Therefore, a service is thereafter provided according to the enabled service profile

### Embodiment 15

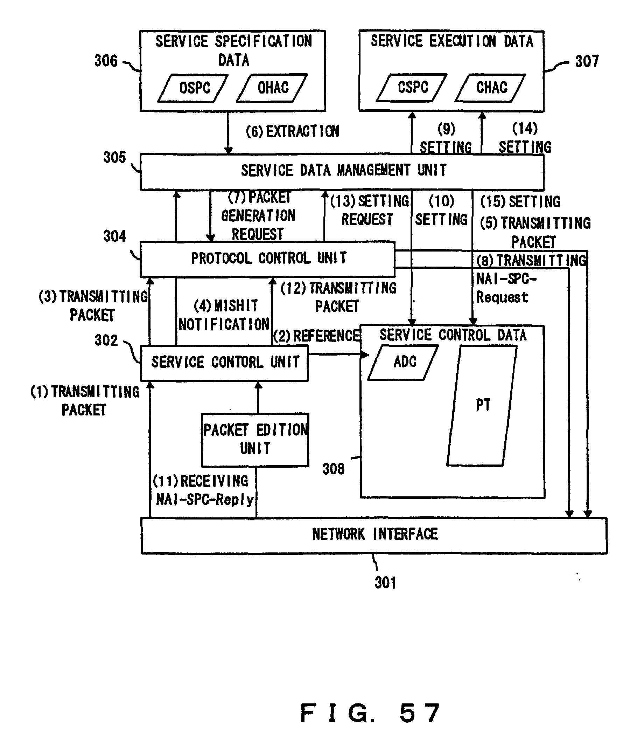

Embodiment 15 shows the sequence of enabling a corresponding service profile when both of the source address and the destination address of the received packet are not stored in the address cache. The address cache is assumed to be configured such that a source address and a destination address are individually managed. FIG. 57 shows the sequence according to the embodiment 15.

The sequence according to the embodiment 15 is basically realized by combining the processes according to the embodiments 13 and 14. Therefore, the detailed explanation of the embodiment 15 is omitted here. However, in the embodiment 15, the information indicating that both source hit miss and destination hit miss have occurred is stored in the hit miss notification transmitted from the service control unit 302 to the service data management unit 305.

### Embodiment 16

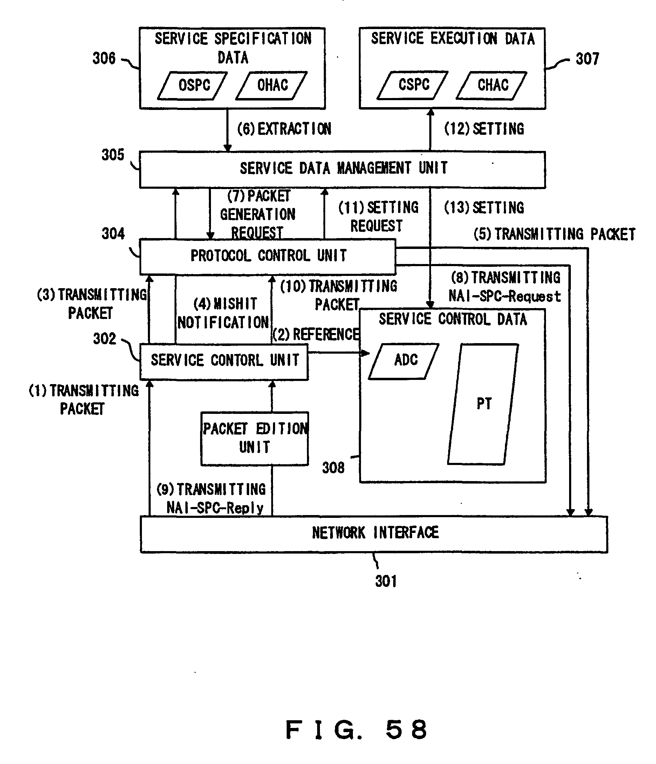

In the embodiment 16, an address cache has the configuration of managing the combination of a source address and a destination address as shown in FIG. 26A. If the combination of the source address and the destination address of a received packet is not stored in the address cache, then the service profile corresponding to the packet is enabled. The enabling sequence of the embodiment 16 is described below by referring to FIG. 58.

(1) - (2) As described in (1) and (2) according to the embodiment 13, the address cache (ADC) of the service control data 308 is checked. However, in this embodiment 16, it is checked whether or not the combination of the source address and the destination address of a received packet is stored in the address cache. In this example, it is assumed that no such combination is stored.

The subsequent processes are basically the same as those in (3) through (13) according to the embodiment 14. That is, this edge node transmits an NAI-SPC request message to the edge node accommodating the destination host, obtains the corresponding host address information and service profile by receiving a NAI-SPC reply message, and sets them in the service execution data 307 and the service control data 308.

### Embodiment 17

In the service control network according to the present embodiment, a predetermined lifetime is set for the IPv6 address assigned to each IPv6 host. If the lifetime of an IPv6 address expires, the service information corresponding to the address is nullified. That is, if the service information about an IPv6 host is set in an edge node, and if the lifetime of the IPv6 address expires, then the corresponding service information is deleted or nullified.

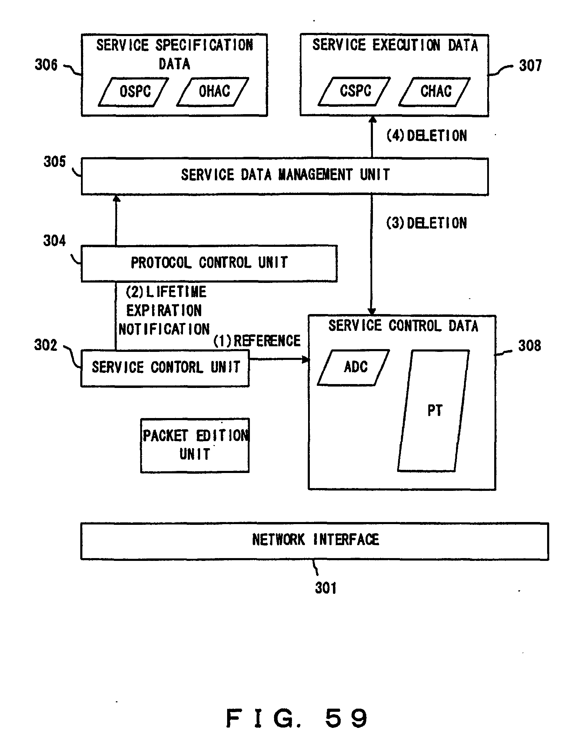

In the embodiment 17, when the lifetime of the IPv6 address managed as the source address of a service expires, the service information corresponding to the address is nullified. The address cache is assumed to be configured such that a source address and a destination address are individually managed. The nullifying sequence according to the embodiment 17 is described below by referring to FIG. 59.
(1) The service control unit 302 periodically decrements the lifetime (expiration period) of each all source host address and each destination host address stored in the address cache (ADC), and monitors whether there is an address whose lifetime has expired. This process is realized in step S99 shown in FIG. 27.
(2) In this embodiment, the lifetime of a source address has expired. That is, it is assumed that the source lifetime is over. In this case, the service control unit 302 sends a lifetime expiration notification to the service data management unit 305. This notification includes the information indicating that the source address lifetime is over, and the address whose lifetime has expired. This process is realized in step S101 shown in FIG. 27.
(3) The service data management unit 305 deletes all data corresponding the above mentioned address in the source address cache (SAC) and the policy table (PT) in the service control data 308. This process is realized in step S231 shown in FIG. 35, and in step S282 shown in FIG. 41.
(4) The service data management unit 305 deletes all data corresponding to the above mentioned address in the source service profile cache (SSPC) and the source host address cache (SHAC) in the service execution data 307. If there is data in the enabled state for the address in the destination service profile cache (DSPC), that data is nullified. This process is realized in steps S283 and S284 shown in FIG. 41.

In this sequence, when the lifetime of an IPv6 address expires, the corresponding service information is deleted/nullified. That is, the service information which has not been used longer than a predetermined period is deleted from the service execution data 307 and the service control data 308. Therefore, the memory area of the service execution data 307 and the service control data 308 can be efficiently used.

After this nullifying sequence is performed as a result of the expiration of the lifetime of an IPv6 address, a packet in which that IPv6 address is set is received, then an address hit miss occurs, and the above mentioned enabling process is performed, thereby starting providing the service again.

### Embodiment 18

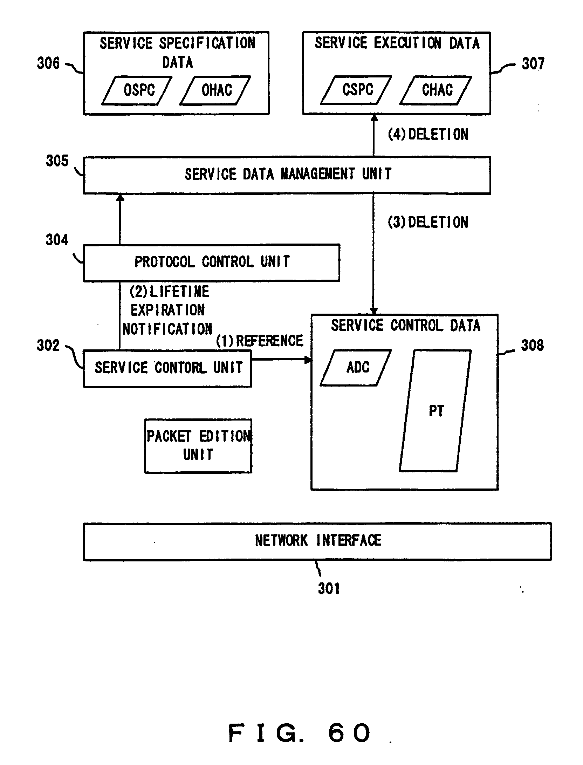

According to the embodiment 18, when the lifetime of an IPv6 address managed as the destination address of a service has expired, the service information corresponding to the address is nullified. The address cache is assumed to be configured such that a source address and a destination address are individually managed. The nullifying sequence according to the embodiment 18 is described below by referring to FIG. 60.
(1) The service control unit 302 decrements the lifetime of each address stored in the address cache, and monitors whether there is an address whose lifetime has expired as described in (1) according to the embodiment 17.
(2) In this embodiment, it is assumed that the lifetime of a destination address has expired. That is, the destination lifetime has been over. In this case, the service control unit 302 sends a lifetime expiration notification to the service data management unit 305. The notification includes the information that the lifetime of a destination address is over, and the address whose lifetime has expired. This process is realized in step S101 shown in FIG. 27.
(3) The service data management unit 305 deletes all data corresponding to the address in the destination address cache (DAC) and the policy table (PT) in the service control data 308. This process is realized in step S231 shown in FIG. 35, and in step S286 shown in FIG. 41.
(4) The service data management unit 305 deletes all data corresponding to the address in the source service profile cache (SSPC), the source host address cache (SHAC), the destination service profile cache (DSPC), and the destination host address cache (DHAC). This process is realized in steps S287 and S288 shown in FIG. 41.

### Embodiment 19

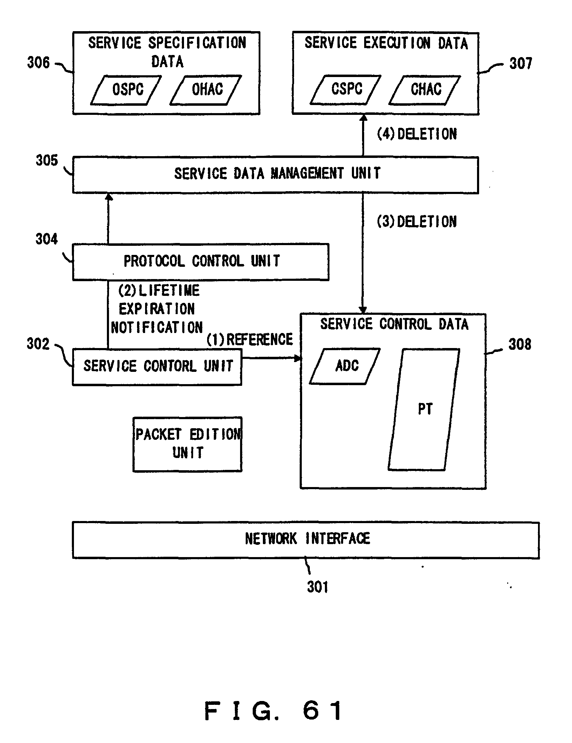

Embodiment 19 is based on the combination of a source address and a destination address to be managed in the address cache. When the lifetime set for a combination of a source address and a destination address has expired, the service information corresponding to the combination is nullified. The nullifying sequence according to the embodiment 19 is described below by referring to FIG. 61.
(1) The service control unit 302 periodically decrements the lifetime set for each combination of a source host address and a destination host address stored in the address cache, and monitors whether there is a combination whose lifetime has expired.
(2) In this embodiment, it is assumed that the lifetime of a combination has expired. That is, it is assumed that the lifetime is over. In this case, the service control unit 302 sends a lifetime expiration notification to the service data management unit 305. This notification includes the information that an lifetime time is over, and the source address and the destination address associated with the expiration of the lifetime.
(3) The service data management unit 305 deletes the data associated with the source address and the destination address in the address cache (ADC) and the policy table (PT) in the service control data 308. This process is realized in step S231 in FIG. 35, and in the process shown in FIG. 41.
(4) The service data management unit 305 deletes the corresponding information in the source service profile cache (SSPC), the source host address cache (SHAC), the destination service profile cache (DSPC), and the destination host address cache (DHAC) in the service execution data 307 unless the source host and the destination host relating to the lifetime expiration are not communicating with other IPv6 hosts. On the other hand, if the source host and the destination host relating to the lifetime expiration are communicating with other IPv6 hosts, the corresponding information is nullified. These processes are realized in the process shown in FIG. 42.

### Embodiment 20

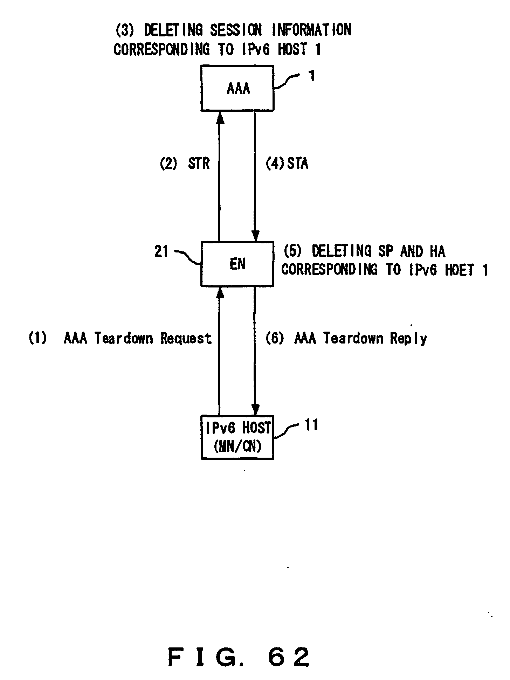

In the embodiments 17 through 19, the corresponding service information is nullified when the lifetime set for an IPv6 address expires. In the embodiment 20, the service information set for the edge node is nullified at a request from a terminal (an IPv6 host, a mobile node). Practically, when a session release request is transmitted from an IPv6 host, corresponding service information in the edge node is nullified/deleted. The sequence according to the embodiment 20 is described below by referring to FIG. 62.
(1) The IPv6 host 11 transmits an AAA-Teardown request message to the edge node 21 accommodating the IPv6 host 11. The IPv6 host 11 is, for example, assumed to transmit this message when communications terminate.
(2) The edge node 21 transmits an STR (deletion request) message to the AAA server 1 managing the session of the IPv6 host 11 which is the source of the AAA-Teardown request message. The process is realized in step S202 shown in FIG. 33.
(3) Upon receipt of the STR message, the AAA server 1 deletes the session information relating to the IPv6 host 11. This process is realized in step S12 shown in FIG. 14.
(4) The AAA server 1 transmits an STA (deletion reply) message to the edge node 21 which is the source of the STR message. This process is realized in step S13 shown in FIG. 14.
(5) Upon receipt of the STA message, the edge node 21 nullifies the service applied to the IPv6 host 11 whose session has been released, and deletes the host address information and the service profile corresponding to the IPv6 host 11. This process is realized in step S172 shown in FIG. 32, and in step S229 shown in FIG. 35.
(6) The edge node 21 transmits an AAA-Teardown reply message to the IPv6 host 11. This process is realized in step S176 shown in FIG. 32.

### Embodiment 21

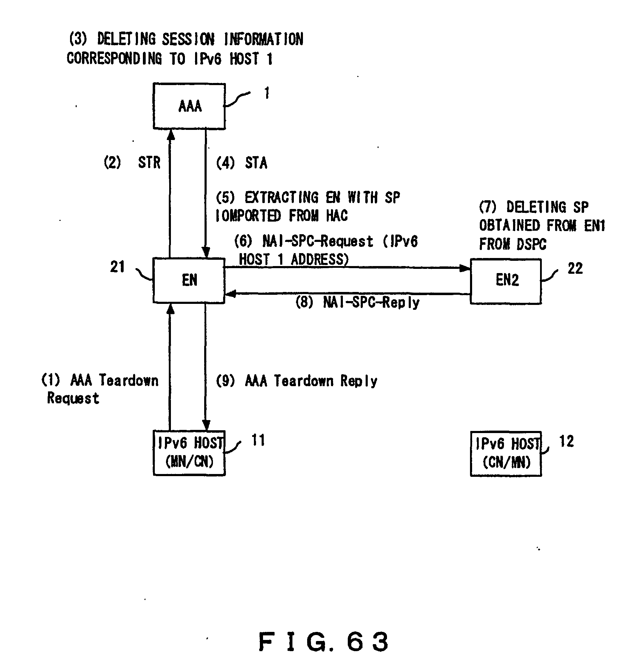

In the embodiment 21, as in the embodiment 20, the service information at an edge node accommodating a terminal is deleted/nullified at a request from the terminal. In addition, according to the embodiment 21, when the service information is delivered from the edge node to another communication node, the service information is similarly deleted/nullified also in that communication node. The sequence according to the embodiment 21 is described by referring to FIG. 63.

In this embodiment, the IPv6 host 11 is assumed to have communicated with the IPv6 host 12. Additionally, the IPv6 host 11 is accommodated in the edge node 21, and the IPv6 host 12 is accommodated in the edge node 22. It is assumed that service information about the IPv6 host 11 has been transferred from the edge node 21 to the edge node 22, when the communications between them were started.
(1) - (4) The processes are the same as those in (1) through (4) according to the embodiment 20.
(5) Upon receipt of the STA message, the edge node 21 deletes the host address information and the service profile corresponding to the IPv6 host 11 as in (5) according to the embodiment 20.
(6) The edge node 21 transmits an NAI-SPC request message to the IPv6 host 12 which has been the correspondent of the IPv6 host 11. The message includes the IPv6 address of the IPv6 host 11 and a deletion request. This process is realized in step S175 shown in FIG. 32.
(7) Upon receipt of the NAI-SPC request message to the IPv6 host 12, the edge node 22 nullifies the service relating to the IPv6 host 11. Furthermore, it deletes the host address information and the service profile received from the edge node 21 for the service relating to the communications with the IPv6 host 11 respectively from the destination host address cache (DHAC) and the destination service profile cache (DSPC). This process is realized in step S147 shown in FIG. 31, and in step S229 shown in FIG. 35.
(8) The edge node 22 transmits an NAI-SPC reply message including the IPv6 address of the IPv6 host 11 to the edge node 21. This process is realized in step S149 shown in FIG. 31.
(9) Upon receipt of the NAI-SPC reply message, the edge node 21 transmits an AAA-Teardown reply message to the IPv6 host 11. This process is realized in step S183 shown in FIG. 33.

In this embodiment, the edge node 22 receives the NAI-SPC request message by the edge node 21 transmitting the NAI-SPC request message to the IPv6 host 12 which has been the correspondent of the edge node 21. However, other methods can also be used. For example, the edge node can directly realize the destination of the NAI-SPC request message transmitted in (6) above if the destination address of the service information about the IPv6 host is stored in the "destination IPv6 address" of the original host address cache shown in FIG. 13B when the service information of the IPv6 host is delivered to another correspondent node.

According to the present invention, since the address request procedure is linked to the authentication protocol in the network in which the service information is delivered from the server device to the router device through the authentication protocol, the service information for all terminal devices to which an address is assigned can be delivered, and each terminal device can be provided with a corresponding service.

In a network in which an address is dynamically assigned to a terminal device, it is not necessary to deliver the service information again from the server device to the router device when the address of a correspondent node is changed. Therefore, the load on the network and each communications device can be reduced.

Since service information relating to the communications between terminals can be transmitted and received between a router device accommodating a source terminal and a router device accommodating a destination terminal, an appropriate service can be provided without accessing a server device.

## Claims

1. A service control network having a router device accommodating a terminal device and a server device for authenticating the terminal device, and providing a service for the terminal device, wherein:
said router device comprises:
request means for transmitting an authentication request to the server device when receiving an address request from the terminal device;
providing means for receiving an authentication reply corresponding to the authentication request and service information about the terminal device from the server device, and providing a service according to the service information; and
reply means for transmitting to the terminal device an address reply corresponding to the address request; and
said server device comprises
transmitting means for authenticating the terminal device at the authentication request, and transmitting to the router device an authentication reply corresponding to the authentication request and the service information about the terminal device.

2. A service control network having a router device accommodating a terminal device and a server device authenticating the terminal device, and providing a service for the terminal device, wherein
said router device comprises:
request means for transmitting an authentication request according to an AAA protocol to the server device when receiving an address request according to an ICMPv6 from the terminal device;
providing means for receiving an authentication reply corresponding to the authentication request and service information about the terminal device from the server device and providing a service according to the service information; and
reply means for transmitting an address reply corresponding to the address request to the terminal device; and
said server device comprises
transmitting means for authenticating the terminal device at the authentication request, and transmitting to the router device an authentication reply corresponding to the authentication request and the service information about the terminal device.

3. The service control network according to claim 2, wherein
when said terminal device transmits the address request from a foreign domain, said server device delivers the service information to a gateway device provided between a home domain of the terminal device and the foreign domain.

4. The service control network according to claim 2, wherein
said server device delivers the service information to a mobility anchor point specified by a hierarchical mobile IPv6.

5. A service information delivering method, for use in a service control network having a router device accommodating a terminal device and a server device authenticating the terminal device, of delivering service information specifying a service to be provided for the terminal device to the router device, comprising:
transmitting an address request according to an ICMPv6 from the terminal device to the router device;
transmitting an authentication request according to an AAA protocol from the router device to the server device;
authenticating the terminal device by the server device;
transmitting an authentication reply corresponding to the authentication request and service information about the terminal device from the server device to the router device; and
transmitting an address reply corresponding to the address request from the router device to the terminal device.

6. A router device for use in a service control network having a router device accommodating a terminal device and a server device authenticating the terminal device, comprising:
request means for transmitting an authentication request according to an AAA protocol to the server device when receiving an address request according to an ICMPv6 from the terminal device;
providing means for receiving an authentication reply corresponding to the authentication request and service information about the terminal device from the server device; and
reply means for transmitting an address reply corresponding to the address request to the terminal device.

7. A service control network having a first router device accommodating a first terminal device, a second router device accommodating a second terminal device, and a server device managing service information specifying a service to be provided for the first and second terminal devices, and providing the service for the first and second terminal devices, comprising:
first holding means, provided in the first router device, for receiving and holding the service information specifying the service to be provided for the first terminal device from the server device;
second holding means, provided in the second router device, for receiving and holding the service information specifying the service to be provided for the second terminal device from the server device;
transfer means for transferring corresponding service information between the first router device and the second router device when communications are started between the first terminal device and the second terminal device; and
providing means for providing a service using at least a part of the service information held by said first holding means, the service information held by said second holding means, and the service information transferred by said transfer means.

8. A service control network having a first router device accommodating a first terminal device, a second router device accommodating a second terminal device, and a server device managing service information specifying a service to be provided for the first and second terminal devices, and providing the service for the first and second terminal devices, comprising:
first service information holding means, provided in the first router device, for receiving and holding service information specifying a service to be provided for the first terminal device from the server device;
first address information holding means, provided in the first router device, for holding address information indicating correspondence between a network access identifier of the first terminal device and an address dynamically assigned to the first terminal device;
second service information holding means, provided in the second router device, for receiving and holding service information specifying a service to be provided for the second terminal device from the server device;
second address information holding means, provided in the second router device, for holding address information indicating correspondence between a network access identifier of the second terminal device and an address dynamically assigned to the second terminal device;
transfer means for transferring corresponding service information between the first router device and the second router device or transferring corresponding address information and service information between the first router device and the second router device, when communications are started between the first terminal device and the second terminal device; and
providing means for providing a service using at least a part of service information held by said first service information holding means, service information held by said second service information holding means, address information held by said first address information holding means, address information held by said second address information holding means, and information transferred by said transfer unit.

9. The service control network according to claim 8, wherein
the service information is managed using a network access identifier of a corresponding terminal device.

10. The service control network according to claim 9, wherein
when a packet is transmitted from the first terminal device to the second terminal device, network access identifiers corresponding to a source address and a destination address of the packet are detected using address information held by at least one of said first and second address information holding means, and a service is provided using service information corresponding to the detected network access identifier.

11. The service control network according to claim 9, wherein
when a packet is transmitted from the first terminal device to the second terminal device, the first router device detects a network access identifier corresponding to a source address of the packet, and enables service information corresponding to the detected network access identifier.

12. The service control network according to claim 9, wherein:
when a packet is transmitted from the first terminal device to the second terminal device, the first router device requests the second router device for address information and service information corresponding to a destination address of the packet; and
in response to the request, the second router device transmits address information and service information about the second terminal device to the first router device.

13. The service control network according to claim 9, wherein
said first service information holding means in the first router device holds service information about the second terminal device;
when a packet is transmitted from the first terminal device to the second terminal device, the first router device requests the second router device for address information corresponding to a destination address of the packet; and
in response to the request, the second router device transmits address information about the second terminal device to the first router device.

14. The service control network according to claim 9, wherein
said first service information holding means in the first router device holds the service information about the second terminal device;
when a packet is transmitted from the first terminal device to the second terminal device, the first router device requests the second router device for address information and service information corresponding to a destination address of the packet;
in response to the request, the second router device transmits address information and service information about the second terminal device to the first router device; and
said first router device merges the service information about the second terminal device held by said first service information holding means with the service information about the second terminal device transmitted from the second router device.

15. The service control network according to claim 9, wherein
when a packet is transmitted from the first terminal device to the second terminal device, the first router device transmits to the second router device address information and service information corresponding to a source address of the packet; and
the second router device provides a service using the received address information and service information.

16. The service control network according to claim 9, wherein
said second service information holding means in the second router device holds the service information about the first terminal device;
when a packet is transmitted from the first terminal device to the second terminal device, the first router device transmits to the second router device address information corresponding to a destination address of the packet; and
said second router device enables the service information corresponding to the received address information.

17. The service control network according to claim 9, wherein
said first router device comprises:
an address cache individually managing a source address and a destination address of the received packet; and
means for enabling corresponding service information when the source address or the destination address of the newly received packet is not stored in said address cache.

18. The service control network according to claim 9, wherein
said first router device comprises:
an address cache managing a combination of a source address and a destination address of the received packet;
means for enabling corresponding service information when a combination of a source address and a destination address of the newly received packet is not stored in said address cache.

19. The service control network according to claim 9, wherein
said first router device comprises:
an address cache individually managing lifetimes of a source address and a destination address of a received packet; and
means for deleting or nullifying corresponding address information and service information when the lifetime of the address managed by the address cache expires.

20. The service control network according to claim 9, wherein
said first router device comprises:
an address cache managing a combination of a source address and a destination address of a received packet; and
means for deleting or nullifying corresponding address information and service information when the lifetime of the combination of the addresses managed by the address cache expires.

21. The service control network according to claim 9, wherein
said first router device further comprises means for deleting or nullifying the address information and service information corresponding to the first terminal device in response to the request from the first terminal device.

22. The service control network according to claim 9, wherein
said first router device further comprises means for deleting or nullifying the address information and service information corresponding to the first terminal device set in the second router device in response to the request from the first terminal device.

23. A service providing method of providing a service for first and second terminal devices in a service control network having a first router device accommodating the first terminal device, a second router device accommodating the second terminal device, and a server device managing service information specifying a service to be provided for the first and second terminal devices, comprising:
delivering service information specifying a service to be provided for the first terminal device from the server device to the first router device;
generating address information indicating correspondence between a network access identifier of the first terminal device and an address dynamically assigned to the first terminal device at the first router device;
delivering service information specifying a service to be provided for the second terminal device from the server device to the second router device;
generating address information indicating correspondence between a network access identifier of the second terminal device and an address dynamically assigned to the second terminal device at the second router device;
transferring address information between the first router device and the second router device or transferring the address information and service information between the first router device and the second router device, when communications are started between the first terminal device and the second terminal device; and
providing a service using at least a part of service information delivered from the server device to the first router device, service information delivered from the server device to the second router device, address information generated by the first router device, address information generated by the second router device, and information transferred between the first router device and the second router device.

24. A router device used as a first router device in a service control network having the first router device accommodating a first terminal device, a second router device accommodating a second terminal device, and a server device managing service information specifying a service to be provided for the first and second terminal devices, comprising:
service information holding means for receiving service information specifying a service to be provided for the first terminal device from the server device, and holding the service information after associating the service information with a network access identifier of the first terminal device;
address information holding means for holding address information indicating correspondence between the network access identifier of the first terminal device and an address dynamically assigned to the first terminal device;
enabling means for detecting a network access identifier corresponding to a source address of a packet from the address information holding means when the packet is transmitted from the first terminal device to the second terminal device, extracting from the service information holding means service information corresponding to the detected network access identifier, and enabling the extracted service information; and
providing means for providing a service according to the enabled service information.

25. A router device used as a first router device in a service control network having the first router device accommodating a first terminal device, a second router device accommodating a second terminal device, and a server device managing service information specifying a service to be provided for the first and second terminal devices, comprising:
service information holding means for holding service information specifying a service to be provided for the first terminal device having an association with a network access identifier of the first terminal device and service information specifying a service to be provided for the second terminal device having an association with a network access identifier of the second terminal device;
enabling means for receiving from the second router device a network access identifier corresponding to a destination address of a packet when the packet is transmitted from the first terminal device to the second terminal device, extracting service information corresponding to the received network access identifier from the service information holding means and enabling the extracted service information; and
providing means for providing a service according to the enabled service information.

26. A router device used as a first router device in a service control network having a first router device accommodating the first terminal device, a second router device accommodating a second terminal device, and a server device managing service information specifying a service to be provided for the first and second terminal devices, comprising:
service information holding means for receiving and holding service information specifying a service to be provided for the first terminal device from the server device; and
transmitting means for extracting the service information from said service information holding means when a packet is transmitted from the first terminal device to the second terminal device, and transmitting the extracted service information to the second router device to be used by the second router device.

27. A service control network having a router device accommodating a mobile IPv6 terminal, a server device authenticating an address of the mobile IPv6 terminal, and a mobility anchor point recording the address of the mobile IPv6 terminal in a foreign domain of the mobile IPv6 terminal, and providing a service for the mobile IPv6 terminal, wherein:
said server device comprises delivering means for delivering to the mobility anchor point service information specifying a service to be provided for the mobile IPv6 terminal when said server device authenticates an address of the mobile IPv6 terminal;
said router device comprises:
request means for requesting the mobility anchor point for the service information when a packet is transmitted from the mobile IPv6 terminal; and
providing means for providing a service according to the received service information; and
said mobility anchor point comprises transmitting means for transmitting the service information to the router device at the request of the router device.

28. A service control network having a router device accommodating a mobile IPv6 terminal, a server device authenticating an address of the mobile IPv6 terminal, and a mobility anchor point recording the address of the mobile IPv6 terminal in a foreign domain of the mobile IPv6 terminal, and providing a service for the mobile IPv6 terminal, wherein:
said mobility anchor point comprises:
first request means for requesting the server device for service information specifying a service to be provided for the mobile IPv6 terminal when an address of the mobile IPv6 terminal is recorded; and
transmitting means for transmitting to the router device in response to the request from the router device the service information received from the server device;
said server device comprises delivery means for delivering the service information to the mobility anchor point in response to the request from the mobility anchor point; and
said router device comprises:
second request means for requesting the mobility anchor point for the service information when a packet is transmitted from the mobile Ipv6 terminal; and
providing means for providing a service according to the service information received from the mobility anchor point.

29. A service control network having a router device accommodating a mobile IPv6 terminal, a server device authenticating an address of the mobile IPv6 terminal, and a mobility anchor point recording the address of the mobile IPv6 terminal in a foreign domain of the mobile IPv6 terminal, and providing a service for the mobile IPv6 terminal, wherein:
said router device comprises:
holding means for receiving and holding service information specifying a service to be provided for the mobile IPv6 terminal from the server device; and
transmitting means for transmitting the service information to the mobility anchor point when an address of the mobile IPv6 terminal is recorded.

30. A service control network having a router device accommodating a mobile IPv6 terminal, a server device authenticating an address of the mobile IPv6 terminal, and a home agent recording an address of the mobile IPv6 terminal, and providing a service for the mobile IPv6 terminal, wherein:
said server device comprises delivery means for delivering service information specifying a service to be provided for the mobile IPv6 terminal when said server device authenticates an address of the mobile IPv6 terminal;
said router device comprises:
request means for requesting the home agent for the service information when a packet is transmitted from the mobile IPv6 terminal; and
providing means for providing a service according to the received service information; and
said home agent comprises transmitting means for transmitting the service information to the router device in response to the request from the router device.

31. A service control network having a router device accommodating a terminal device and a server device authenticating the terminal device, and providing a service for the terminal device, wherein:
said server device comprises:
storing means for storing service information in which a part of at least one of a source address and a destination address of a service to be provided is specified using a wild card; and
delivery means for delivering corresponding service information in response to the request from the router device; and
said router device comprises providing means for providing a service according to the delivered service information.
